**Europäisches Patentamt**

**European Patent Office**

**Office européen des brevets**

(19)

(11) **EP 1 522 918 A2**

(12) **EUROPEAN PATENT APPLICATION**

| | |
|---|---|
| (43) Date of publication:<br>**13.04.2005 Bulletin 2005/15** | (51) Int Cl.7: **G06F 9/44** |

(21) Application number: **04001994.5**

(22) Date of filing: **29.01.2004**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | • **Toledano, Eyal**<br>**Yeongtong-gu Suwon-si Gyeonggi-do (KR)**<br>• **Linder, Natan**<br>**Yeongtong-gu Suwon-si Gyeonggi-do (KR)**<br>• **Eisenberg, Yariv**<br>**Yeongtong-gu Suwon-si Gyeonggi-do (KR)**<br>• **Ben-Yair, Ran**<br>**Yeongtong-gu Suwon-si Gyeonggi-do (KR)** |
| (30) Priority: **05.09.2003  US 500669 P**<br>**23.12.2003  US 743476** | |
| (71) Applicant: **Samsung Electronics Co., Ltd.**<br>**Suwon-si, Gyeonggi-do (KR)** | (74) Representative: **Grünecker, Kinkeldey,**<br>**Stockmair & Schwanhäusser Anwaltssozietät**<br>**Maximilianstrasse 58**<br>**80538 München (DE)** |
| (72) Inventors:<br>• **Lee, Jong-Goo**<br>**Yeongtong-gu Suwon-si Gyeonggi-do (KR)** | |

(54) **Proactive user interface**

(57)  A proactive user interface, which could optionally be installed in (or otherwise control and/or be associated with) any type of computational device. The proactive user interface actively makes suggestions to the user, based upon prior experience with a particular user and/or various preprogrammed patterns from which the computational device could select, depending upon user behavior. These suggestions could optionally be made by altering the appearance of at least a portion of the display, for example by changing a menu or a portion thereof; providing different menus for display; and/ or altering touch screen functionality. The suggestions could also optionally be made audibly.

100

FIG.1

EP 1 522 918 A2

## Description

FIELD OF THE INVENTION

The present invention is of a proactive user interface, and systems and methods thereof, particularly for use with mobile information devices.

BACKGROUND OF THE INVENTION

The use of mobile and portable wireless devices has expanded dramatically in recent years. Many such devices having varying functions, internal resources, and capabilities now exist, including, but not limited to mobile telephones, personal digital assistants, medical and laboratory instrumentation, smart cards, and set-top boxes. All such devices are mobile information devices. They tend to be special purpose, limited-function devices, rather than the general-purpose computing. machines that have been previously known. Many of these devices are connected to the Internet, and are used for a variety of applications.

One example of such mobile information devices is the cellular telephone. Cellular telephones are fast becoming ubiquitous; use of cellular telephones is even surpassing that of traditional PSTN (public switched telephony network) telephones or "land line" telephones. Cellular telephones themselves are becoming more sophisticated, and in fact are actually computational devices with embedded operating systems.

As cellular telephones become more sophisticated, the range of functions that they offer is also potentially becoming more extensive. However, currently these functions are typically related to extensions of functions already present in regular (land line) telephones, and/or the merging of certain functions of PDA's with those of cellular telephones. The user interface provided with cellular telephones is similarly non-sophisticated, typically featuring a keypad for scrolling through a few simple menus. Customization, although clearly desired by customers who have spent significant sums on personalized ring tones and other cellular telephone accessories, is still limited to a very few functions of the cellular telephone. Furthermore, cellular telephones currently lack automatic personalization, for example of the device user interface and custom/tailored functionalities that are required for better use of the mobile information device, and/or the ability to react according to the behavior of the user.

This lack of sophistication, however, is also seen with user interfaces for personal (desk top or laptop) computers and other computational devices. These computational devices can only usually be customized in very simple ways. Also, such customization must be performed by the user, who may not understand computer functions and/or may not feel comfortable performing such customization tasks. Currently, computational devices cannot learn patterns of user behavior and adjust their own behavior accordingly, as adaptive systems for the user interface. If the user cannot manually adjust the computer, then the user must adjust his/her behavior to accommodate the computer, rather than vice versa.

Software which is capable of learning has been developed, albeit only for specialized laboratory functions. For example, "artificial intelligence" (AI) software has been developed. The term "AI" has been given a number of definitions, one of which is: "AI is the study of the computations that make it possible to perceive, reason, and act." (quoted in Artificial Intelligence A Modem Approach (second edition) by Stuart Russell , Peter Norvig (Prentice Hall, Pearson Education Inc, 2003). AI software combines several different concepts, such as perception, which provides an interface to the world in which the AI software is required to reason and act. Examples include but are not limited to, natural language processing -communicating, understanding document content and context of natural language; computer vision - perceive objects from imagery source; and sensor systems - perception of objects and features of perceived objects analyzing sensory data, etc).

Another important concept is that of the knowledge base. Knowledge representation is responsible for representing extracting and storing the knowledge. This discipline also provides techniques to generalize knowledge, feature extraction and enumeration, object state construction and definitions. The implementation itself may be performed by commonly using known data structures, such as graphs, vectors, tables etc.

Yet another important concept is that of reasoning. Automated reasoning combines the algorithms that use the knowledge representation and perception to draw new conclusions, infer questions answers and achieve the agent goals. The following conceptual frameworks are examples of AI reasoning: rule bases - system rules are evaluated against the knowledge base and perceived state for reasoning; search systems - the use of well known data structures for searching for an intelligent conclusion according to the perceived state, the available knowledge and goal (examples include decision trees, state graphs, minimax decision etc); classifiers - the target of the classifier reasoning system is to classify a perceived state represented as an experiment that has no classification tag. According to a pre-classified knowledge base the classifier will infer the classification of the new experiment (examples include vector distance heuristics, Support Vector Machine, Classifier Neural Network etc).

Another important concept is for learning. The target of learning is improving the potential performance of the AI reasoning system by generalization over experiences. The input of a learning algorithm will be the experiment and the output would be modifications of the knowledge base according to the results (examples include Reinforcement learning, Batch learning, Support Vector Machine etc).

Some non-limiting examples of AI software implementation include (all of the below examples can be found in "An Artificial Intelligence: A Modem Approach", S. Russell and P. Norvig (eds), Prentice Hall, Pearson Education Inc., NJ, USA, 2003):

**Autonomous planning and scheduling:** NASA's Remote Agent program became the first on-board autonomous planning program to control the scheduling of operations for a spacecraft. Remote Agent generated plans from high-level goals specified from the ground, and it monitored the operation of the spacecraft as the plans were executed detecting, diagnosing, and recovering from problems as they occurred.

**Game playing:** IBM's Deep Blue became the first computer program to defeat the world champion.

**Autonomous control:** The ALVINN computer vision system was trained to steer a car to keep it following a lane. ALVINN computes the best direction to steer, based on experience from previous training runs.

**Diagnosis:** Medical diagnosis programs based on probabilistic analysis have been able to perform at the level of an expert physician in several areas of medicine.

**Logistics Planning:** During the Persian Gulf crisis of 1991, U.S forces deployed a Dynamic Analysis and Replanning Tool called DART, to do automated logistics planning and scheduling for transportation.

**Robotics:** Many Surgeons new use robot assistant in microsurgery. HipNav is a system that uses computer vision techniques to create a tree-dimensional model of the patient's internal anatomy and then uses robotic control to guide the insertion of a hip replacement prosthesis.

**Language Understanding and problem solving:** PROVERB is a computer program that solves crossword puzzles better than humans, using constraints in possible word fillers, a large database if past puzzles and a variety of information sources.

Work has also been done for genetic algorithms and evolution algorithms for software. One example of such software is described in "Evolving Virtual Creatures", by Karl Sims (*Computer Graphics,* SIGGRAPH '94 Proceedings, July 1994, pp. 15-22). This reference described software "creatures" which could move through a three-dimensional virtual world, which is a simulated version of the actual physical world. The creatures could learn and evolve by using genetic algorithms, thereby changing their behaviors without directed external input. These genetic algorithms therefore delineated a hyperspace of potential behaviors having different "fitness" or rewards in the virtual world. The algorithms themselves were implemented by using directed graphs, which describe both the genotypes (components) of the creatures, and their behavior.

At the start of the simulation, many different creatures with different genotypes are simulated. The creatures are allowed to alter their behavior in response to different stimuli in the virtual world. At each "generation", only certain creatures are allowed to survive, either according to a relative or absolute cut-off score, with the score being determined according to the fitness of the behavior of the creatures. Mutations are permitted to occur, which may increase the fitness (and hence survivability) of the mutated creatures, or vice versa. Mutations are also performed through the directed graph, for example by randomly changing a value associated with a node, and/or adding or deleting nodes. Similarly, "mating" between creatures may result in changes to the directed graph.

The results described in the reference showed that in fact virtual creatures could change and evolve. However, the creatures could only operate within their virtual world, and had no point of reference or contact with the actual physical world, and/or with human computer operators.

SUMMARY OF THE PRESENT INVENTION

The background art does not teach or suggest a system or method for enabling intelligent software at least for mobile information devices to learn and evolve specifically for interacting with human users. The background art also does not teach or suggest a proactive user interface for a computational device, in which the proactive user interface learns the behavior of the user and is then able to actively suggest options to the user. The background art also does not teach or suggest an adaptive system for a mobile information device, in which the user interface is actively altered according to the behavior of the user. The background art also does not teach or suggest an intelligent agent for a mobile information device, which is capable of interacting with a human user through an avatar.

The present invention overcomes these deficiencies of the background art by providing a proactive user interface, which could optionally be installed in (or otherwise control and/or be associated with) any type of computational device. The proactive user interface would actively make suggestions to the user, and/or otherwise engage in non-deterministic or unexpected behavior, based upon prior experience with a particular user and/or various preprogrammed patterns from which the computational device could select, depending upon user behavior. These suggestions could optionally be made by altering the appearance of at least a portion of the display, for example by changing a menu or a portion thereof; providing different menus for display; and/or altering touch screen functionality. The suggestions could also optionally be made audibly. Other types of suggestions or delivery mechanisms are possible.

By "suggestion" it should be noted that the system may actually optionally execute the action automatically, given certain user preferences and also depending upon whether the system state allows the specific execution of the action.

Generally, it is important to emphasize that the proactive user interface preferably at least appears to be intelligent and interactive, and is preferably capable of at least somewhat "free" (e.g. non-scripted or partially scripted) communication with the user. An intelligent appearance is important in the sense that the expectations of the user are preferably fulfilled for interactions with an "intelligent" agent/device. These expectations may optionally be shaped by such factors as the ability to communicate, the optional appearance of the interface, the use of anthropomorphic attribute(s) and so forth, which are preferably used to increase the sense of intelligence in the interactions between the user and the proactive user interface. In terms of communication received from the user, the proactive user interface is preferably able to sense how the user wants to interact with the mobile information device. Optionally, communication may be in only one direction; for example, the interface may optionally present messages or information to the user, but not receive information from the user, or alternatively the opposite may be implemented. Preferably, communication is bi-directional for preferred interactions with the user.

For communication to the user, optionally and preferably the proactive interface is capable of displaying or demonstrating simulated emotions for interactions with the user, as part of communication with the user. As described in greater detail below, these emotions are preferably simulated for presentation by an intelligent agent, more preferably represented by an avatar or creature. The emotions are preferably created through an emotional system, which may optionally be at least partially controlled according to at least one user preference. The emotional system is preferably used in order for the reactions and communications of the intelligent agent to be believable in terms of the perception of the user; for example, if the intelligent agent is presented as a dog-like creature, the emotional system preferably enables the emotions to be consistent with the expectations of the user with regard to "dog-like" behavior.

Similarly, the intelligent agent preferably at least appears to be intelligent to the user. The intelligence may optionally be provided through a completely deterministic mechanism; however, preferably the basis for at least the appearance of intelligence includes at least one or more random or semi-random elements. Again, such elements are preferably present in order to be consistent with the expectations of the user concerning intelligence with regard to the representation of the intelligent agent.

Adaptiveness is preferably present, in order for the intelligent agent to be able to alter behavior at least somewhat for satisfying the request or other communication of the user. Even if the proactive user interface optionally does not include an intelligent agent for communicating with the user, adaptiveness preferably enables the interface to be proactive. Observation of the interaction of the user with the mobile information device preferably enables such adaptiveness to be performed, although the reaction of the proactive user interface to such observation may optionally and preferably be guided by a knowledge base and/or a rule base.

As a specific, non-limiting but preferred example of such adaptiveness, particularly for a mobile information device which includes a plurality of menus, such adaptiveness may preferably include the ability to alter at least one aspect of the menu. For example, one or more shortcuts may optionally be provided, enabling the user to directly reach a menu choice while by-passing at least one (and more preferably all) of the previous menus or sub-menus which are higher in the menu hierarchy than the final choice. Optionally (alternatively or additionally), one or more menus may be rearranged according to adaptiveness of the proactive user interface, for example according to frequency of use. Such a rearrangement may optionally include moving a part of a menu, such as a menu choice and/or a sub-menu, to a new location that is higher in the menu hierarchy than the current location. Sub-menus which are higher in a menu hierarchy are reached more quickly, through the selection of fewer menu choices, than those which are located in a lower (further down) location in the hierarchy.

Adaptiveness and/or emotions are optionally and preferably assisted through the use of rewards for learning by the proactive user interface. Suggestions or actions of which the user approves preferably provide a reward, or a positive incentive, to the proactive interface to continue with such suggestions or actions; disapproval by the user preferably causes a disincentive to the proactive user interface to continue such behavior(s). Providing positive or negative incentives/disincentives to the proactive user interface preferably enables the behavior of the interface to be more nuanced, rather than a more "black or white" approach, in which a behavior would either be permitted or forbidden. Such nuances are also preferred to enable opposing or contradictory behaviors to be handled, when such behaviors are collectively approved/disapproved by the user to at least some extent.

Another optional but preferred function of the proactive user interface includes teaching the user. Such teaching may optionally be performed in order to inform the user about the capabilities of the mobile user device. For example, if the user fails to operate the device correctly, by entering an incorrect choice for example, then the teaching function preferably assists the user to learn how to use the device correctly. However, more preferably the teaching function is capable of providing instruction to the user about at least one non-device related subject. According to a preferred embodiment of the teaching function, instruction may optionally and preferably be provided about a plurality of subjects (or at least by changing the non-device related subject), more preferably through a flexible application framework.

According to an optional but preferred embodiment of the present invention, a model of the user is preferably constructed through the interaction of the proactive user interface with the user. Such a model would optionally and preferably integrate AI knowledge bases determined from the behavior of the user and/or preprogrammed. Furthermore, the model would also optionally enable the proactive user interface to gauge the reaction of the user to particular suggestions made by the user interface, thereby adapting to the implicit preferences of the user.

Non-limiting examples of such computational devices include ATM's (this also has security implications, as certain patterns of user behavior could set off an alarm, for example), regular computers of any type (such as desktop, laptop, thin clients, wearable computers and so forth), mobile information devices such as cellular telephones, pager devices, other wireless communication devices, regular telephones having an operating system, PDA's and wireless PDA's, and consumer appliances having an operating system. Hereinafter, the term "computational device" includes any electronic device having an operating system and being capable of performing computations. The operating system may optionally be an embedded system and/or another type of software and/or hardware run time environment. Hereinafter, the term "mobile information device" includes but is not limited to, any type of wireless communication device, including but not limited to, cellular telephones, wireless pagers, wireless PDA's and the like.

The present invention is preferably implemented in order to provide an enhanced user experience and interaction with the computational device, as well as to change the current generic, non-flexible user interface of such devices into a flexible, truly user friendly interface. More preferably, the present invention is implemented to provide an enhanced emotional experience of the user with the computational device, for example according to the optional but preferred embodiment of constructing the user interface in the form of an avatar which would interact with the user. The present invention is therefore capable of providing a "living device" experience, particularly for mobile information devices such as cellular telephones for example. According to this embodiment, the user may even form an emotional attachment to the "living device".

According to another embodiment of the present invention, there is provided a mobile information device which includes an adaptive system. Like the user interface above, it also relies upon prior experience with a user and/ or preprogrammed patterns. However, the adaptive system is optionally and preferably more restricted to operating within the functions and environment of a mobile information device.

Either or both of the mobile information device adaptive system and proactive user interfaces may optionally and preferably be implemented with genetic algorithms, artificial intelligence (AI) algorithms, machine learning (ML) algorithms, learned behavior, and software/computational devices which are capable of evolution. Either or both may also optionally provide an advanced level of voice commands, touch screen commands, and keyboard 'short-cuts'.

According to another optional but preferred embodiment of the present invention, there is provided one or more intelligent agents for use with a mobile information device over a mobile information device network, preferably including an avatar (or "creature"; hereinafter these terms are used interchangeably) through which the agent may communicate with the human user. The avatar therefore preferably provides a user interface for interacting with the user. The intelligent agent preferably also includes an agent for controlling at least one interaction of the mobile information device over the network. This embodiment may optionally include a plurality of such intelligent agents being connected over the mobile information device network, thereby optionally forming a network of such agents. Various applications may also optionally be provided through this embodiment, including but not limited to teaching in general and/or for learning how to use the mobile information device in particular, teaching languages, communication applications, community applications, games, entertainment, shopping (getting coupons etc), locating a shop or another place, filtering advertisements and other non-solicited messages, role-playing or other interactive games over the cell phone network, "chat" and meeting functions, the ability to buy "presents" for the intelligent agents and otherwise accessorize the character, and so forth. In theory, the agents themselves could be given "pets" as accessories.

The intelligent agents could also optionally assist in providing various business/promotional opportunities for the cell phone operators. The agents could also optionally and preferably assist with installing and operating software on cell phones, which is a new area of commerce. For example, the agents could optionally assist with the determination of the proper type of mobile information device and other details that are essential for correctly downloading and operating software.

The intelligent agent could also optionally and preferably educate the user by teaching the user how to operate various functions on the mobile information device itself, for example how to send or receive messages, use the alarm, and so forth. As described in greater detail below, such teaching functions could also optionally be extended to teach the user about information/functions external to the mobile information device itself. Preferably, such teaching functions are enhanced by communication between a plurality of agents in a network, thereby enabling the agents to obtain information distributed between agents on the network.

Optionally and preferably, payment for the agents could be performed by subscription, but alternatively the agents could optionally be "fed" through actions that would be charged to the user's prepaid account and/or billed to the user at the end of the month.

Therefore, a number of different interactions are possible according to the various embodiments of the present invention. These interactions include any one or more of an interaction between the user of the device and an avatar or other character or personification of the device; an interaction between the user of the device and the device, for operating the device, through the avatar or other character or personification; interactions between two users through their respective devices, by communicating through the avatar, or other character or personification of the device; and interactions between two devices through their respective intelligent agents, optionally without any communication between users or even between the agent and the user. The interaction or interactions that are possible are determined according to the embodiment of the present invention, as described in greater detail below.

The present invention benefits from the relatively restricted environment of a computational device and/or a mobile information device, such as a cellular telephone for example, because the parameters of such an environment are known in advance. Even if such devices are communicating through a network, such as a cellular telephone network for example, the parameters of the environment can still be predetermined. Currently, computational devices only provide a generic interface, with little or no customization permitted by even manual, direct intervention by the user.

It should be noted that the term "software" may also optionally include firmware or instructions operated by hardware.

BRIEF DESCRIPTION OF THE DRAWINGS

The invention is herein described, by way of example only, with reference to the accompanying drawings, wherein:

FIG. 1 is a schematic block diagram of an exemplary learning module according to the present invention;
FIG. 2 is a schematic block diagram of an exemplary system according to the present invention for using the proactive user interface;
FIG. 3 shows an exemplary implementation of a proactive user interface system according to the present invention;
FIG. 4 shows a schematic block diagram of an exemplary implementation of the adaptive system according to the present invention;
FIGS. 5A and 5B show a schematic block diagram and a sequence diagram, respectively, of an exemplary application management system according to the present invention;
FIGS. 6A and 6B show exemplary infrastructure required for the adaptive system according to the present invention to perform one or more actions through the operating system of the mobile information device and an exemplary sequence diagram thereof according to the present invention;
FIGS. 7A-7C show exemplary events, and how they are handled by interactions between the mobile information device (through the operating system of the device) and the system of the present invention;
FIG. 8 describes an exemplary structure of the intelligent agent (Figure 8A) and also includes an exemplary sequence diagram for the operation of the intelligent agent (Figure 8B);
FIGS. 9A and 9B show two exemplary methods for selecting an action according to the present invention;
FIG. 10 shows a sequence diagram of an exemplary action execution method according to the present invention;
FIGS. 11A-11C feature diagrams for describing an exemplary, illustrative implementation of an emotional system according to the present invention;
FIG. 12 shows an exemplary sequence diagram for textual communication according to the present invention;
FIGS. 13A and 13B show an exemplary class diagram and an exemplary sequence diagram, respectively, for telephone call handling according to the present invention;
FIGS. 14A and 14B describe illustrative, non-limiting examples of the SMS message handling class and sequence diagrams, respectively, according to the present invention;
FIG. 15 provides an exemplary menu handling class diagram according to the present invention;
FIG. 16 shows an exemplary game class diagram according to the present invention;
FIGS. 17A shows an exemplary teaching machine class diagram and 17B shows an exemplary teaching machine sequence diagram according to the present invention;
FIGS. 18A-18C show an exemplary evolution class diagram, and an exemplary mutation and an exemplary hybrid sequence diagram, respectively, according to the present invention;
FIG. 19 shows an exemplary hybridization sequence between intelligent agents on two mobile information devices;
FIGS. 20-26 show exemplary screenshots of an avatar or creature according to the present invention;
FIG. 27 is a schematic block diagram of an exemplary intelligent agent system according to the present invention;
FIG. 28 shows the system of Figure 27 in more detail;
FIG. 29 shows a schematic block diagram of an exemplary implementation of an action selection system according to the present invention; and

FIGS. 30A-30B show some exemplary screenshots of the avatar according to the present invention on the screen of the mobile information device.

DESCRIPTION OF THE PREFERRED EMBODIMENTS

The present invention is of a proactive user interface, which could optionally be installed in (or otherwise control and/or be associated with) any type of computational device. The proactive user interface actively makes suggestions to the user, based upon prior experience with a particular user and/or various preprogrammed patterns from which the computational device could select, depending upon user behavior. These suggestions could optionally be made by altering the appearance of at least a portion of the display, for example by changing a menu or a portion thereof; providing different menus for display; and/or altering touch screen functionality. The suggestions could also optionally be made audibly.

The proactive user interface is preferably implemented for a computational device, as previously described, which includes an operating system. The interface optionally and preferably includes a user interface for communicating between the user and the operating system. The interface also preferably includes a learning module for detecting at least one pattern of interaction of the user with the user interface and for proactively altering at least one function of the user interface according to the detected pattern. Therefore, the proactive user interface can anticipate the requests of the user and thereby assist the user in selecting a desired function of the computational device.

Optionally and preferably, at least one pattern is selected from the group consisting of a pattern determined according to at least one previous interaction of the user with the user interface, and a predetermined pattern, or a combination thereof. The first type of pattern represents learned behavior, while the second type of pattern may optionally be preprogrammed or otherwise predetermined, particularly for assisting the user when a particular computational device is first being operated by the user. A third optional possible type of pattern would combine these two aspects, and would enable the pattern to be at least partially determined according to the user behavior, but not completely; for example, the pattern selection may optionally be guided according to a plurality of rules, and/or according to a restrictive definition of the possible world environment state and/or the state of the device and/or user interface (see below for a more detailed explanation).

The user interface preferably features a graphical display, such that at least one function of the graphical display is proactively altered according to the pattern. For example, at least a portion of the graphical display may optionally and preferably be altered, more preferably by selecting a menu for display according to the detected pattern; and displaying the menu. The menu may optionally be selected by constructing a menu from a plurality of menu options, for example in order to create a menu "on the fly".

The user interface may additionally or alternatively feature an audio display, such that altering at least one function of the user interface involves altering at least one audible sound produced by the computational device.

The proactive user interface could optionally and preferably be implemented according to a method of the present invention, which is preferably implemented for a proactive interaction between a user and a computational device through a user interface. The method preferably includes detecting a pattern of user behavior according to at least one interaction of the user with the user interface; and proactively altering at least one function of the user interface according to the pattern.

According to another embodiment of the present invention, there is provided a mobile information device which includes an adaptive system. Like the user interface above, it also relies upon prior experience with a user and/or preprogrammed patterns. However, the adaptive system is optionally and preferably more restricted to operating within the functions and environment of a mobile information device, such as a cellular telephone for example, which currently may also include certain basic functions from a PDA.

The adaptive system preferably operates with a mobile information device featuring an operating system. The operating system may optionally comprise an embedded system. The mobile information device may optionally comprise a cellular telephone.

The adaptive system is preferably able to analyze the user behavior by analyzing a plurality of user interactions with the mobile information device, after which more preferably the adaptive system compares the plurality of user interactions to at least one predetermined pattern, to see whether the predetermined pattern is associated with altering at least one function of the user interface. Alternatively or additionally, the analysis may optionally include comparing the plurality of user interactions to at least one pattern of previously detected user behavior, wherein the pattern of previously detected user behavior is associated with altering at least one function of the user interface.

The function of the user interface may optionally comprise producing an audible sound by the mobile information device, which is more preferably selected from the group consisting of at least one of a ring tone, an alarm tone and an incoming message tone. Alternatively or additionally, this may optionally be related to a visual display by the mobile information device. The visual display may optionally include displaying a menu for example.

The adaptive system may optionally, but not necessarily, be operated by the mobile information device itself. Alternatively, if the mobile information device is connected to a network, the adaptive system may optionally be operated at least partially according to commands sent from the network to the mobile information device. For this implementation, preferably data associated with at least one operation of the adaptive system is stored at a location other than the mobile information device, in which the location is accessible through the network.

According to preferred embodiments of the present invention, the adaptive system also includes a learning module for performing the analysis according to received input information and previously obtained knowledge. Such knowledge may optionally have been previously obtained from the behavior of the user, and/or may have been communicated from another adaptive system in communication with the adaptive system of the particular mobile information device. The adaptive system optionally and preferably adapts to user behavior according to any one or more of an AI algorithm, a machine learning algorithm, or a genetic algorithm.

According to another optional but preferred embodiment of the present invention, there is provided one or more intelligent agents for use with a mobile information device over a mobile information device network, preferably including an avatar through which the agent may communicate with the human user. The avatar therefore preferably provides a user interface for interacting with the user. The intelligent agent preferably also includes an agent for controlling at least one interaction of the mobile information device over the network. This embodiment may optionally include a plurality of such avatars being connected over the mobile information device network.

According to preferred embodiments of the present invention, both of the avatar and the agent are operated by the mobile information device. Alternatively or additionally, the mobile information device is in communication with at least one other mobile information device which has a second agent, such that the first and second agents are preferably capable of communicating with each other. Such communication may optionally be performed directly, for example through an infra-red communication directly between two mobile information devices, or alternatively or additionally through the mobile information device network. For example, if the network is a cellular telephone network, communication may optionally be performed by using standard communication protocols, IP/HTTP, SMS and so forth.

Furthermore, optionally and more preferably, the users of the respective mobile information devices are preferably able to communicate through their respective avatars. Such communication may optionally be related to a game, such as a role-playing game.

Similarly to the previously described adaptive system, one or both of the avatar and the agent may optionally be operated at least partially according to commands sent from the mobile information device network to the mobile information device. Also, optionally data associated with at least one operation of at least one of the avatar or the agent is stored at a location other than the mobile information device, said location being accessible through the mobile information device network.

According to preferred embodiments of the present invention, at least one characteristic of an appearance of the avatar is preferably alterable, for example optionally according to a user command. Optionally and more preferably, a plurality of characteristics of an appearance of avatar is alterable according to a predefined avatar skin. The skin is optionally predefined by the user. By "skin" it is meant that a plurality of the characteristics is altered together as a set, in which the set forms the skin. If this embodiment is combined with the previous embodiment of having at least a portion of the data related to the avatar being stored at a network-accessible location, then the user could optionally move the same avatar onto different phones, and/or customize the appearance of the avatar for different reasons, for example for special occasions such as a party or other celebration. Of course, these are only intended as examples and are not meant to be limiting in any way.

According to other optional but preferred embodiments of the present invention, at least one characteristic of an appearance of the avatar is preferably alterable according to an automated evolutionary algorithm, for example a genetic algorithm. The evolutionary algorithm is one non-limiting example of a method for providing personalization of the avatar for the user. Personalization may also optionally be performed through direct user selection of one or more characteristics or skins (groups of characteristics). Such personalization is desirable at least in part because it enhances the emotional experience of the user with the avatar and hence with the mobile information device.

According to still other optional but preferred embodiments of the present invention, the mobile information device network comprises a locator for determining a physical location of the mobile information device, such that the user is preferably able to request information about this physical location through an action of the agent. The locator is also preferably capable of determining a second physical location relative to the physical location of the mobile information device, such that the user is able to request information about the second physical location through an action of the agent.

Optionally and preferably the user can select and request the second physical location according to a category, which may optionally be selected from the group consisting of a commercial location, a medical location, and a public safety location, such as a fire or police station for example.

For example if the user wishes to find a commercial location, the user would enter a request for such a location, optionally by name of a store, shopping mall, etc, or alternatively according to a type of commercial location, such as a type of store, or even a general category such as "shopping mall" for example. Optionally, a matching commercial location could send a message to the mobile information device according to said action of said agent, for example optionally and preferably including at least one of an advertisement or a coupon, or a combination thereof. For such messages, or indeed for any type of message, the agent preferably filters the message according to at least one criterion, which is more preferably entered by the user through the avatar, and/or is learned by the avatar in response to a previous action of the user upon receiving a message. The avatar may then optionally present at least information about the message to the user, if not the message itself (in whole or in part).

The user also preferably requests information about the second physical location through the avatar.

Of course, the commercial location does not necessarily need to be a physical location; it could also optionally be a virtual commercial location, such as for m-commerce for example, wherein the user communicates with the virtual commercial location through the avatar. Preferably, the user could perform a purchase at the virtual commercial location through the avatar. The user could also optionally search through the virtual commercial location by using the agent, although again preferably using the avatar as the interface. As described above, the avatar could even optionally be capable of receiving an accessory purchased from the virtual commercial location.

Also, if the mobile information device is capable of receiving software, then the agent preferably performs at least a portion of installation of the software on the mobile information device. The user may optionally interact with the avatar for performing at least a portion of configuration of the software.

In terms of technical implementation, the present invention is preferably capable of operating on a limited system (in terms of memory, data processing capacity, screen display size and resolution, and so forth) in a device which is also very personal to the user. For example, preferably the device is a mobile information device, such as a cellular telephone, which by necessity is adapted for portability and ease of use, and therefore may have one or more, or all, of the above limitations. The implementation aspects of the present invention are preferably geared to this combination of characteristics. Therefore, in order to overcome the limitations of the device itself while still maintaining the desirable personalization and "personal feel" for the user, various solutions are proposed below. It should be noted that these solutions are examples only, and are not meant to be limiting in any way.

EXAMPLE 1: PROACTIVE INTERFACE - General

The proactive user interface of the present invention is preferably able to control and/or be associated with any type of computational device, in order to actively make suggestions to the user, based upon prior experience with a particular user and/or various preprogrammed patterns from which the computational device could select, depending upon user behavior. These suggestions could optionally be made by altering the appearance of at least a portion of the display, for example by changing a menu or a portion thereof; providing different menus for display; and/or altering touch screen functionality. The suggestions could also optionally be made audibly.

The proactive user interface is preferably implemented for a computational device, as previously described, which includes an operating system. The interface optionally and preferably includes a user interface for communicating between the user and the operating system. The interface is preferably able to detect at least one pattern of interaction of the user with the user interface, for example through operation of a learning module and is therefore preferably able to proactively alter at least one function of the user interface according to the detected pattern. Therefore, the proactive user interface can anticipate the requests of the user and thereby assist the user in selecting a desired function of the computational device.

This type of proactive behavior, particularly with regard to learning the behavior and desires of the user, requires some type of learning capability on the part of the proactive interface. Such learning capabilities may optionally be provided through algorithms and methodologies which are known in the art, relating to learning (by the software) and interactions of a software object with the environment. Software can be said to be learning when it can improve its actions along time. Artificial Intelligence needs to demonstrate intelligent action selection (reasoning), such that the software preferably has the ability to explore its environment (its "world") and to discover action possibilities. The software also preferably has ability to represent the world's state and its own internal state. The software then is preferably able to select an intelligent action (using the knowledge above) and to act.

Learning, for example by the learning module of the interface, can optionally and preferably be reinforced by rewards, in which the learning module is rewarded for taking particular actions according to the state of the environment. This type of learning actually involves training the learning module to behave in a certain manner. If more than one behavior is allowed, then the learning process is non-deterministic and can create different behaviors. With regard to the proactive user interface, for example, optionally and preferably the reward includes causing the learning module to detect when an offered choice leads to a user selection, as opposed to when an offered choice causes the user to seek a different set of one or more selections, for example by selecting a different menu than the one offered by the proactive user interface. Clearly, the proactive user interface should seek to maximize the percentage of offerings which lead to a direct user selection from that offering, as this shows that the interface has correctly understood the user behavior.

In order to assist in this process, preferably learning by the learning module is reinforced, for example according to the following optional but preferred reinforcement learning key features:

Adaptive learning process - the learning process is iterative, such that for each iteration the learning module learns the appropriate action to perform. A change in the environment preferably leads to changes in behavior. The learning module can be trained to perform certain actions.

Low memory consumption- reasoning system algorithms such as neural nets or MAS have small memory complexity, since environment state and internal state are reduced to a small set of numerical values. The algorithm doesn't require more memory during the learning process.

Fast interaction - optionally, at each iteration an action is selected based on previous iteration's computation, thus little computation is done to select the next action. The user experiences a fast reactive program. The learning process for the next iteration is done after the action takes place.

Utilization of device idle time - since the learning module can optionally learn by itself from the environment with no user interaction, idle computational device time can preferably be utilized for learning.

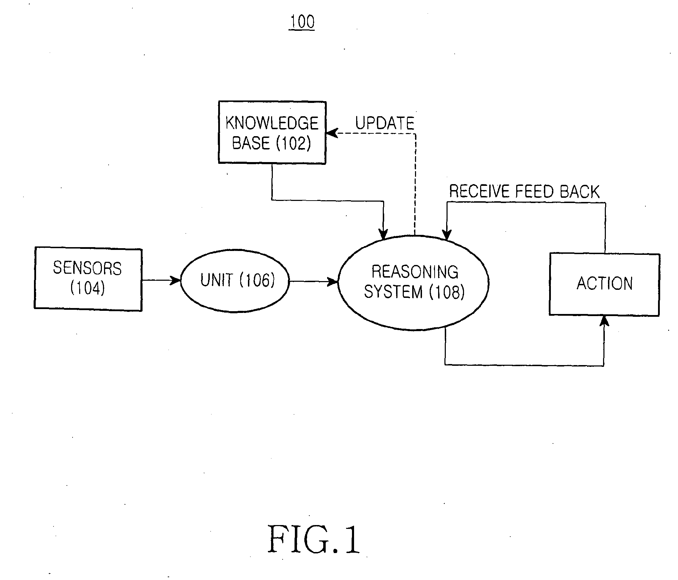

Figure 1 is a schematic block diagram of an exemplary learning module according to the present invention for reactive learning. As shown, a learning module **100** preferably includes a Knowledge Base **102**, which preferably acts as the memory of learning module **100**, by holding information gathered by learning module **100** as a result of interactions with the environment. Knowledge Base **102** may optionally be stored in non-volatile memory (not shown). Knowledge Base **102** preferably holds information that helps learning module **100** to select the appropriate action. This information can optionally include values such as numerical weights for an inner neural net, or a table with action reward values, or any other type of information.

In order for learning module **100** to be able to receive information about the environment, learning module **100** preferably features a plurality of sensors **104**. Sensors **104** preferably allow learning module **100** to perceive its environment state. Sensors **104** are connected to the environment and output sensed values. The values can come from the program itself (for example, position on screen, energy level etc.), or from real device values (for example, battery value and operating state, such as a flipper state for cellular telephones in which the device can be activated or an incoming call answered by opening a "flipper").

Sensors **104** clearly provide valuable information; however, this information needs to be processed before learning module **100** can comprehend it. Therefore, learning module **100** preferably also includes a perception unit **106**, for processing the current output of sensors **104** into a uniform representation of the world, called a "state". The state is then preferably the input for a reasoning system **108**, which may be described as the "brain" of learning module **100**. This design supports the extension of the world state and the sensor mechanism, as well as supporting easy porting of the system to several host platforms (different computational devices and environments), such that the world state can be changed according to the device.

Reasoning system **108** preferably processes the current state with Knowledge Base **102**, thereby producing a decision as to which action to perform. Reasoning system **108** receives the current state of the world, outputs the action to be performed, and receives feedback on the action selected. Based on the feedback, reasoning system **108** preferably updates Knowledge Base **102**. This is an iterative process in which learning module **100** learns to associate actions to states.

According to an optional embodiment of the present invention, the computational device may feature one or more biological sensors, for sensing various types of biological information about the user, such as emotional state, physical state, movement, etc. This information may then be fed to sensors **104** for assisting perception unit **106** to determine the state of the user, and hence to determine the proper state for the device. Such biological sensors may include but are not limited to sensors for body temperature, heart rate, oxygen saturation or any other type of sensor which measures biological parameters of the user.

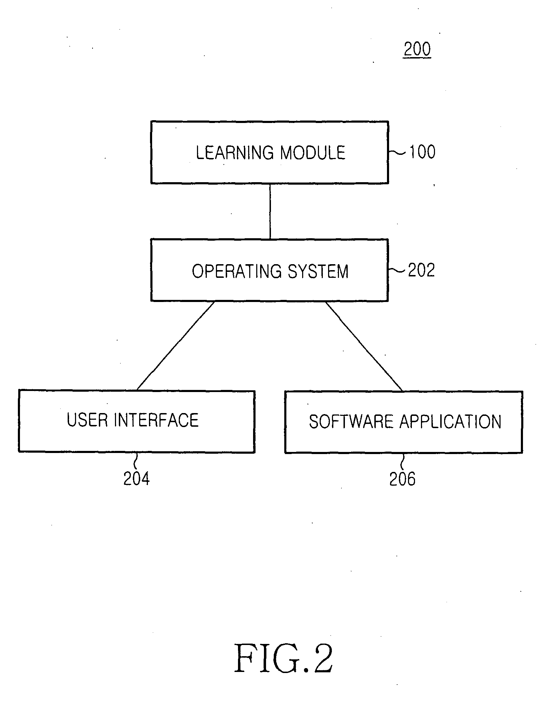

Figure 2 shows an exemplary embodiment of a system **200** according to the present invention for providing the proactive user interface, again featuring learning module **100**. Learning module **100** is shown being in communication with an operating system **202** of the computational device (not shown) with which learning module **100** is associated and/or controls and/or by which learning module **100** is operated. Operating system **202** preferably controls the operation of a user interface **204** and also at least one other software application **206** (although of course many such software applications may optionally be present).

The user preferably communicates through user interface **204**, for example by selecting a choice from a menu. Operating system **202** enables this communication to be received and translated into data. Learning module **100** then preferably receives such data, and optionally sends a command back to operating system **202**, for example to change some aspect of user interface **204** (for example by offering a different menu), and/or to operate software application **206**. The user then responds through user interface **204**; from this response, learning module **100** preferably learns whether the action (command that was sent by learning module **100**) was appropriate.

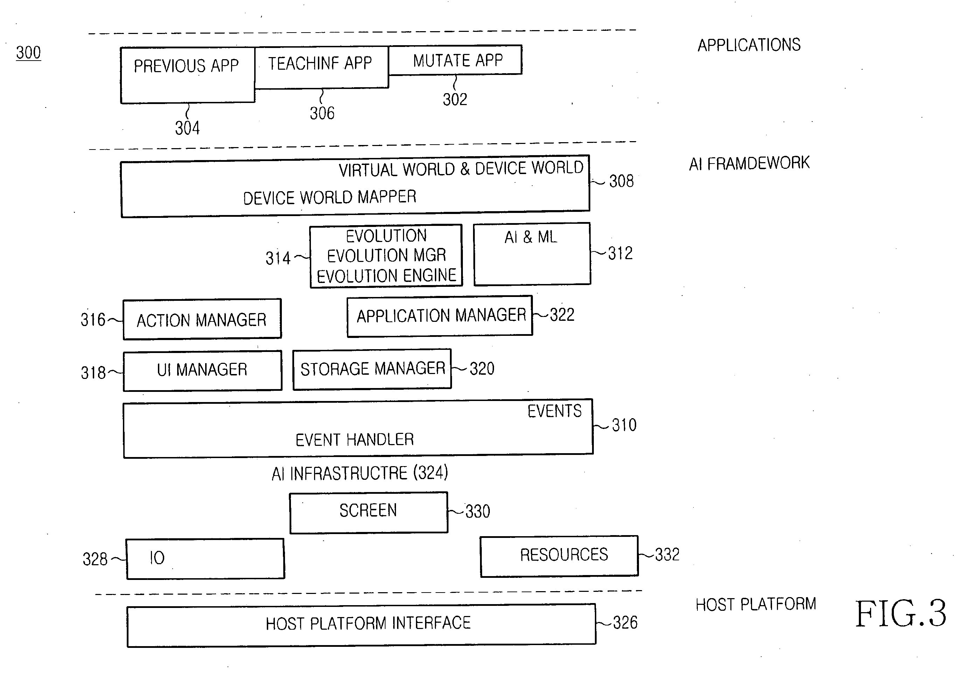

Figure 3 is a schematic block diagram showing an exemplary implementation of a proactive user interface system **300** according to the present invention. As shown, system **300** preferably features a three level architecture, with an application layer being supported by an AI (artificial intelligence) framework, which in turn communicates with the host platform computational device (shown as "host platform").

The application layer optionally and preferably features a plurality of different applications, of which a few non-limiting examples are shown, such as a MutateApp **302**, a PreviousApp **304** and a TeachingApp **306**.

MutateApp **302** is preferably invoked in order to control and/or initiate mutations in system **300**. As noted above, the learning module can optionally change its behavior through directed or semi-directed evolution, for example through genetic algorithms. MutateApp **302** preferably controls and/or initiates such mutations through evolution. The embodiment of evolution is describe in greater detail below.

PreviousApp **304** preferably enables a prior state of system **300**, or a portion thereof (such as the state of the learning module) to be invoked in place of the current state. More specifically, PreviousApp **304** enables the user to return to the previous evolutionary step if the present invention is being implemented with an evolutionary algorithm. More generally, system **300** is preferably stateful and therefore can optionally return to a previous state, as a history of such states is preferably maintained.

TeachingApp **306** is described in greater detail below, after Example 3, but may optionally be implemented in order to teach the user about how to operate the computational device, and/or about a different subject, external to the computational device. TeachingApp **306** provides a teaching application which, in combination with the AI infrastructure described below, provides a personalized learning experience. TeachingApp **306** preferably can adjust the type of teaching, teaching methods, rate of imparting new information, reinforcement activities and practice activities, and so forth, to meet the individual needs of the particular user. Furthermore, TeachingApp **306** may also optionally be able to adjust performance for a plurality of different users, for example in a group or classroom learning situation.

TeachingApp **306** is only one non-limiting example of a generic application which may be implemented over the AI framework layer.

The AI framework layer itself contains one or more components which enable the user interface to behave in a proactive manner. Optionally and preferably, the framework includes a DeviceWorldMapper **308,** for determining the state of the computational device and also that of the virtual world, as well as the relationship between the two states. DeviceWorldMapper **308** preferably receives input, for example from various events from an EventHandler **310**, in order to determine the state of the virtual world and that of the device.

DeviceWorldMapper **308** also preferably communicates with an AI/ML (machine learning) module **312** for analyzing input data. AI/ML module **312** also preferably determines the behavior of system **300** in response to various stimuli, and also enables system **300** to learn, for example from the response of the user to different types of user interface actions.. The behavior of system **300** may also optionally and preferably be improved according to an evolution module **314**.

The embodiment of evolution is particularly preferred with regard to the use of an intelligent agent on a mobile information device (see below for an example), but may also optionally be used with any proactive user interface for a computational device. Preferably, this embodiment is used when the proactive user interface also features or is used in combination with an avatar.

Evolution is preferably simulated by a set of genetic algorithms. The basis of these algorithms is describing the properties of the proactive interface (and particularly the avatar's appearance) in term of genes, chromosomes, and phenotypes. The gene is a discrete property that has a level of expression for example a leg of a certain type. The level of expression can be the number of these legs.

A phenotype is the external expression of a gene; for example the leg gene can have different phenotypes in term of leg length or size.

The gene can optionally go though a mutation process. This process (preferably according to a certain probability) changes one or more parameter of the gene, thereby producing different new phenotypes.

A chromosome is a set of genes that function together. The chromosome can hybrid (cross breeding) with the same type of chromosome from a different creature, thus creating a new chromosome that is a combination of its genetic parent chromosomes.

This methodology helps in creating a generic infrastructure to simulate visual evolution (for example of the appearance of the avatar) and/or evolution of the behavior of the proactive user interface. These algorithms may also optionally be used for determining non-visual behavioral characteristics, such as dexterity, stamina and so on. The effect could optionally result for example in a faster creature, or a more efficient creature. These algorithms may optionally be used for any such characteristics that can be described according to the previously mentioned gene/genotype/phenotype structure, such that for example behavioral genes could optionally determine the behavior of AI algorithms used by the present invention.

The algorithm output preferably provides a variety of possible descendant avatars and/or proactive user interfaces.

The genetic algorithms use a natural selection process to decide which of the genetic children will continue as the next generation. The selection process can be decided by the user or can be predefined. In this way the creature can display interesting evolution behavior. The generic algorithm framework can be used to evolve genes that encode other non visual properties of the creature, such as goals or character.

Evolution module 314 supports and also preferably manages such evolution, for example through the operation of MutateApp **302**.

Between these different AI-type applications and EventHandler **310,** one or more different low level managers preferably support the receipt and handling of different events, and also the performance of different actions by system **300.** These managers may optionally include but are not limited to, an ActionManager **316,** a UIManager **318,** a StorageManager **320** and an ApplicationManager **322.**

ActionManager **316** is described in greater detail below, but briefly preferably enables system **300** to determine which action should be taken, for example through the operation of AI/ML module **312.**

UIManager **318** preferably manages the appearance and functions of the user interface, for example by directing changes to that interface as previously described.

StorageManager **320** preferably manages the storage and handling of data, for example with regard to the knowledge base of system **300** (not shown).

ApplicationManager **322** preferably handles communications with the previously described applications in the application layer.

All of these different managers preferably receive events from EventHandler **310**.

Within the AI framework layer, an AI infrastructure **324** optionally and preferably supports communication with the host platform. The host platform itself preferably features a host platform interface **326**, which may optionally and preferably be provided through the operating system of the host platform for example.

AI infrastructure **324** optionally and preferably includes an I/O module **328,** for receiving inputs from host platform interface **326** and also optionally for sending commands to host platform interface **326**. A screen module **330** preferably handles the display of the user interface on the screen of the host platform computational device. A resources module **332** preferably enables system **300** to access various host platform resources, such as data storage and so forth.

Of course, the above Figures represent only one optional configuration for the learning module. For example, the learning module may also be represented as a set of individual agents, in which each agent has a simple goal. The learning module chooses an agent to perform an action based on the current state. The appropriate mapping between the current state and agents can also be learned by the learning module with reinforcement learning.

Learning may also optionally be supervised. The learning module may hold a set of examples how to behave and can then learn the pattern given from the supervisor. After the learning module learns the rules, it tries to act based on the information it has already seen, and to generalize new states.

EXAMPLE 2: ADAPTIVE SYSTEM FOR MOBILE INFORMATION DEVICE

This example relates to the illustrative implementation of an adaptive system of the present invention with a mobile information device, although it should be understood that this implementation is preferred but optional, and is not intended to be limiting in any way.

The adaptive system may optionally include any of the functionality described above in Example 1, and may also optionally be implemented as previously described. This Example focuses more on the actual architecture of the adaptive system with regard to the mobile information device operation. Also, this Example describes an optional but preferred implementation of the creature or avatar according to the present invention.

The next sections describe optional but preferred embodiments of specific technical implementations of various aspects of the adaptive system according to the present invention. For the purpose of description only and without any intention of being limiting, these embodiments are based upon the optional but preferred embodiment of an adaptive system interacting with the user through an intelligent agent, optionally visually represented as an avatar or "creature".

Section 1: Event Driven System

This Section describes a preferred embodiment of an event driven system according to the present invention, including but not limited to an application manager, and interactions between the device itself and the system of the present invention as it is operated by the device.

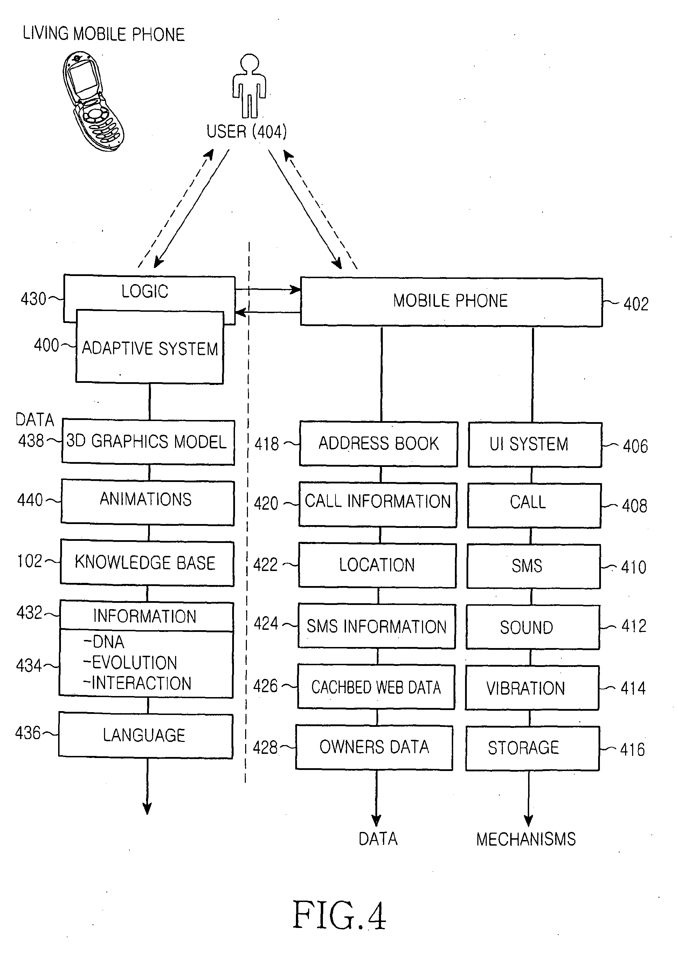

Figure 4 shows a schematic block diagram of an exemplary adaptive system **400** according to the present invention, and interactions of system **400** with a mobile information device **402**. Also as shown, both system **400** and mobile information device 402 preferably interact with a user **404**.

Mobile information device **402** optionally and preferably has a number of standard functions, which are shown divided into two categories for the purpose of explanation only: data and mechanisms. Mechanisms may optionally include but are not limited to such functions as a UI (user interface) system **406** (screen, keypad or touchscreen input, etc); incoming and outgoing call function **408**; messaging function **410** for example for SMS; sound **412** and/or vibration **414** for alerting user **404** of an incoming call or message, and/or alarm etc; and storage **416**.

Data may optionally include such information as an address (telephone) book **418**; incoming or outgoing call information **420**; the location of mobile information device **402**, shown as location b; message information **424**; cached Internet data **426**; and data about user **404**, shown as owner data **428**.

It should be noted that mobile information device **402** may optionally include any one or more of the above data/mechanisms, but may not necessarily include all of them, and/or may include additional data/mechanisms that are not shown. These are simply intended as non-limiting examples with regard to mobile information device **402,** particularly for cellular telephones.

Adaptive system **400** according to the present invention preferably interacts with the data/mechanisms of mobile information device **402** in order to be able to provide an adaptive (and also preferably proactive) user interface, thereby increasing the ease and efficiency with which user **404** interacts with mobile information device **402**.

Adaptive system **400** preferably features logic **430**, which preferably functions in a similar manner as the previously described learning module, and which also optionally and preferably operates according to the previously described AI and machine learning algorithms.

Logic **430** is preferably able to communicate with knowledge base **102** as described with regard to Figure 1 (components featuring the same reference numbers have either identical or similar functionality, unless otherwise stated). Information storage **432** preferably includes data about the actions of mobile information device **402**, user information and so forth, and preferably supplements the data in knowledge base **102**.

Preferably, adaptive system **400** is capable of evolution, through an evolution logic **434**, which may optionally combine the previously described functionality of evolution module **314** and MutateApp **302** of Figure 3 (not shown).

Optionally, adaptive system **400** is capable of communicating directly with user **404** through text and/or audible language, as supported by a language module **436**.

Particularly as described with regard to the embodiment of the present invention in Example 3 below, but also optionally for adaptive system **400**, user **404** may optionally be presented with an avatar (not shown) for the user interface. If present, such an avatar may optionally be created through a 3D graphics model **438** and an animation module **440** (see below for more details). The avatar may optionally be personalized for user **404**, thereby providing an enhanced emotional experience for user **404** when interacting with mobile information device **402**.

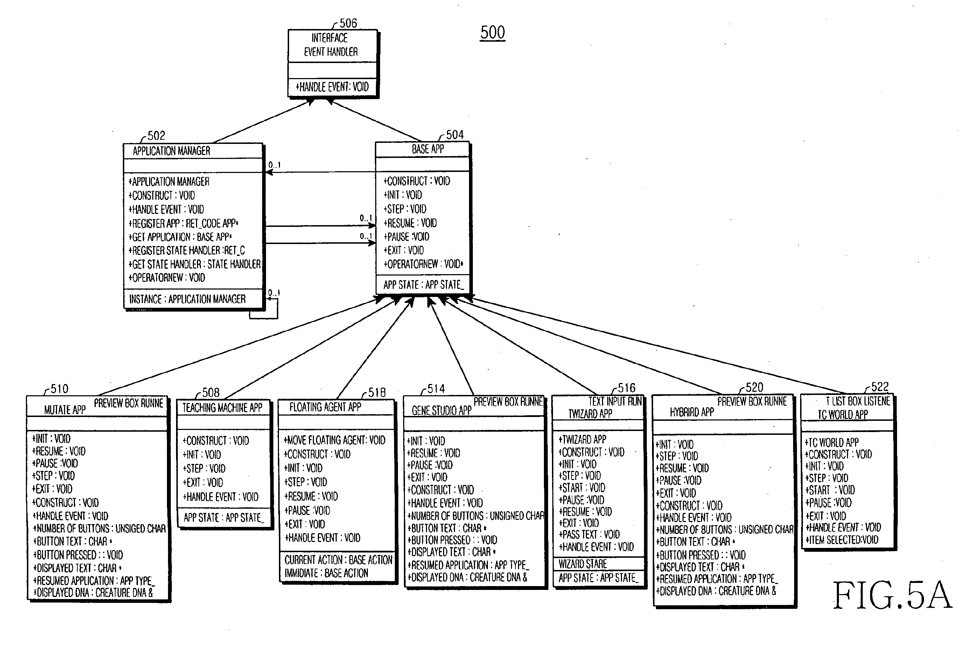

Figure 5A shows a schematic block diagram of an exemplary application management system **500**, which is a core infrastructure for supporting the adaptive system of the present invention. System **500** may also optionally be used for supporting such embodiments as teaching application functionality, as previously described and also as described in greater detail below. System **500** preferably features an application manager **502** for managing the different types of applications which are part of the adaptive system according to the present invention. Application manager **502** communicates with an application interface called BaseApp **504**, which is implemented by all applications in system **500**. Both application manager **502** and BaseApp **504** communicate events through an EventHandler **506**.

Application manager **502** is responsible for managing and providing runtime for the execution of the system applications (applications which are part of system **500**). The life cycle of each such application is defined in BaseApp **504**, which allows application manager **502** to start, pause, resume and exit (stop) each such application. Application manager **502** preferably manages the runtime execution through the step method of the interface of BaseApp **504**. It should be noted that optionally and preferably the step method is used for execution, since system **500** is preferably stateful, such that each step preferably corresponds (approximately) to one or more states. However, execution could also optionally be based upon threads and/or any type of execution method.

Application manager **502** receives a timer event from the mobile information device. As described in greater detail below, preferably the mobile information device features an operating system, such that the timer event is preferably received from the operating system layer. When a timer is invoked, application manager **502** invokes the step of the current application being executed. Application manager **502** preferably switches from one application to another application when the user activates a different application, for example when using the menu system.

Some non-limiting examples of the system applications are shown, including but not limited to, a TeachingMachineApp **508,** a MutateApp **510,** a GeneStudioApp **514,** a TWizardApp **516,** a FloatingAgentApp **518,** a TCWorldApp **522** and a HybridApp **520.** These applications are also described in greater detail below with regard to Example 3.

MutateApp **510** is preferably invoked in order to control and/or initiate mutations in the adaptive system, and/or in the appearance of an avatar representing the adaptive system as a user interface. As noted above with regard to Example 1, the adaptive system of the present invention can optionally change its behavior through directed or semi-directed evolution, for example through genetic algorithms. MutateApp **510** preferably controls and/or initiates such mutations.

GeneStudioApp **514** preferably enables the user to perform directed and/or semi-directed mutations through one or more manual commands. For example, the user may wish to direct the adaptive system (through application management system **500**) to perform a particular task sequence upon receiving a particular input. Alternatively, the user may wish to directly change part of the appearance of an avatar, if present. According to preferred embodiments of the present invention, these different aspects of the adaptive system are preferably implemented by distinct "genes", which can then optionally be altered by the user.

HybridApp **520** may optionally be invoked if the user wishes to receive information from an external source, such as the adaptive system of another mobile information device, and to merge this information with existing information on the user's mobile information device. For example, the user may wish to create an avatar having a hybrid appearance with the avatar of another mobile information device. HybridApp **520** also optionally and preferably provides the main control of the user on the entire evolutionary state of the avatar. Optionally and more preferably, HybridApp **520** may be used to instruct the user on the "life" properties of with the avatar, which may optionally have a name, personality, behavior and appearance.

TeachingMachineApp **508** is an illustrative, non-limiting example of an application which may optionally relate to providing instruction on the use of the device itself, but preferably provides instruction on a subject which is not related to the direct operation of the device itself. Therefore, TeachingMachineApp **508** represents an optional example of an application which is provided on the mobile information device for a purpose other than the use of the device itself.

TCWorldApp **522** is an application which runs the intelligent agent, preferably controlling both the intelligent aspects of the agent and also the graphical display of the creature or avatar (both are described in greater detail below).

Other non-limiting examples of the applications according to the present invention include games. One non-limiting example of a game, in which the adaptive system and the user can optionally interact together, is a "Hide and Seek" game. The "Hide and Seek" game is preferably performed by having the creature or avatar "hide" in the menu hierarchy, such that the user preferably traverses at least one sub-menu to find the avatar or creature, thereby causing the user to learn more about the menu hierarchy and structure. Many other such game applications are possible within the scope of the present invention.

TWizardApp **516** is another type of application which provides information to the user. It is described with regard to the Start Wizard application in Example 4 below. Briefly, this application contains the user preferences and configuration of the AI framework, such as the character of the intelligent agent, particularly with regard to the emotional system (also described in greater detail below), and also with regard to setting goal priorities (described in greater detail below).

FloatingAgentApp **518** optionally and preferably controls the appearance of the user interface, particularly with regard to the appearance of an avatar (if present). FloatingAgentApp **518** enables the visual display aspects of the user interface to be displayed independently of the display of the avatar, which may therefore appear to "float" over the user interface for example. FloatingAgentApp **518** preferably is the default application being operated when no other application is running.

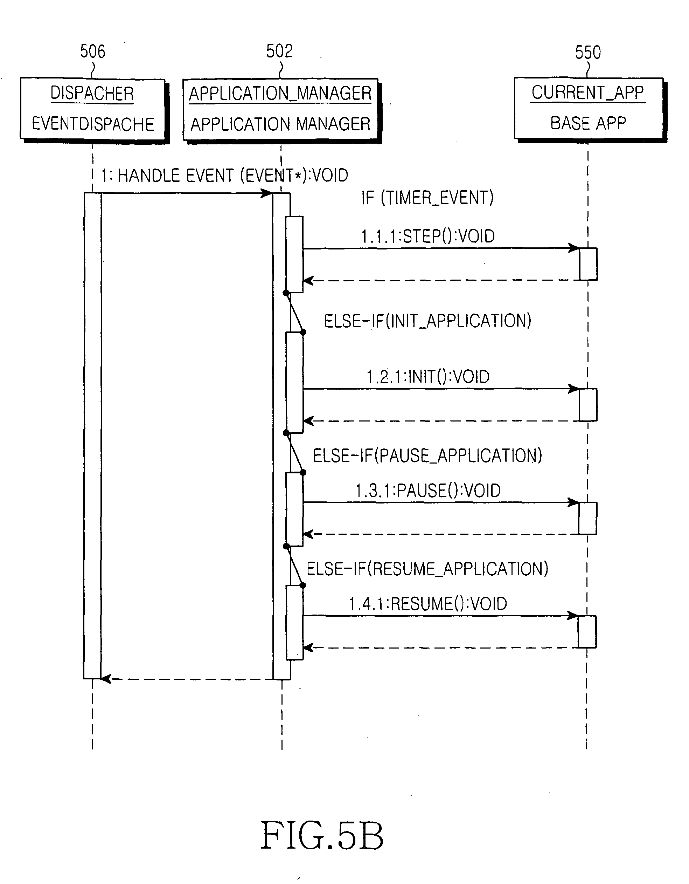

Figure 5B shows an exemplary sequence diagram for the operations of the application manager according to the present invention. As shown, an EventHandler **506** preferably dispatches a notification of an event to application manager **502**, as shown in arrow 1. If the event is a timer event, then application manager **502** invokes the step (action) of the instance of the relevant application that was already invoked, as shown in arrow 1.1.1. If the event is to initiate the execution of an application, then application manager **502** invokes an instance of the relevant application, as shown in arrow 1.2.1. If a currently running instance of an application is to be paused, then application manager **502** sends the pause command to the application, as shown in arrow 1.3.1. If a previously paused instance of an application is to be resumed, then application manager **502** sends the resume command to the application, as shown in arrow 1.4.1. In any case, successful execution of the step is returned to application manager **502,** as shown by the relevant return arrows above. Application manager **502** then notifies EventHandler **506** of the successful execution, or alternatively of failure.

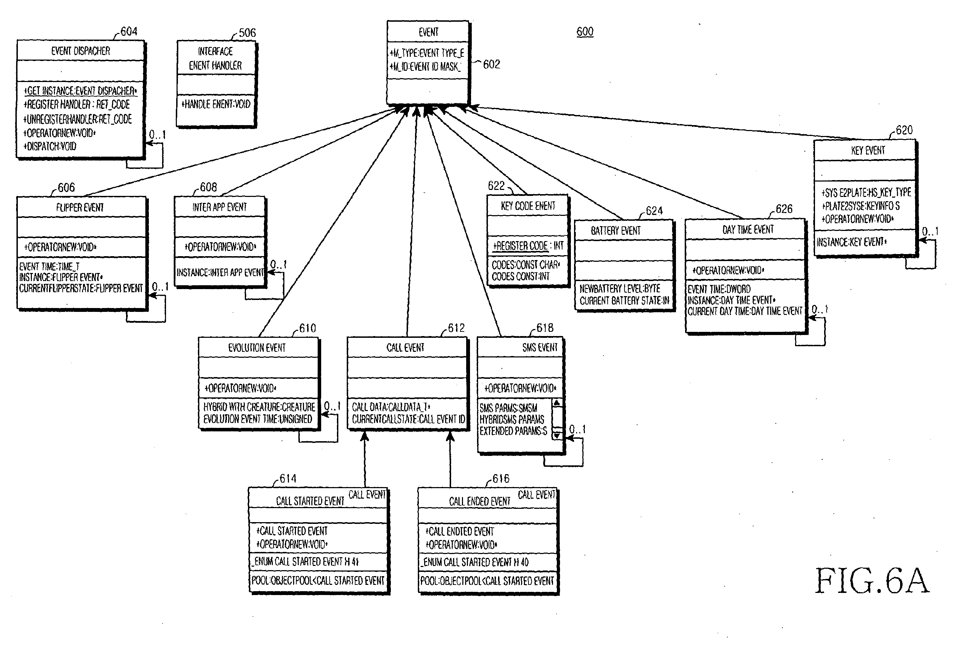

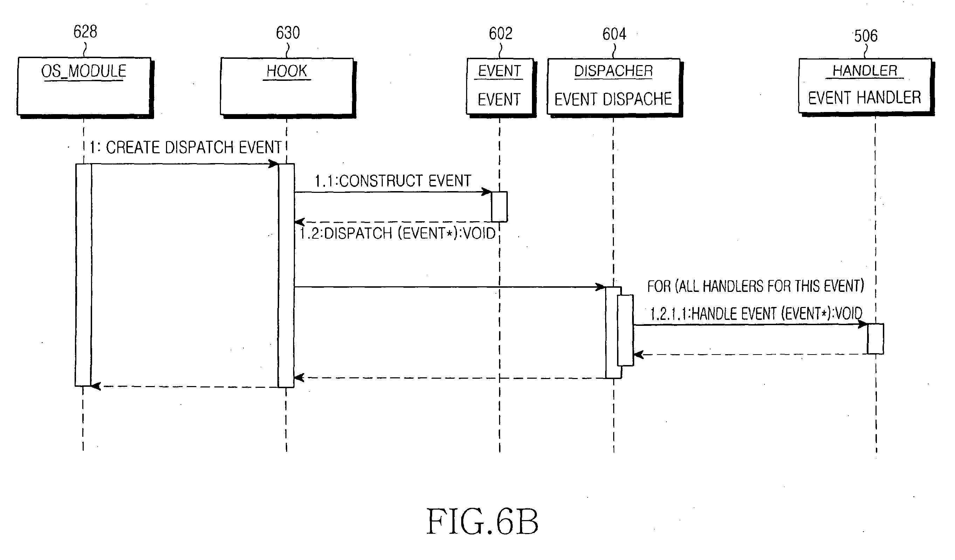

These different applications are important for enabling the adaptive system to control various aspects of the operation of the mobile information device. However, the adaptive system also needs to be able to communicate directly with various mobile information device components, through the operating system of the mobile information device. Such communication may optionally be performed through a communication system **600**, shown with regard to Figure 6, preferably with the action algorithms described below.

Figures 6A and 6B show an exemplary implementation of the infrastructure required for the adaptive system according to the present invention to perform one or more actions through the operating system of the mobile information device (Figure 6A), as well as a sequence diagram for operation of communication system **600** (Figure 6B). According to optional but preferred embodiments of the present invention, this infrastructure is an example of a more general concept of "AI wrappers", or the ability to "wrap" an existing UI (user interface) system with innovative AI and machine learning capabilities.

Communication system **600** is preferably capable of handling various types of events, with a base class event **602** that communicates with EventHandler **506** as previously described. EventDispatcher **604** then routes the event to the correct object within the system of the present invention. Routing is preferably determined by registration of the object with EventDispatcher **604** for a particular event. EventDispatcher **604** preferably manages a registry of handlers that implement the EventHandler **506** interface for such notification.

Specific events for which particular handlers are implemented optionally and preferably include a flipper event handler **606** for cellular telephones in which the device can be activated or an incoming call answered by opening a "flipper"; when the flipper is opened or closed, this event occurs. Applications being operated according to the present invention may optionally send events to each other, which are preferably handled by an InterAppEvent handler **608**. An event related to the optional but preferred evolution (change) of the creature or avatar is preferably handled by an EvolutionEvent handler **610**. An incoming or outgoing telephone call is preferably handled by a CallEvent handler **612,** which in turn preferably has two further handlers, a CallStartedEvent handler **614** for starting a telephone call and a CallEndedEvent handler 616 for ending a telephone call.

An SMS event (incoming or outgoing message) is preferably handled by an SMSEvent handler **618**. Optional but preferred parameters which may be included in the event comprise parameters related to hybridization of the creature or avatar of one mobile information device with the creature or avatar of another mobile information device, as described in greater detail below.

Events related to operation of the keys are preferably handled by a KeyEvent handler **620** and/or a KeyCodeEvent handler **622.** For example, if the user depresses a key on the mobile information device, KeyEvent handler **620** preferably handles this event, which relates to incoming information for the operation of the system according to the present invention. In the sequence diagram, the key_event is an object from class KeyEvent, which represents the key event message object. KeyEvent handler **620** handles the key_event itself, while KeyCodeEvent handler **622** listens for input code (both input events are obtained through a hook into the operating system).

A BatteryEvent handler **624** preferably handles events related to the battery, such as a low battery, or alternatively switching from a low power consumption mode to a high power consumption mode.

DayTimeEvent handler **626** preferably relates to alarm, calendar or reminder/appointment diary events.

Figure 6B is an exemplary sequence diagram, which shows how events are handled between the mobile information device operating system or other control structure and the system of the present invention. In this example, the mobile information device has an operating system, although a similar operation flow could optionally be implemented for devices that lack such an operating system. If present, the operating system handles input and output to/from the device, and manages the state and events which occur for the device. The sequence diagram in Figure 6B is an abstraction for facilitating handling of, and relating to, these events.

An operating system module (os_module) **628** causes or relates to an event; optionally a plurality of such modules may be present, but only one is shown for the purposes of clarity and without intending to be limiting in any way. Operating system module **628** is part of the operating system of the mobile information device. Operating system module **628** preferably sends a notification of an event, whether received or created by operating system module **628**, to a hook **630**. Hook **630** is part of the system according to the present invention, and is used to permit communication between the operating system and the system according to the present invention. Hook **630** listens for relevant events from the operating system. Hook **630** is capable of interpreting the event from the operating system, and of constructing the event in a message which is comprehensible to event **602**. Hook **630** also dispatches the event to EventDispatcher **604**, which communicates with each handler for the event, shown as EventHandler **506** (although there may be a plurality of such handlers). EventDispatcher **604** then reports to hook **630**, which reports to operating system module **628** about the handling of the event.

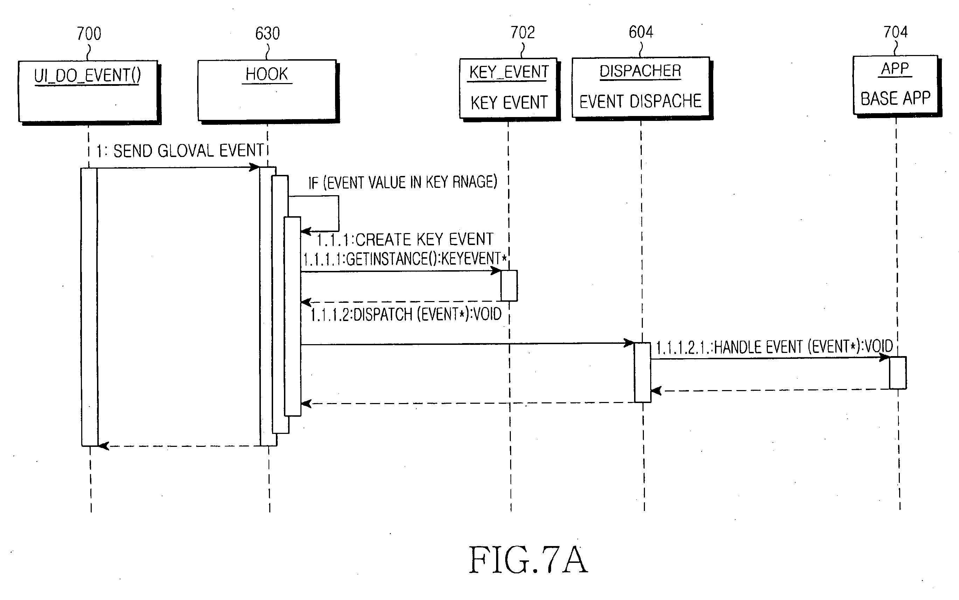

Figures 7A-7C show exemplary events, and how they are handled by interactions between the mobile information device (through the operating system of the device) and the system of the present invention. It should be noted that some events may optionally be handled within the system of the present invention, without reference to the mobile information device.

Figure 7A shows an exemplary key event sequence diagram, described according to a mobile information device that has the DMSS operating system infrastructure from Qualcomm Inc., for their MSM (messaging state machine) CDMA (code division multiple access) mobile platform. This operating system provides operating system services such as user interface service, I/O services and interactive input by using the telephone keys (keypad). This example shows how an input event from a key is generated and handled by the system of the present invention. Other events are sent to the system in almost an identical manner, although the function of hook **630** alters according to the operating system module which is sending the event; optionally and preferably, a plurality of such hooks is present, such that each hook has a different function with regard to interacting with the operating system.

As shown in Figure 7A, a ui_do_event module **700** is a component of the operating system and is invoked periodically. When a key on the mobile device is pressed, the user interface (UI) structure which transfers information to ui_do_event module **700** contains the value of the key. Hook **630** then receives the key value, optionally and preferably identifies the event as a key event (particularly if ui_do_event module **700** dispatches a global event) and generates a key event **702**. Key event **702** is then dispatched to EventDispatcher **604**. The event is then sent to an application **704** which has requested to receive notification of such an event, preferably through an event handler (not shown) as previously described. Notification of success (or failure) in handling the event is then preferably returned to EventDispatcher **604** and hence to hook **630** and ui_do_event module **700.**

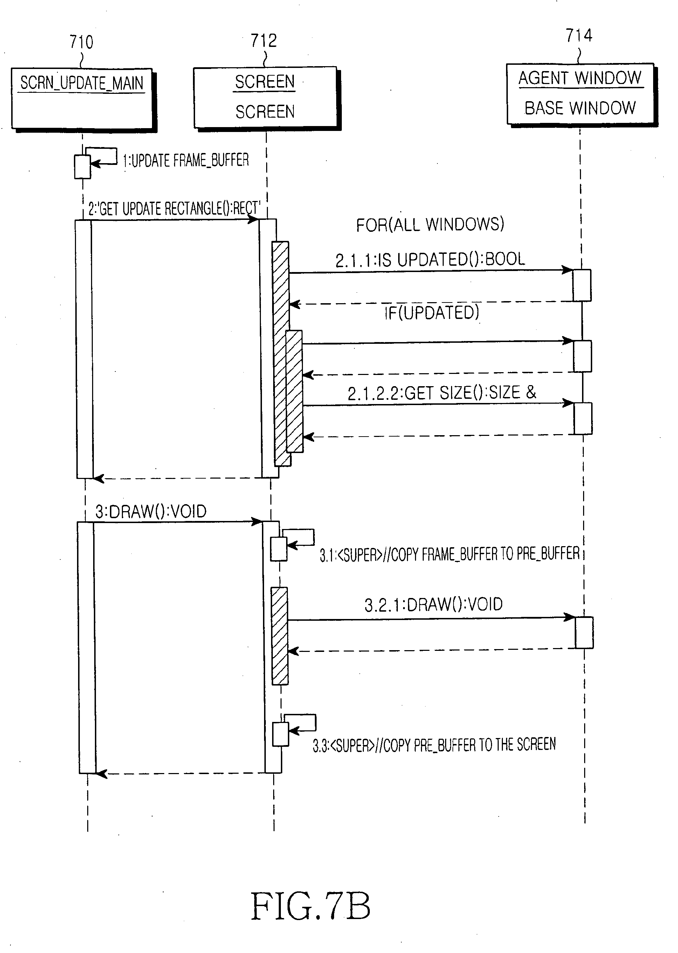

Figure 7B shows a second illustrative example of a sequence diagram for handling an event; in this case, the event is passed from the system of the present invention to the operating system, and is related to drawing on the screen of the mobile information device. Information is passed through the screen access method of the operating system, in which the screen is (typically) represented by a frame buffer. The frame buffer is a memory segment that is copied by using the screen driver (driver for the screen hardware) and displayed by the screen. The system of the present invention produces the necessary information for controlling drawing on the screen to the operating system.

Turning now to Figure 7B, as shown by arrow "1", the operating system (through scrn_update_main module **710**) first updates the frame buffer for the screen. This updating may optionally involve drawing the background for example, which may be displayed on every part of the screen to which data is not drawn from the information provided by the system of the present invention. Optionally, the presence of such a background supports the use of semi-transparent windows, which may optionally and preferably be used for the creature or agent as described in greater detail below.

Scrn_update_main module **710** then sends a request for updated data to a screen module **712,** which is part of the system of the present invention and which features a hook for communicating with the operating system. Screen module **712** then sends a request to each application window, shown as an agentWindow **714**, of which optionally a plurality may be present, for updated information about what should be drawn to the screen. If a change has occurred, such that an update is required, then agentWindow **714** notifies screen module **712** that the update is required. Screen module **712** then asks for the location and size of the changed portion, preferably in two separate requests (shown as .arrows 2.1.2.1 and 2.1.2.2 respectively), for which answers are sent by agentWindow 714.

Screen module **712** returns the information to the operating system through scrn_update_main **710** in the form of an updated rectangle, preferably as follows. Scrn_update_main **710** responds to the notification about the presence of an update by copying the frame buffer to a pre-buffer (process 3.1). Screen module **712** then draws the changes for each window into the pre-buffer, shown as arrow 3.2.1. The pre-buffer is then copied to the frame buffer and hence to the screen (arrow 3.3).

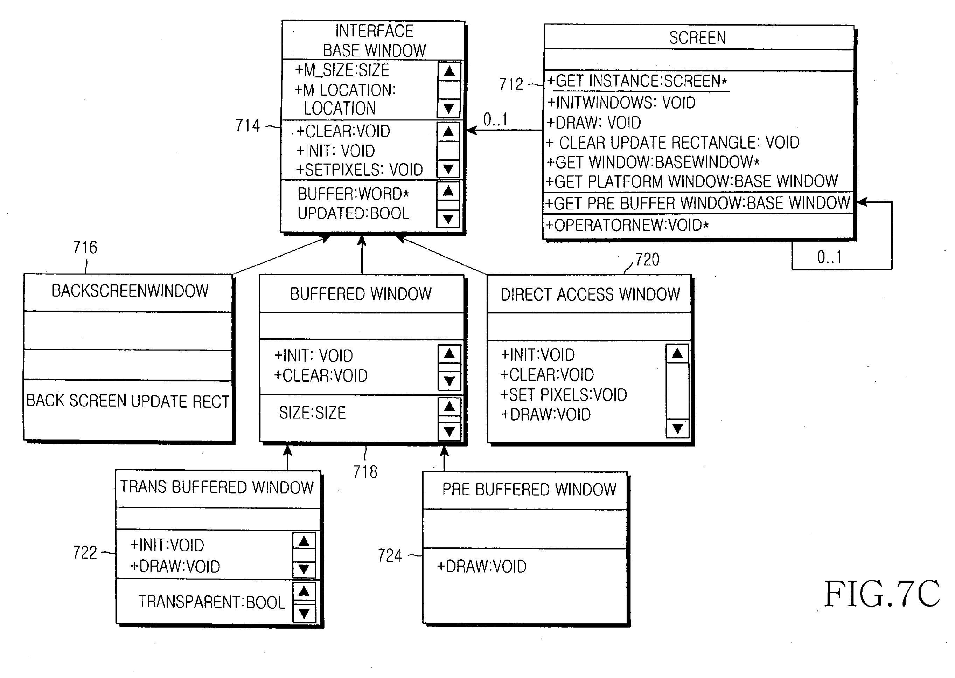

Figure 7C shows the class architecture for the system of the present invention for drawing on the screen. Screen module **712** and agentWindow **714** are both shown. The class agentWindow **714** also communicates with three other window classes, which provide information regarding updating (changes to) windows: BackScreenWindow **716,** BufferedWindow **718** and DirectAccessWindow **720.** BufferedWindow **718** has two further window classes with which it communicates: TransBufferedWindow **722** and PreBufferedWindow **724.**

Section 2: Action Selection System

This Section describes a preferred embodiment of an action selection system according to the present invention, including but not limited to a description of optional action selection according to incentive(s)/disincentive(s), and so forth. In order to assist in explaining how the actions of the intelligent agent are selected, an initial explanation is provided with regard to the structure of the intelligent agent, and the interactions of the intelligent agent with the virtual environment which is preferably provided by the system of the present invention.

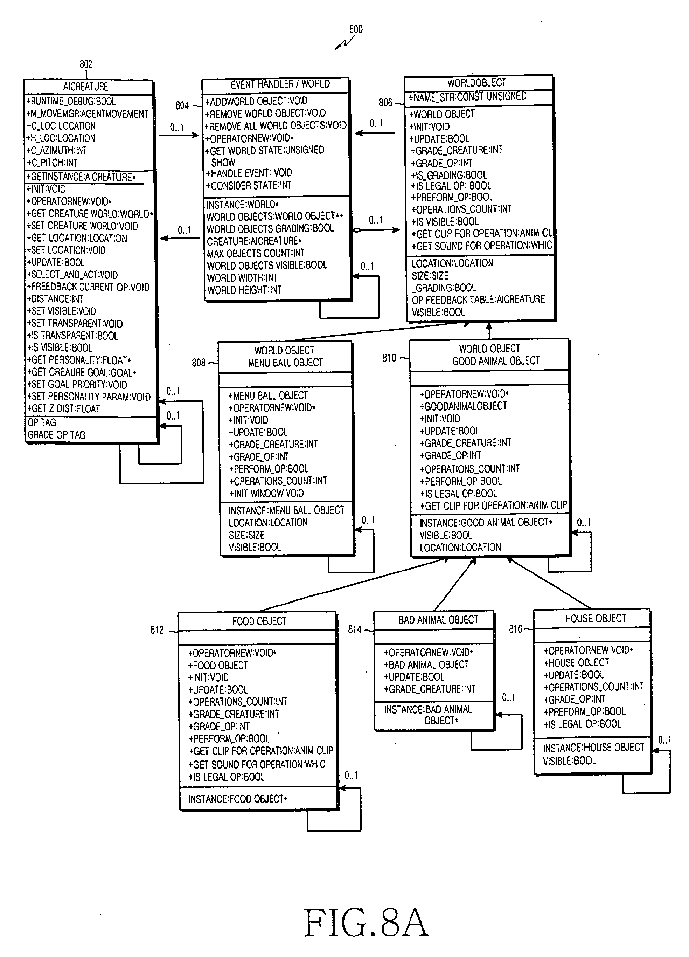

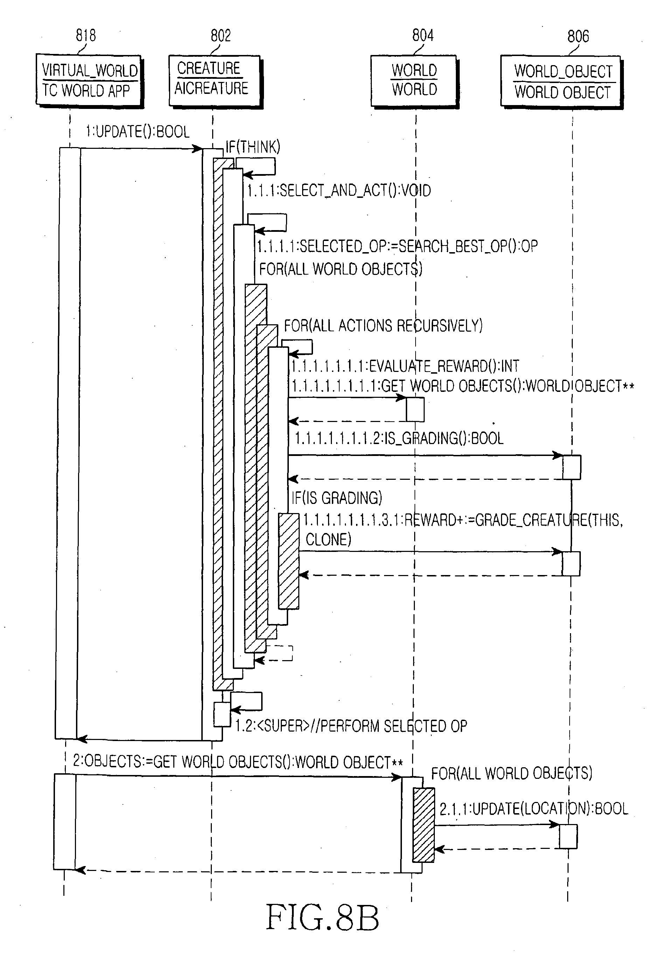

Figure 8 describes an exemplary structure of the intelligent agent (Figure 8A) and also includes an exemplary sequence diagram for the operation of the intelligent agent (Figure 8B). As shown with regard to Figure 8A, an intelligent agent **800** preferably includes a plurality of classes. The main class is AICreature **802,** which includes information about the intelligent agent such as its state, personality, goals etc, and also information about the appearance of the creature which visually represents the agent, such as location, color, whether it is currently visible and so forth.

AICreature **802** communicates with World **804,** which is the base class for the virtual environment for the intelligent agent. World **804** in turn communicates with the classes which comprise the virtual environment, of which some non-limiting examples are shown. World **804** preferably communicates with various instances of a WorldObject **806**, which represents an object that is found in the virtual environment and with which the intelligent agent may interact. World **804** manages these different objects and also receives information about their characteristics, including their properties such as location and so forth. World **804** also manages the properties of the virtual environment itself, such as size, visibility and so forth. The visual representation of WorldObject **806** may optionally use two dimensional or three dimensional graphics, or a mixture thereof, and may also optionally use other capabilities of the mobile information device, such as sound production and so forth.

WorldObject **806** itself may optionally represent an object which belongs to one of several classes. This abstraction enables different object classes to be added to or removed from the virtual environment. For example, the object may optionally be a "ball" which for example may start as part of a menu and then be "removed" by the creature in order to play with it, as represented by a MenuBallObject **808.** A GoodAnimalObject **810** preferably also communicates with WorldObject **806;** in turn, classes such as FoodObject **812** (representing food for the creature), BadAnimalObject **814** (an animal which may annoy the creature and cause them to fight for example) and HouseObject **816** (a house for the creature) preferably communicate with GoodAnimalObject **810.** GoodAnimalObject **810** includes the functionality to be able to draw objects on the screen and so forth, which is why other classes and objects preferably communicate with GoodAnimalObject **810.** Of course, many other classes and objects are possible in this system, since other toys may optionally be provided to the creature, for example.

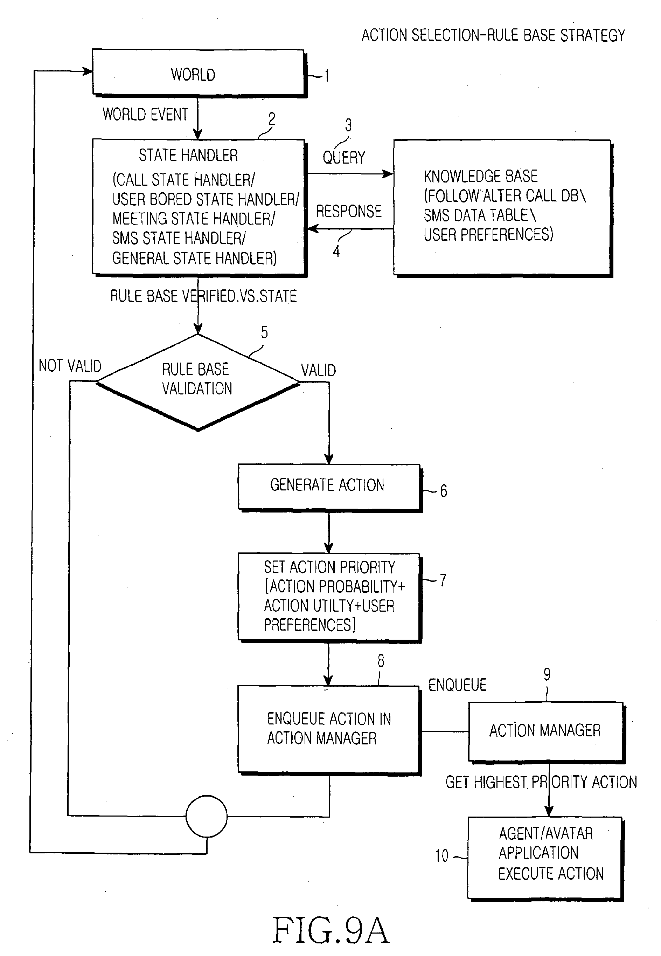

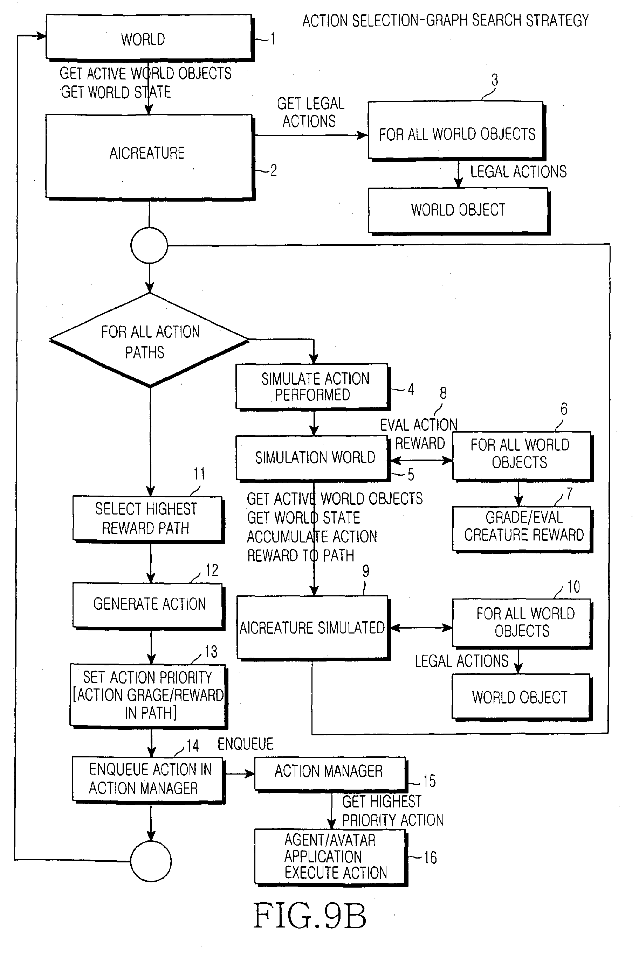

WorldObject **806** may also optionally and preferably relate to the state of the intelligent agent, for example by providing a graded input to the state. This input is preferably graded in the sense that it provides an incentive to the intelligent agent or a disincentive to the intelligent agent; optionally it may also have a neutral influence. The aggregation of a plurality of such graded inputs preferably enables the state of the intelligent agent to be determined. As described with regard to the sequence diagram of Figure 8B, and also the graph search strategy and action selection strategy diagrams of Figures 9A and 9B respectively, the graded inputs are preferably aggregated in order to maximize the reward returned to the intelligent agent from the virtual environment.

These graded inputs may also optionally include input from the user in the form of encouraging or discouraging feedback, so that the intelligent agent has an incentive or disincentive, respectively, to continue the behavior for which feedback has been provided. The calculation of the world state with respect to feedback from the user is optionally and preferably performed as follows:

Grade = (weighting_factor * feedback_reward) + ((1-weighting_factor) * world_reward), in which the feedback_reward results from the feedback provided by the user and the world_reward is the aggregated total reward from the virtual environment as described above; weighting_factor is optionally and preferably a value between 0 and 1, which indicates the weight of the user feedback as opposed to the virtual environment (world) feedback.

Figure 8B shows an illustrative sequence diagram for an exemplary set of interactions between the virtual world and the intelligent agent of the present invention. The sequence starts with a request from a virtual world module **818** to AICreature **802** for an update on the status of the intelligent agent. Virtual world module **818** controls and manages the entire virtual environment, including the intelligent agent itself.

The intelligent agent then considers an action to perform, as shown by arrow 1.1.1. The action is preferably selected through a search (arrow 1.1.1.1) through all world objects, and then recursively through all actions for each object, by interacting with World **804** and WorldObject **806.** The potential reward for each action is evaluated (arrow 1.1.1.1.1.1) and graded (arrow 1.1.1.1.1.1.2). The action with the highest reward is selected. The overall grade for the intelligent agent is then determined and AICreature 802 performs the selected action.

Virtual_world **818** then updates the location and status of all objects in the world, by communicating with World **804** and WorldObject **806.**

The search through various potential actions may optionally be performed according to one or more of a number of different methods. Figures 9A and 9B show two exemplary methods for selecting an action according to the present invention.

Figure 9A shows an exemplary method for action selection, termed herein a rule based strategy for selecting an action. In stage 1, the status of the virtual environment is determined by the World state. A World Event occurs, after which the State Handler which is appropriate for that event is invoked in stage 2. The State Handler preferably queries a knowledge base in stage 3. Optionally, the knowledge base may be divided into separate sections and/or separate knowledge bases according to the State Handler which has been invoked. In stage 4, a response is returned to the State Handler.

In stage 5, rule base validation is performed, in which the response (and hence the suggested action which in turn brings the intelligent agent into a specific state) is compared against the rules. If the action is not valid, then the process returns to stage 1. If the action is valid, then in stage 6 the action is generated. The priority for the action (described in greater detail below with regard to Figure 9C) is then preferably determined in stage 7; more preferably, the priority is determined according to a plurality of inputs, including but not limited to, an action probability, an action utility and a user preference. In stage 8, the action is placed in a queue for the action manager. In stage 9, the action manager retrieves the highest priority action, which is then performed by the intelligent agent in stage 10.

Figure 9B shows an exemplary action selection method according to a graph search strategy. Again, in stage 1 the process begins by determining the state of the world (virtual environment), including the state of the intelligent agent and of the objects in the world. In stage 2, the intelligent agent is queried. In stage 3, the intelligent agent obtains a set of legal (permitted or possible) actions for each world object; preferably each world object is queried as shown.

The method now branches into two parts. A first part, shown on the right, is performed for each action path. In stage 4, an action to be performed is simulated. In stage 5, the effect of the simulation is determined for the world, and is preferably determined for each world object in stage 6. In stage 7, a grade is determined for the effect of each action.

In stage 8, the state of the objects and hence of the world is determined, as is the overall accumulated reward of an action. In stage 9, the effect of the action is simulated on the intelligent agent; preferably the effect between the intelligent agent and each world object is also considered in stage 10.

Turning now to the left branch of the method, in stage 11, all of this information is preferably used to determine the action path with the highest reward. In stage 12, the action is generated. In stage 13, the action priority is set, preferably according to the action grade or reward. In stage 14, the action is placed in a queue at the action manager, as for Figure 9A. In stage 15, the action is considered by the action manager according to priority; the highest priority action is selected, and is preferably executed in stage 16.

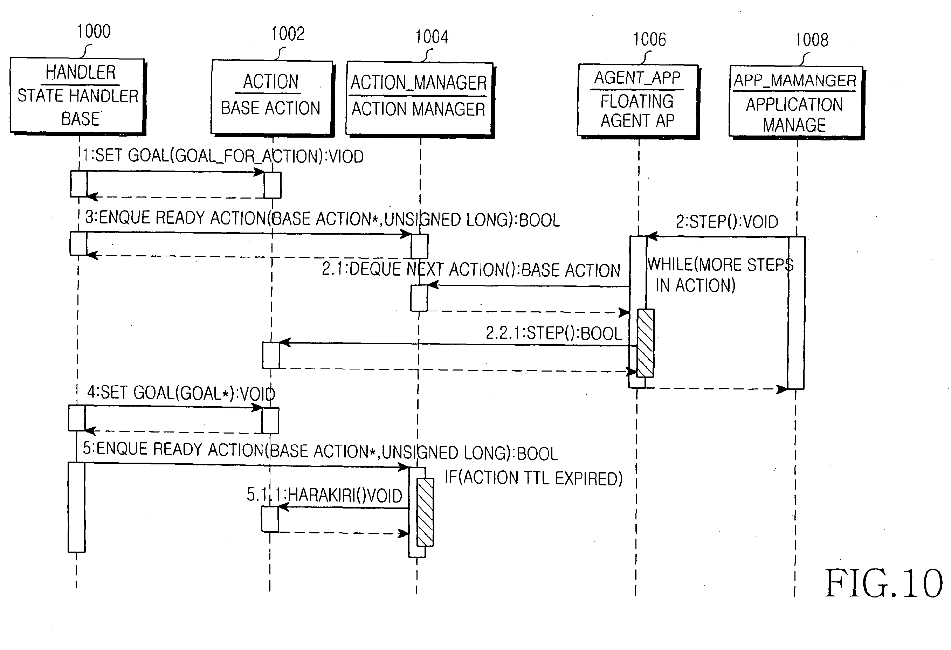

Next, a description is provided of an exemplary action execution method and structure. Figure 10 shows a sequence diagram of an exemplary action execution method according to the present invention. A handler **1000** send a goal for an action to an action module **1002** in arrow 1, which preferably features a base action interface. The base action interface enables action module **1002** to communicate with handler **1000** and also with other objects in the system, which are able to generate and post actions for later execution by the intelligent agent, shown here as a FloatingAgentApp **1006**. These actions are managed by an action manager **1004**.

Action manager **1004** has two queues containing action objects. One queue is the ready for execution queue, while the other queue is the pending for execution queue. The latter queue may be used for example if an action has been generated, but the internal state of the action is pending so that the action is not ready for execution. When the action state matures to be ready for execution, the action is preferably moved to the ready for execution queue.

An application manager **1008** preferably interacts with FloatingAgentApp **1006** for executing an action, as shown in arrow 2. FloatingAgentApp **1006** then preferably requests the next action from action manager **1004** (arrow 2.1); the action itself is preferably provided by action module **1002** (arrow 2.2.1). Actions are preferably enqueued from handler **1000** to action manager **1004** (arrow 3). Goals (and hence at least a part of the priority) are preferably set for each action by communication between handler **1000** and action module **1002** (arrow 4). Arrows 5 and 6 show the harakiri () method, described in greater detail below.

As previously described, the actions are preferably queued in priority order. The priority is preferably determined through querying the interface of action module **1002** by action manager **1004**. The priority of the action is preferably determined according to a calculation which includes a plurality of parameters. For example, the parameters preferably include the priority as derived or inferred by the generating object, more preferably based upon the predicted probability for the success of the action; the persistent priority for this type of action, which preferably is determined according to past experience with this type of action (for example according to user acceptance and action success); and the goal priority, which is preferably determined according to the user preferences.

One optional calculation for managing the above parameters is as follows:

$$P(all) = P(action\ probability) * ((P(persistent\ priority) + P(action\ goal)/10))/2)$$

Complementary for the priority based action execution, each action referably has a Time To Live (ttl) period; this ttl value stands for the amount of execution time passed between the action was posted in the ready queue and the expiration time of this action. If an action is ready but does not receive priority for execution until its ttl has expired, action manager **1004** preferably invokes the method harakiri(), which notifies the action that it will not be executed. Each such invocation of harakiri() preferably decreases the priority of the action until a threshold is reached. After this threshold has been reached, the persistent priority preferably starts to increase. This model operates to handle actions that were proposed or executed but failed since the user aborted the action. The persistent priority decreases by incorporating the past experience in the action priority calculation.

This method shows how actions that were suggested or executed adapt to the specific user's implicit preferences in runtime.

This model is not complete without the harakiri() mechanism since if an action persistent priority reduces, so the action does not run, it needs to be allowed to either be removed or else possibly run again, for example if the user preferences change. After several executions of harakiri(), the action may regain the priority to run.

The previous Sections provide infrastructure, which enables various actions and mechanisms to be performed through the adaptive system of the present invention. These actions and mechanisms are described in greater detail below.

Section 3: Emotional System

This Section describes a preferred embodiment of an emotional system according to the present invention, including but not limited to a description of specific emotions and their intensity, which preferably combine to form an overall mood. The emotional system preferably also includes a mechanism for allowing moods to change as well as for optionally controlling one or more aspects of such a change, such as the rate of change for example.

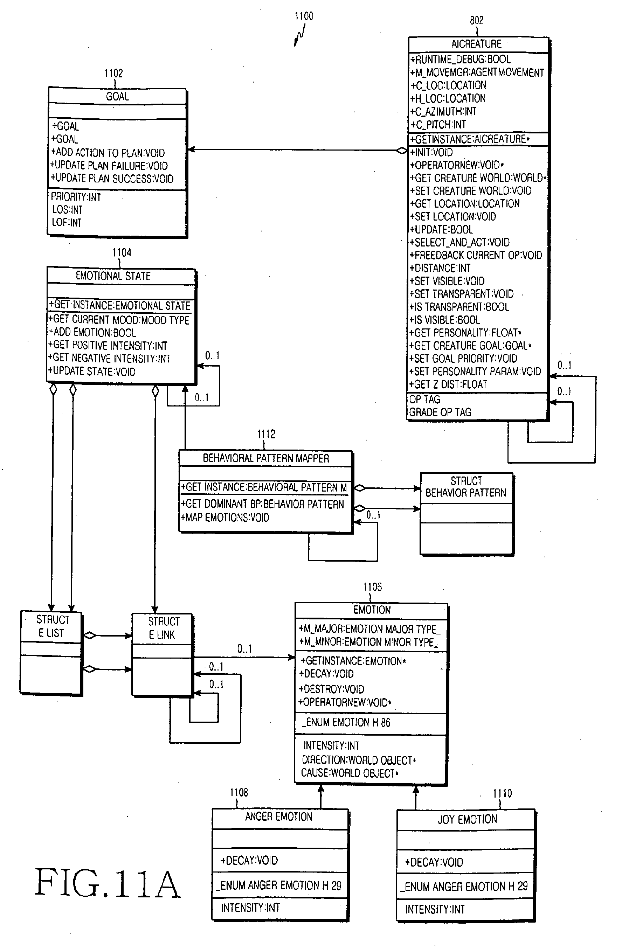

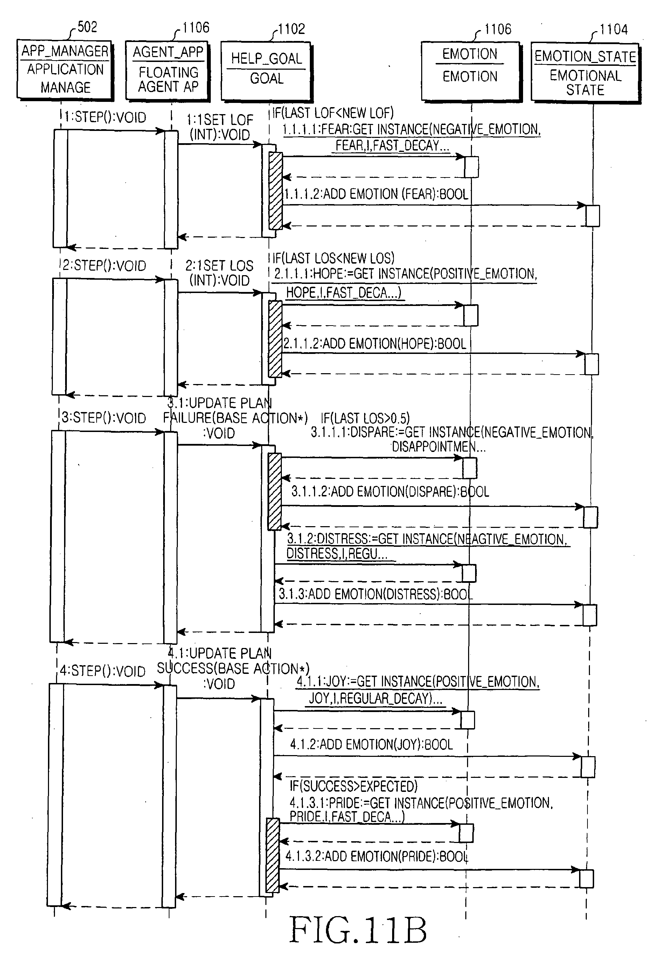

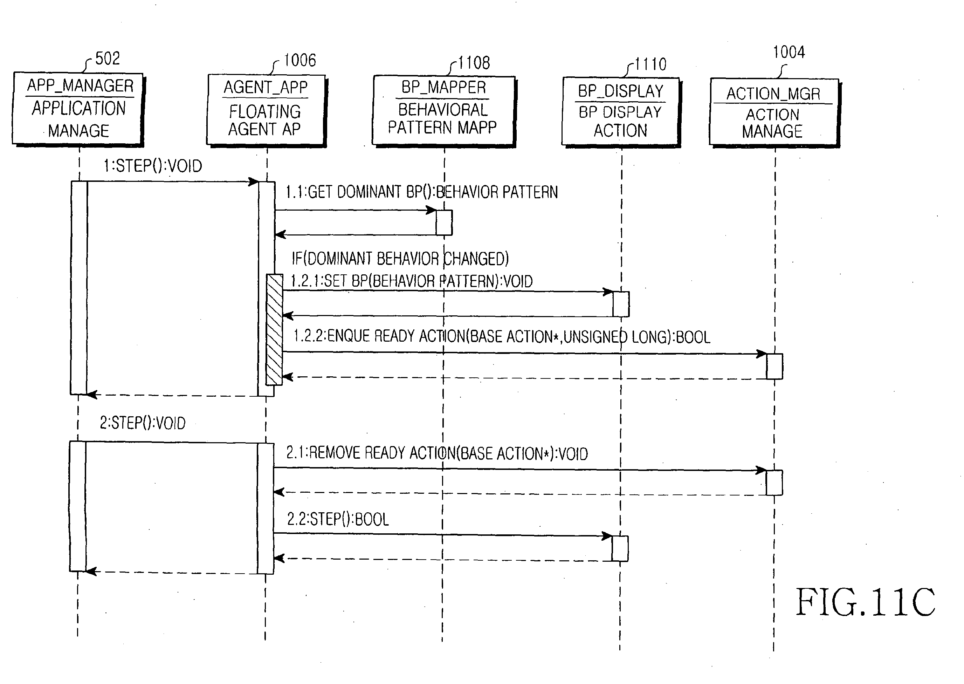

Figures 11A-11C feature diagrams for describing an exemplary, illustrative implementation of an emotional system according to the present invention. Figure 11A shows an exemplary class diagram for the emotional system, while Figures 11B and 11 C show exemplary sequence diagrams for operation of the emotional system according to the present invention.

As shown with regard to an emotional system **1100** according to the present invention, the goal class (goal **1102**) represents an abstract goal of the intelligent agent. A goal is something which the intelligent agent performs an action to achieve. Goal **1102** is responsible for creating emotions based on certain events that are related to the state of the goal and its chances of fulfillment.

Goal **1102** interacts with AICreature **802** (also previously described with regard to Figure 8). These interactions are described in greater detail below. Briefly, the intelligent agent seeks to fulfill goals, so the interactions between AICreature **802** are required in order to determine whether goals have been fulfilled, which in turn impact the emotional state of the intelligent agent.

The emotional state itself is handled by the class EmotionalState **1104,** which in turn is connected to the class Emotion **1106.** Emotion **1106** is itself preferably connected to classes for specific emotions such as the anger class AngerEmotion **1108** and the joy class JoyEmotion **1110**. EmotionalState **1104** is also preferably connected to a class which determines the pattern of behavior, BehavioralPatternMapper **1112.**

The creation of emotion is preferably performed through the emotional system when the likelihood of success (LOS) increases or decreases and when the likelihood to fail (LOF) increases or decreases. When LOS increases, then the hope emotion is preferably generated. When LOS decreases, the despair emotion is preferably generated. When LOF increases, the fear emotion is preferably generated, and when LOF decreases, then the joy emotion is preferably generated.

Success or failure of a goal has a significant effect on the goal state and generated emotions. When a goal fails, despair is preferably generated, and if the likelihood of success was high, frustration is also preferably generated (since expectation of success was high).

When a goal succeeds, joy is preferably generated, and if expectation and accumulated success were high, then pride is preferably generated.

Emotion 1106 is a structure that has two properties, which are major and minor types. The major type describes the high level group to which the minor emotion belongs, preferably including POSITIVE_EMOTION and NEGATIVE_EMOTION. Minor types preferably include JOY, HOPE, GLOAT, PRIDE, LIKE, ANGER, HATE, FEAR, FRUSTRATION, DISTRESS, DISAPPOINTMENT. Other properties of the emotion are the intensity given when generated, and the decay policy (ie the rate of change of the emotion).

The next phase after emotion generation is performed by the EmotionalState class 1104 that accumulates emotions which were generated over time by the intelligent agent. This class represents the collection of emotion instances that defines the current emotional state of the intelligent agent. The current emotional state is preferably defined by maintaining a hierarchy of emotion types, which are then generalized by aggregation and correlation. For example, the minor emotions are preferably aggregated into a score for POSITIVE_EMOTION and a score for NEGATIVE_EMOTION; these two categories are then preferably correlated to GOOD/BAD MOOD, which describes the overall mood of the intelligent agent.

The EmotionalState class **1104** is queried by the intelligent agent floating application; whenever the dominant behavior pattern changes (by emotions generated, decayed and generalized in the previously described model), the intelligent agent preferably expresses its emotional state and behaves according to that behavioral pattern. The intelligent agent optionally and preferably expresses its emotional state using one or more of the text communication engine (described in greater detail below), three dimensional animation, facial expressions, two dimensional animated effects and sounds.

Figure 11B shows an exemplary sequence diagram for generation of an emotion by the emotional system according to the present invention. As shown, application manager **502** (described in greater detail with regard to Figure 5) sends a step to FloatingAgentApp **1006** (described in greater detail with regard to Figure 10) in arrow 1. FloatingAgentApp **1006** then determines the LOF (likelihood of failure) by querying the goal class **1102** in arrow 1.1. Goal **1102** then determines the LOF; if the new LOF is greater than the previously determined LOF, fear is preferably generated by a request to emotion class **1106** in arrow 1.1.1.1. The fear emotion is also added to the emotional state by communication with EmotionalState **1104** in arrow 1.1.1.2.

Next, application manager **502** sends another step (arrow 2) to FloatingAgentApp **1006**, which determines the LOS (likelihood of success) by again querying Goal **1102** in arrow 2.1. Goal **1102** then determines the LOS; if the new LOS is greater than the previously determined LOS, hope is preferably generated by a request to emotion class **1106** in arrow 2.1.1.1. The hope emotion is also added to the emotional state by communication with EmotionalState **1104** in arrow 2.1.1.2.

Arrow 3 shows application manager **502** sending another step to FloatingAgentApp **1006**, which requests determination of emotion according to the actual outcome of an action. If the action has failed and the last LOS was greater than some factor, such as 0.5, which indicated that success was expected, then FloatingAgentApp **1006** causes Goal **1102** to have despair generated by Emotion **1106** in arrow 3.1.1.1. The despair emotion is also added to the emotional state by communication with EmotionalState **1104** in arrow 3.1.1.2. Also, if the action failed (preferably regardless of the expectation of success), distress is preferably generated by Emotion **1106** in arrow 3.1.2. The distress emotion is also added to the emotional state by communication with EmotionalState **1104** in arrow 3.1.3.

Next, application manager **502** sends another step (arrow 4) to FloatingAgentApp **1006**, which updates emotions based on actual success by sending a message to Goal **1102** in arrow 4.1. Goal **1102** then preferably causes joy to preferably be generated by a request to emotion class **1106** in arrow 4.1.1. The joy emotion is also added to the emotional state by communication with EmotionalState **1104** in arrow 4.1.2.

If actual success is greater than predicted, then Goal **1102** preferably causes pride to be generated by a request to emotion class **1106** in arrow 4.1.3.1. The pride emotion is also added to the emotional state by communication with EmotionalState **1104** in arrow 4.1.3.2.

Figure 11C shows an exemplary sequence diagram for expressing an emotion by the emotional system according to the present invention. Such expression is preferably governed by the user preferences. Application manager **502** initiates emotional expression by sending a step (arrow 1) to FloatingAgentApp **1006**, which queries bp_mapper **1108** as to the behavioral pattern of the intelligent agent in arrow 1.1. If the dominant behavior has changed, then FloatingAgentApp **1006** sends a request to bp_display **1110** to set the behavioral pattern (arrow 1.2.1). Bp_display **1110** controls the actual display of emotion. FloatingAgentApp **1006** then requests an action to be enqueued in a message to action manager **1004** (arrow 1.2.2).

Application manager **502** sends another step (arrow 2) to FloatingAgentApp **1006,** which requests that the action be removed from the queue (arrow 2.1) to action manager **1004,** and that the action be performed by bp_display **1110.**

Section 4: Communication with the User

This Section describes a preferred embodiment of a communication system for communication with the user according to the present invention, including but not limited to textual communication, audio communication and graphical communication. For the purpose of description only and without any intention of being limiting, textual communication is described as an example of these types of communication.

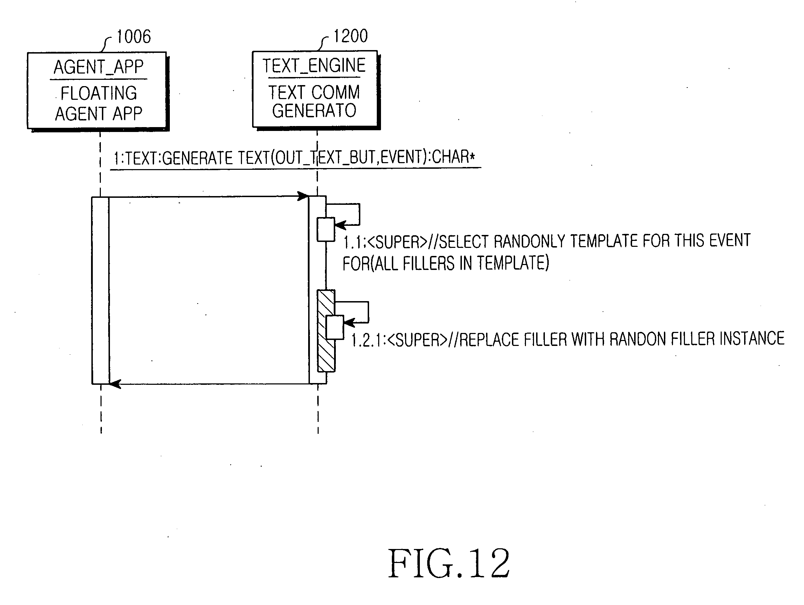

Figure 12 shows an exemplary sequence diagram for textual communication according to the present invention. A text engine **1200** is responsible for generating text that is relevant to a certain event and which can be communicated by the intelligent agent. Text engine **1200** preferably includes a natural language generation of sentences or short phrases according to templates that are predefined and contain place holders for fillers. Combining the templates and the fillers together enable text engine **1200** to generate a large number of phrases, which are relevant to the event to which the template belongs.

This framework is optionally extensible for many new and/or changing events or subjects because additional templates can also be added, as can additional fillers.

As shown in Figure 12, FloatingAgentApp **1006** communicates with text engine **1200** by first sending a request to generate text, preferably for a particular event (arrow 1). Text engine **1200** preferably selects a template, preferably from a plurality of templates that are suitable for this event (arrow 1.1). Text engine **1200** also preferably selects a filler for the template, preferably from a plurality of fillers that are suitable for this event (arrow 1.2.1). The filled template is then returned to FloatingAgentApp **1006.**

The following provides an example of generation of text for a mood change event, which is that the intelligent agent is now happy, with some exemplary, non-limiting templates and fillers. The templates are optionally as follows:

Happy template 1:     "%noun1 is %happy_adj2"
Happy template 2:     "%self_f_pronoun %happy_adj1"

The fillers are optionally as follows:

%noun1 = {"the world", "everything", "life", "this day", "the spirit"}
%happy_adj1 = {"happy", "joyful", "glad", "pleased", "cheerful", "in high spirits", "blissful", "exultant", "delighted", "cheery", "jovial", "on cloud nine" }
%happy_adj2 = {"nice", "beautiful", "great", "happy", "joyful", "good", "fun"}
%self_f_pronoun = {"I am", "I'm", "your intelligent agent", "your agent friend"}

Examples of some resultant text communication phrases from combinations of templates and fillers:

I'm cheerful
the spirit is joyful
I am exultant
life is beautiful
life is good
I'm pleased
I'm jovial
I am joyful
the world is joyful
I'm glad
the spirit is joyful
the spirit is happy
the world is nice
I am happy

As another non-limiting example, a missed call template could optionally be constructed as follows:

%user missed a call from %missed %reaction

In this example, the user's name is used for %user; the name or other identifier (such as telephone number for example) is entered to %missed; %reaction is optional and is used for the reaction of the intelligent agent, such as expressing disappointment for example (e.g. "I'm sad").

As shown by these examples, text engine **1200** can generate relevant sentences for many events, from missed call events to low battery events, making the user's interaction with the mobile information device richer and more understandable.

Section 5: Adaptive System for Telephone Calls and SMS Messages

This Section describes a preferred embodiment of an adaptive system for adaptive handling of telephone calls and SMS messages according to the present invention. This description starts with a general description of some preferred algorithms for operating with the system according to the present invention, and then describes the telephone call handling and SMS message handling class and sequence diagrams.

### Smart Alternative Number (SAN)

The SAN algorithm is designed to learn the alternative number most likely to be dialed after a call attempt has failed. The algorithm learns to create these pairs and then is able to dynamically adapt to new user behavior. These associated pairs are used to suggest a number to be called after a call attempt by the user has failed.

This algorithm may optionally be implemented as follows: Insert most frequently used items to the first layer (optionally insertions occur after the item frequency is bigger than a predefined threshold); Suggest associated pair to a phone number, preferably according to frequency of the pair on the list; Determine call success or failure; and Hold a window of the history of determined pairs per number, such that the oldest may optionally be deleted.

The knowledge base for this algorithm may optionally be represented as a forest for each outgoing number, containing a list of alternative / following phone calls and/or other actions to be taken. For each outgoing call, the next call is preferably considered as following, if the first call fails and the second call was performed within a predefined time-period. The following call telephone number is added to the list of such following call numbers for the first telephone number. When the list is full, the oldest telephone number is preferably forgotten.

### Smart Phonebook Manager (SPBM)

The SPBM system is a non-limiting example of an intelligent phonebook system that uses mobile information device usage statistics and call statistics to learn possible contacts relations and mutual properties. This system provides several new phonebook features including but not limited to automated contact group creation and automated contact addition/removal.

For example, an automated group management algorithm is preferably capable of automatically grouping contact telephone numbers according to the usage of the user.

*Automated State Detection (ASD)*

The ASD system preferably enables the mobile information device to determine the user current usage state (e.g. Meeting, User away) and to suggest changes to the UI, sound and the AI behavior systems to suit the current state (e.g. activate silent mode for incoming telephone calls and/or send an automated SMS reply "In meeting"). Optionally and preferably, this system is in communication with one or more biological sensors, which may optionally and preferably sense the biological state of the user, and/or sense movement of the user, etc. These additional sensors preferably provide information which enables the adaptive system to determine the correct state for the mobile information device, without receiving specific input from the user and/or querying the user about the user's current state. Images captured by a device camera could also optionally be used for this purpose.

Another optional type of sensor would enable the device to identify a particular user, for example through fingerprint analysis and/or other types of biometric information. Such information could also optionally be used for security reasons.

The meeting mode advisor algorithm is designed to help the user manage the do-not-disturb mode. The algorithm has a rule base that indicates the probability that the user is in a meeting mode and does not want to be disturbed, as opposed to the probability that the user has not changed the mode but is ready to receive calls. The algorithm's purpose is to help manage these transitions.

The algorithm preferably operates through AI state handlers, as previously described, by determining the phone world state and also determining when the rule base indicates that meeting mode should be suggested (e.g. user stopped current call ring and didn't answer the call ..etc'). The StateHandlers also preferably listen to the opposite type of events which may indicate that meeting mode should be canceled.

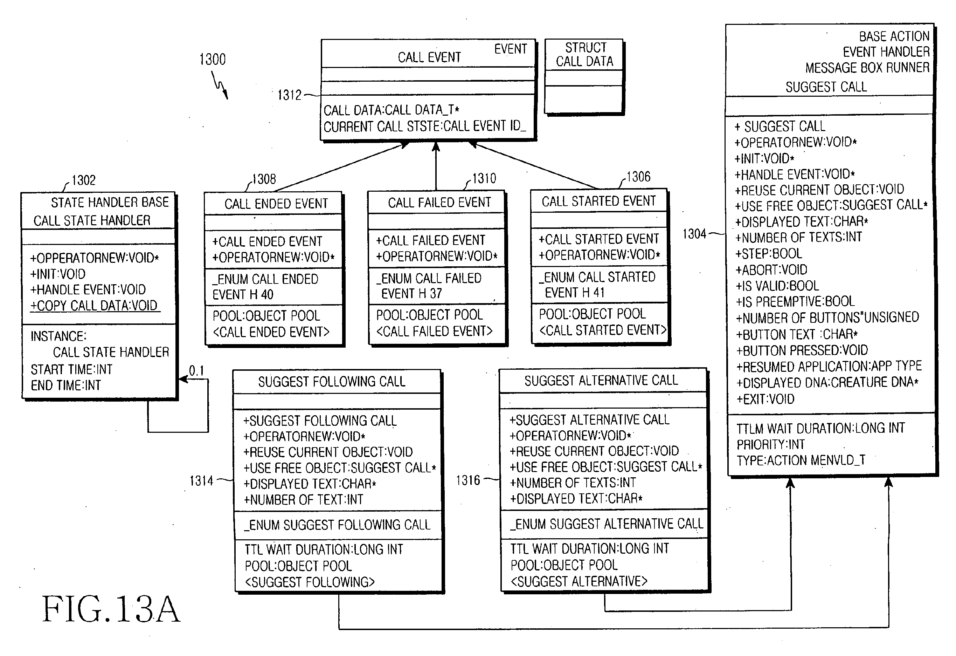

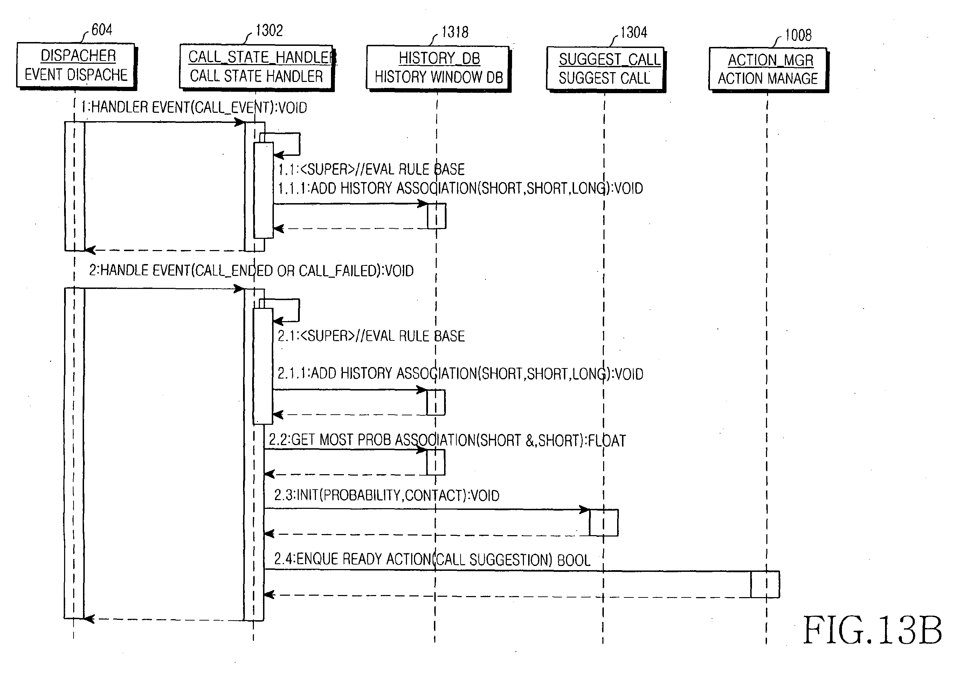

Figures 13A and 13B show an exemplary class diagram and an exemplary sequence diagram, respectively, for telephone call handling according to the present invention.

As shown with regard to Figure 13A, a telephone call handling class diagram **1300** features a CallStateHandler **1302,** which is responsible for the generation of SuggestCall actions by SuggestCall class **1304.** CallStateHandler **1302** is preferably a rule based algorithm that listens to call events such as CallStartedEvent **1306,** CallEndedEvent **1308** and CallFailedEvent **1310;** each of these events in turn communicates with a CallEvent **1312** class. CallStateHandler **1302** also preferably maintains a rule base that is responsible for two major functions: Machine Learning, which maintains the call associations knowledge base; and the AI probability based inference of whether to suggest a number for a telephone call to the user (these suggestions are preferably handled through SuggestFollowingCall **1314** or SuggestAlternativeCall **1316**).

The call event objects are generated using the event model as previously described, again with a hook function in the operating system of the mobile information device. The call data is preferably filled if possible with information regarding the generated event (telephone number, contact name, start time, duration, etc').

The suggest call classes (reference numbers **1304, 1314** and **1316**) implement the base action interface described in the adaptive action model. The responsibility of these classes is to suggest to the user a telephone number for placing a following call after a telephone call has ended, or for an alternative telephone call after a telephone call has failed.

CallStateHandler **1302** listens to call events and classifies the event according to its rule base (action selection using a rule base strategy). An example of an illustrative, optional call suggestion rule base is given as follows:

1. if a telephone call started and no prior telephone call marked → mark call as started
2. if the telephone call ended and call was marked as started → mark as first telephone call
3. if a telephone call started and the prior telephone call was marked as first call and the time between calls < following call threshold → mark as following call
4. if marked call as following → update knowledge base
5. if marked call as following → mark call as first call (this resets the current first telephone call for comparison to the next telephone call)
6. if call failed and prior call marked as call started → mark call as first failed
7. if call started and prior call marked as first failed and time between calls < failed call threshold → mark as alternative call
8. if marked as alternative call → update knowledge base
9. if call ended and time since end call < suggest following call threshold and inferred following call → generate suggested following telephone call action (e.g. an action to be taken after the telephone call)
10. if call failed and time since failed call < suggested alternative call threshold and inferred following call → generate suggested alternative telephone call action
11. if time from last mark > threshold → unmark all calls

The call suggestion knowledge base is optionally and preferably designed as a history window, in which associations are added as occurrences in the history of the subject. In this case, the associated subject for an alternative or following telephone call for a certain contact is the contact itself, and all associated calls are preferably located by occurrence order in the alternative telephone call or following telephone call history window.

For example for the contact telephone number 054-545191, the call associations in the history window may optionally be provided as follows:

054-545191 →

052-552211

052-552211

051-897555

051-897555

052-552211

051-546213

052-552211

051-546213

052-552212

052-552211

The history window size is preferably defined by the algorithm as the number of assocations (occurrences) which the algorithm is to manage (or remember). If the history window is full, the new occurrence is preferably added in the front and the last one is then removed, so that the window does not exceed its defined size. This knowledge base is able to adapt to changes in the user patterns since old associations are removed (forgotten) in favor of more up to date associations.

The knowledge base is not enough to suggest alternative or following calls, as a good suggestion needs to be inferred from the knowledge base. The inference algorithm is preferably a simple probability based inference, for determining the most probable association target according to the knowledge base. Given the following parameters:

$C_0$ - contact
$H_0(Ci)$ - the number of times contact $C_i$ can be found in $C_0$ history window
$H_{size}$ - history window size

The method preferably suggests contact i such that:

$$P(C_i) = Max(H_0(C_i) / H_{size})$$

In the example above for $C_0$ = 054-545191:

P(052-552211) is maximal and = 0.6

The inference process is considered to be successful only if it can infer a probability that is more than %50 and preferably also if the history window is full.

Figure 13B shows an exemplary sequence diagram for telephone call handling. As shown, EventDispatcher **604** (described in greater detail in Figure 6) sends a notification of a call event to CallStateHandler **1302** (arrow 1), which then evaluates the rule base (arrow 1.1). A request to add an association to HistoryWindow **1318** is made (arrow 1.1.1).

For a call ended or failed event, EventDispatcher **604** sends a notification to CallStateHandler **1302** (arrow 2), which then evaluates the rule base (arrow 2.1). A request to add an association to HistoryWindow **1318** is made (arrow 2.1.1). A request to receive a probable association from HistoryWindow **1318** is made (arrow 2.2). This probable association represents a telephone number to call, for example, and is sent from CallStateHandler **1302** to SuggestCall **1304** (arrow 2.3). The action is enqueued by action manager **1008** (arrow 2.4).

Another optional but preferred algorithm helps the user to manage missed calls and the call waiting function. This algorithm targets identifying important calls that were missed (possibly during call waiting) and suggests intelligent callback. This callback is suggested only to numbers that were identified by the user (or the knowledge base) as important.

The knowledge base is based on two possible (complementary) options. The first option is explicit, in which the user indicates importance of the call after it has been performed and other information in extended address book field. The second implicit option is given by frequency of the call and other parameters.

The algorithm may suggest a callback if the callback number is important and the user did not place the call for a period of time and/or the target number has not placed an incoming call.

### Content-based SMS Addressee Inference (CSAI)

The CSAI algorithm is designed to optionally and preferably predict a message addressee by the content of the message. This algorithm preferably learns to identify certain word patterns in the message and to associate them to an existing address book contact. This contact is suggested as the message destination upon message completion.

This algorithm may optionally operate according to one or more rules, which are then interpreted by a rule interpreter. The adaptive system (for example, through learning module) would preferably learn a table of (for example) 1000 words. Each new word appearing in an outgoing SMS message is added to the list. For each word there is an entry for each SMS contact (i.e. contacts for which at least one SMS message was sent). Each word/contact entry contains the number of times that the word appeared in SMS messages to this contact, preferably with the number of SMS messages sent to each contact.

In order for the inference mechanism to work, preferably for each word W in the current SMS message and for each contact C, the probability that P(C|W) is calculated, based on P(W|C) given in the table and P(C) also computed from the table. Then the number of terms normalized by the number of words in the current SMS message is added.

The SMS handling method is targeted at analyzing the SMS message content and inferring the "send to" address. The algorithm optionally and preferably uses the following heuristics, with specific indicating words that reappear when sending a message to a specific addressee.

Each new word appearing in an outgoing SMS message is added to the list. For each word there is an entry for each SMS contact (i.e. contacts for which at least one SMS was sent). Each word/contact entry contains the number of times that the word appeared in SMS to this contact. Also, preferably the number of SMS sent to each contact is stored. Learning preferably occurs by updating the word table after parsing newly sent SMS messages.

The AI inference method preferably operates with simple probability as previously described.

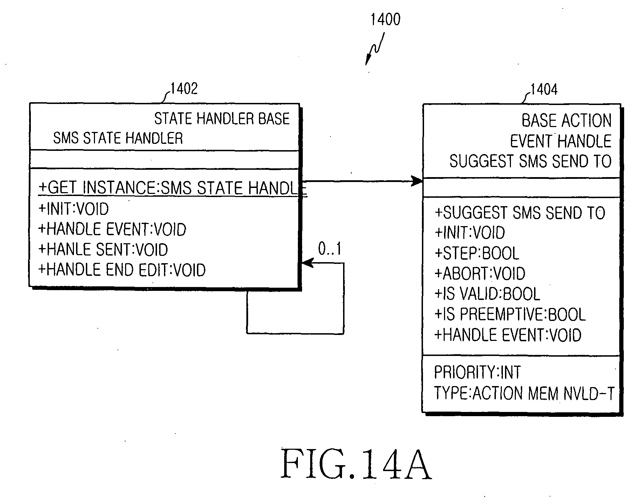

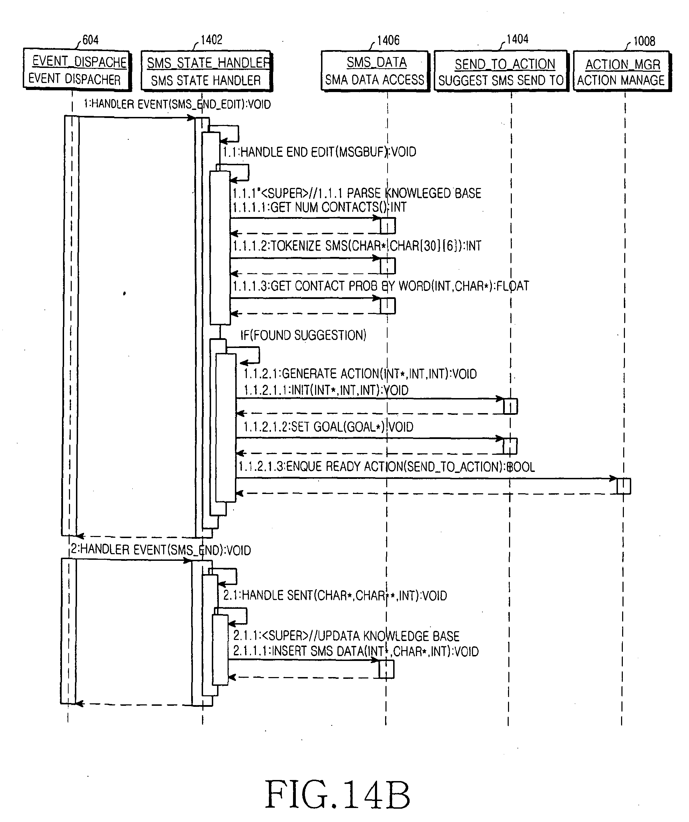

Figures 14A and 14B describe illustrative, non-limiting examples of the SMS message handling class and sequence diagrams, respectively, according to the present invention.

Figure 14A shows an exemplary SMS message handling class diagram **1400** according to the present invention. A SMSstateHandler **1402** class and a SuggestSMStoSend **1404** class are shown. SMSstateHandler **1402** is responsible for receiving information about the state of sending an SMS; SuggestSMStoSend **1404** is then contacted to suggest the address (telephone number) to which the SMS should be sent.

Figure 14B shows an exemplary sequence diagram for performing such a suggestion. EventDispatcher **604** (see Figure 6 for a more detailed explanation) sends a notification to SMSstateHandler **1402** about an SMS event (arrow 1). SMSstateHandler **1402** starts by parsing the knowledge base (arrow 1.1.1); a request is then sent to SMSdata **1406** for information about contacts (arrow 1.1.1.1). The SMS is preferably tokenized (e.g. parsed) in arrow 1.1.1.2, and a suggested contact address is requested from SMSdata **1406** (arrow 1.1.1.3).

If a suggested contact address is obtained, SMSstateHandler **1402** preferably generates an action, which is sent to SuggestSMStoSend 1404 (arrow 1.1.2.1.1), followed by setting a goal for this action (arrow 1.1.2.1.2) and enqueueing the action (arrow 1.1.2.1.3) by sending to action manager **1008** (see Figure 10 for a more detailed explanation).

Once the SMS has been sent, notification is sent from EventDispatcher **604** to SMSstateHandler **1402** (arrow 2), which handles this state (arrow 2.1), preferably including updating the knowledge base (arrow 2.1.1) and inserting the new SMS data therein (arrow 2.1.1.1, in communication with SMSdata **1406**).

Section 6: Adaptive System for Menus

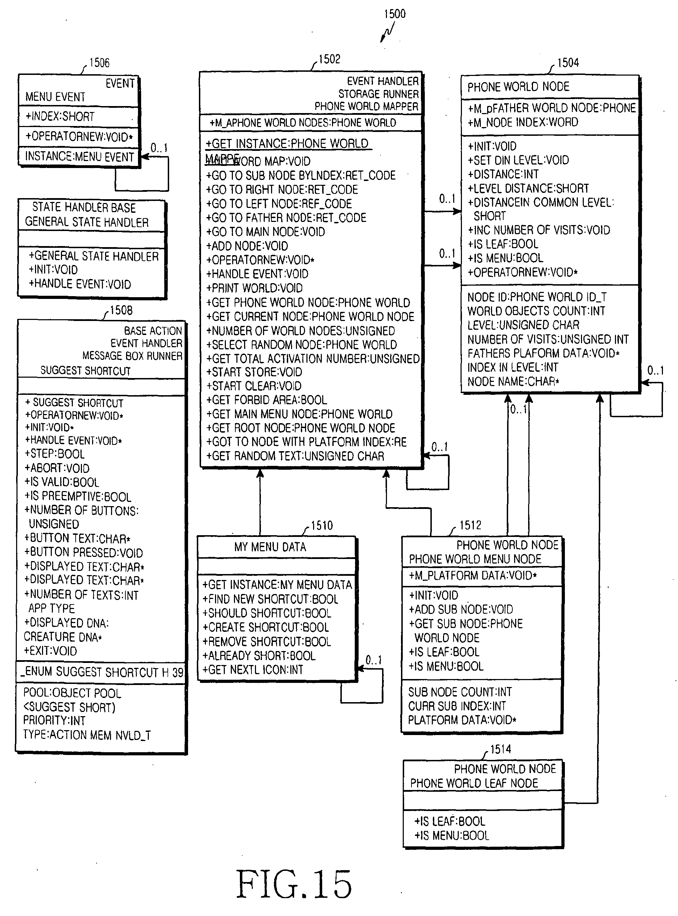

This Section describes a preferred embodiment of an adaptive system for adaptive handling of menus according to the present invention. A general description of an algorithm for constructing, arranging and rearranging menus is first described, followed by a description of an exemplary menu handling class diagram (Figure 15).

The adaptive menu system is based on the ability to customize the menu system or the human user interface provided with the operating system of the mobile information device by using automatic inference. All operating systems with a graphical user interface have a menu, window or equivalent user interface system. Many of the operating systems have an option to manually or administratively customize the menu system or window system for the specific user. The system described provides the possibility to automatically customize the user interface. Automatic actions are generated by the described system (possibly with user approval or automatically). The system uses the menu system framework and provides abstractions needed and the knowledge base needed in order to infer the right customization action and to provide the ability to automatically use the customization options provided with the operating system.

***Intelligent Menu assembler (IMA)***

The IMA algorithm is designed to dynamically create UI (user interface) menus based on the specific user preferences and mobile information device usage. The algorithm preferably identifies the telephone usage characteristics and builds a special personal menu based on those characteristics.

This algorithm may in turn optionally feature two other algorithms for constructing the menu. The automatic menu shortcut menu algorithm is targeted at generating automatic shortcuts to favorite and most frequently used applications and sub applications. This algorithm focuses on improving the manual manner that was not used by most of the users to set up their personal shortcut menu. For the Knowledge Base and Learning, the PhoneWorldMapper accumulates executions of applications and sub applications and uses that knowledge to infer which application / sub-application should be get a menu shortcut in the personal menu option and set it up for the user.

The shortcut reasoning is based on the following utility function: the frequency of used application weighted by the amount of clicks needed saved by the shortcut (clicks in regular menu - (minus) the clicks in the shortcut). The highest utility application/sub-application/screen provides the suggestion and shortcut composition to the user.

Another such menu algorithm may optionally include the automatic menu reorganizing algorithm. This algorithm is targeted at the lack of personalization in the menu system. Many users differ in the way they use the phone user interface but they have the same menu system and interface. This algorithm learns the user specific usage and reorganize the menu system accordingly, more preferably providing a complete adaptive menu system.

For the knowledge base, the PhoneWorldMapper accumulates executions of applications and sub applications, as well as saving the number of clicks to the specific target. The phone world mapper will give a hierarchical view that is used when adding items to the same menu. Inside a menu the items are organized by their utility.

Periodically, the menu system is preferably evaluated whether it is optimal to the user (by the parameters defined above), optionally followed by reorganization according to the best option inferred.

Figure 15 shows an adaptive menu system class diagram **1500**. This class diagram provides the necessary abstraction through a PhoneWorldMapper **1502** class and a PhoneWorldNode **1504** class. PhoneWorldMapper **1502** is responsible to map the menu and user interface system. This mapping is done with PhoneWorldNode **1504.** Phone-WorldNode **1504** represents a menu, a submenu or a menu item in a graph structure.

PhoneWorldMapper **1502** preferably contains a graph of PhoneWorldNode **1504** objects; the edges are menu transitions between the nodes and the vertices are the mapped menus and items. Whenever the user navigates in the menu system, PhoneWorldMapper **1502** follows through the objects graph of PhoneWorldNode **1504** objects, and points it to the correct location of the user. Whenever the user activates a certain item, the current node preferably records this action and count activations. PhoneWorldMapper **1502** also provides the present invention with the ability to calculate distance (in clicks) between each menu item and also its distance from the root, which is possible because of the graph representation of the menu system. Thus, PhoneWordMapper **1502** provides abstraction to the menu structure, menu navigation, menu activation and distance between items in the menu.

Class diagram **1500** also preferably includes a MenuEvent class **1506** for handling menu events and a SuggestShortcut **1508** for suggesting shortcuts through the menus. PhoneWordMapper **1502** is preferably in communication with a MyMenuData class **1510** for describing the personal use patterns of the user with regard to the menus, and a PhoneWorldMenuNode **1512** for providing menu nodes for the previously described graph. A PhoneWorldLeafNode **1514** is in communication with PhoneWorldNode **1504** also for supporting the previously described graph.

The system described provides thre levels of adaptive user interface algorithms. The first customization level preferably features a menu item activation shortcut suggestion algorithm. This algorithm monitors activations of items using PhoneWorldMapper **1502.** The algorithm monitors the average number of activations of a menu item. When a number of activations of a certain item is above a threshold (optionally above average), and the distance of the shortcut activation is shorter than that required for the item activation itself, a shortcut is preferably suggested. The user benefits from the automatic shortcut, since it reduces the number of operations that the user performs in order to activate the desired function. Building on this flow, the action generation is a rule based strategy that uses PhoneWorldMapper **1502** as its knowledge base. This algorithm automatically customizes user specific shortcuts.

The second customization level preferably includes menu item reordering. The algorithm monitors activations of items using PhoneWorldMapper **1502** and reorders the items inside a specific menu according to the number of activations, such that the most frequently used items appear first. This algorithm customizes the order of the menu items by adapting to the user's specific usage. This algorithm preferably uses the same knowledge base of activations as previous algorithm to reorder the menu items.

The third customization level preferably includes menu composition. The algorithm monitors the usage of the items and the menus, and selects the most used items. For these items, the algorithm selects the first common node in PhoneWorldMapper **1502** graph. This node becomes the menu and the most used items become the node's menu items. This menu is preferably located first in the menu system. This also changes the PhoneWorldMapper graph to a new graph representing the change in the menu system. This algorithm preferably iterates and constructs menus in descending item activation order.

Section 7: Adaptive System for Games

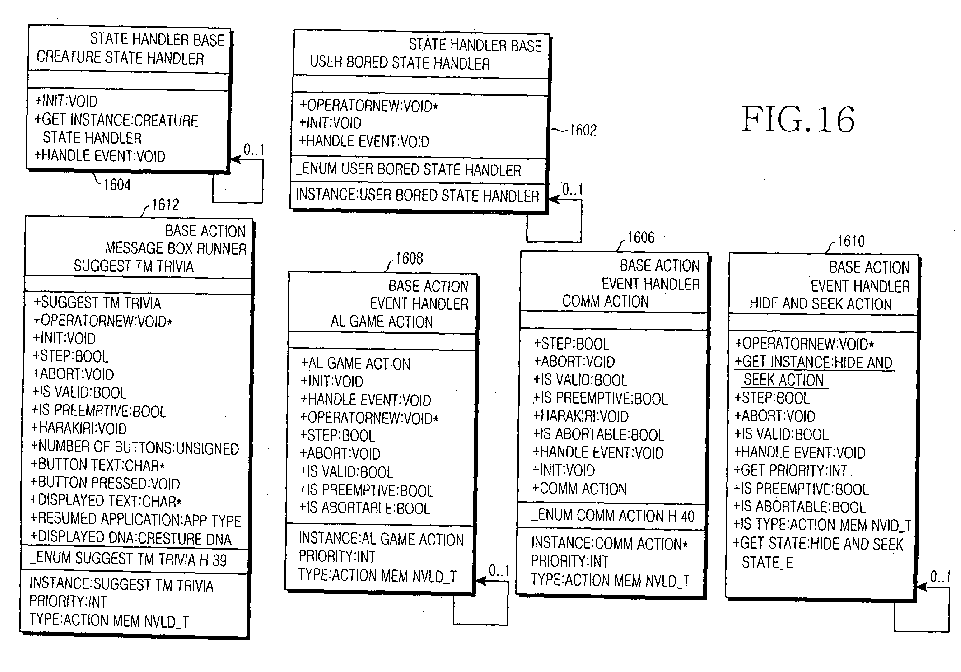

This Section describes a preferred embodiment of an adaptive system for games according to the present invention. An exemplary game class diagram according to the present invention is shown in Figure 16.

Some of the goals of the intelligent agent are optionally and preferably to entertain the user. Also the intelligent agent may optionally have personal goals, for example to communicate.

To manage states of these goals, the system preferably has two classes in game class diagram **1600,** Figure 16: UserBoredStateHandler **1602** and CreatureStateHandler **1604.** Both classes preferably generate actions according to a rule based strategy. The rules maintained by the classes above relate to the goals they represent. Both classes use the event model as input method for evaluation of the rules and the state change (i.e. both are event handlers).

As an Idle action (ie if not otherwise engaged), the intelligent agent preferably selects the MoveAction (not shown), which may also adapt to the user preferences, for example with regard to animations, sounds etc.

The MoveAction preferably first selects between MOVE state or REST state. The selection is probability based. In each state, the MoveAction chooses the appropriate animation for the state also based on probability. The probabilities are initialized to 50% for each option.

The user input affects the probability of the current selected pair (state, animation). If the user gives a bad input the probability of the state and of the current animation decreases, and for good input it increases. The probabilities preferably have a certain threshold for minimum and maximum values to prevent the possibility that a certain state or animation can never be selected.

A CommAction **1606** is also shown. This action is driven by the goal to communicate and is optionally generated by CreatureStateHandler **1604,** depending on the expressiveness and communication preferences of the user and the intelligent agent communication state. For example if the intelligent agent did not communicate with the user for some time, and the present is a good time to try tocommunicate with the user (according the state handler rule base), a communication action is preferably generated. This action may invoke vibrate and or sound, also text communication may optionally be used when possible.

A behavior display action is optionally and preferably driven by the emotional model; whenever an emotional state changes, the intelligent agent preferably expresses the new emotional state, optionally by using text, sound, two dimensional and three dimensional animations.

A GameAction **1608** preferably starts a game in the floating application space. This action optionally selects one or more objects from the virtual AI World application. The intelligent agent explores the object and act on it. For example a ball can be selected, after which the intelligent agent can move and kick the ball, the user may move the ball to a new place and so on. Some of the objects may optionally be wrapped user interface objects (described in the AI world application). This game action is preferably characterized in that it is only the intelligent agent that decides to select a possible action without the user's reinforcement.

The HideAndSeek action **1610** uses the PhoneWorldMapper ability to track the location of the user in the menu system and in the different host screens. The intelligent agent preferably selects a location in the menu tree and hides, after which the user navigates the menu system until the user finds the intelligent agent or the search time is over. After the user finds (or does not find) the intelligent agent, preferably a message is posted which tells the user something about the current location in the menu system and/or something helpful about the current screen. In this way the user may learn about features and other options available on the host platform. The helpful tool-tips are preferably available to the intelligent agent through the PhoneWorldNode that contains the tool-tips relevant to the specific node described by the object instance of that class.

A SuggestTmTrivia **1612** may optionally provide a trivia game to the user, preferably about a topic in which the user has expressed an interest.

Section 8: Teaching System

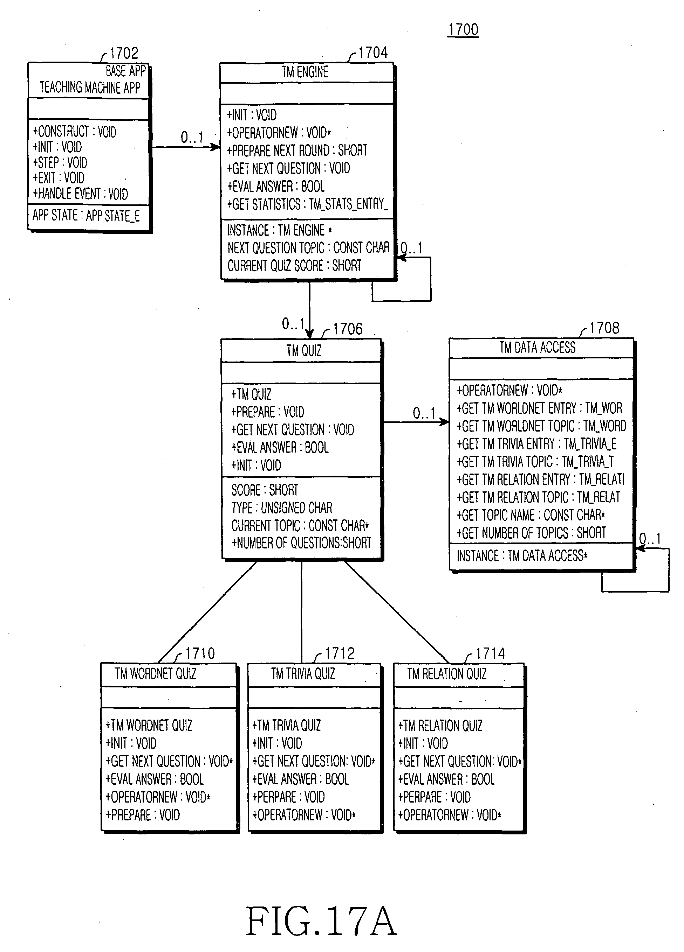

This Section describes a preferred embodiment of a teaching system according to the present invention, including but not limited to a preferred embodiment of the present invention for teaching the user about a subject that is not directly related to operation of the device itself. A general description of the teaching machine is provided, followed by a description of an optional but preferred implementation of the teaching machine according to Figures 17A (exemplary teaching machine class diagram) and 17B (exemplary teaching machine sequence diagram).

The previously described application layer preferably uses the infrastructure of the teaching system to create different teaching applications within the framework of the present invention.

The teaching machine is preferably able to handle and/or provide support for such aspects of teaching and learning as content, teaching logic, storage, updates, interactions with the intelligent agent (if present), lesson construction, pronunciation (if audible words are to be spoken or understood). The latter issue is particularly important for teaching languages, as the following data needs to be stored for each language: language definitions (name, character set, vowels, etc.); rules (grammar, syntax) and vocabulary. Preferably, a rule is a simple language element which can be taught by example and is also easily verified. Vocabulary is preferably defined as sets of words, in which each word set preferably has a level and may also optionally be categorized according to different criteria (such as work words, travel words, simple conversation words and so forth). Other important aspects include context, such that for each word w in the vocabulary there should be at least 3 contexts and relations, such that for each w1, w2, words in the vocabulary there should be a maximal set of relations. A relation is preferably defined as a set of 4 words w1 : w2 like w3 : w4.

The high level teaching machine architecture preferably includes a class called TMLanguage, which provides abstraction for the current TM language, allows extension capabilities for the entire TM infrastructure. There is also preferably a class defined as TMLesson, for organizing individual lessons, for example according to words in a set, rules, quizzes or practice questions, and so forth.

A lesson period is optionally defined to be a week. A lesson is composed of: a word set, which is the current vocabulary for this lesson; a rule set, which may include one or more rules taught by this lesson; practice for allowing the user to practice the material; and optionally a quiz.

Figure 17A shows an exemplary teaching machine class diagram **1700** for the teaching machine infrastructure, which is is designed to provide an extensible framework for generic and adaptive teaching applications. The application class TeachingMachineApp **1702** is responsible for providing the runtime and user interface for a quiz based application. The application preferably embeds a TMEngine **1704**, which is responsible for building the user profile (user model) in the examined field. For example if the general field is English vocabulary, TMEngine **1704** preferably learns the user's success rate in various sub-fields of the English vocabulary in terms of word relations, negation, function, topic and more.

After analyzing the user's performance in the various sub-fields of the general field being taught by the application, TMEngine **1704** preferably directs the application to test and improve the user's knowledge in the topics and sub-fields that the performance was weaker. TMEngine **1704** preferably runs cycles of user evaluation, followed by teaching and adapting to the user's performance, in order to generate quiz questions that are relevant to the new state of the user.

TMEngine **1704** also collects the user's performance over time and can optionally provide TeachingMachineApp **1702** with the statistics relevant to the user's success rate.

The extensible quiz framework is preferably provided by using abstraction layers and interfaces. TMEngine **1704** is preferably a container of quizzes; the quizzes may optionally be seamlessly since all the quizzes preferably implement TMQuiz **1706** standard interface. Each quiz can access and store its relevant database of questions, answers and user success rates using the TMDataAccess class **1708**. The quizzes and topic training aspects of the teaching machine are preferably separated, which allows the adaptive teaching application to operate with many different types of topics and to be highly extensible.

Examples of some different types of quizzes include a TMWordNet quiz **1710,** a TMTriviaQuiz **1712** and a TMRelationQuiz **1714.**

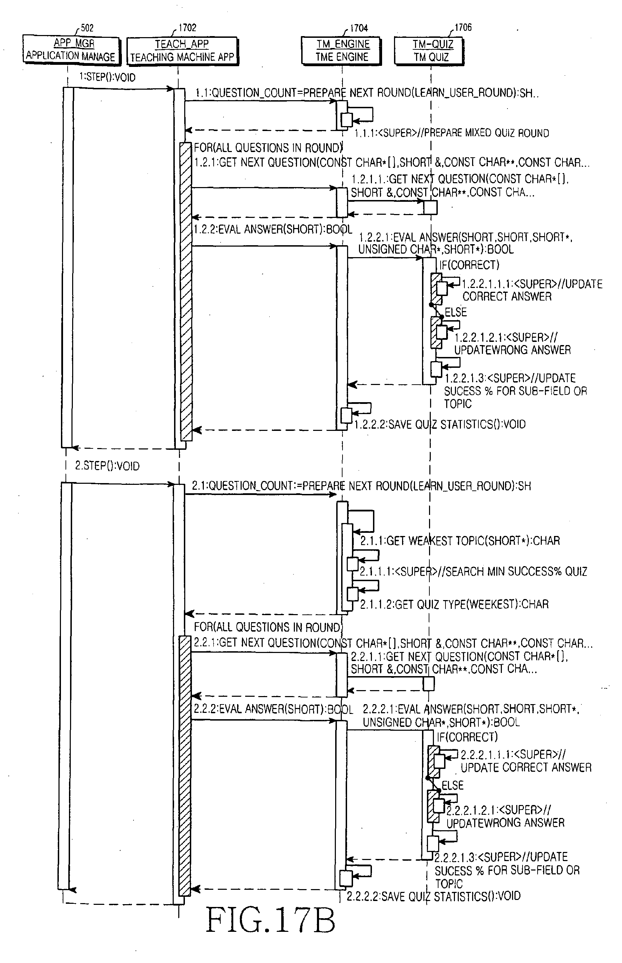

Figure 17B shows an exemplary teaching sequence diagram according to the present invention. Application manager **502** (described in greater detail with regard to Figure 5) sends a step to TeachingMachineApp **1702** (arrow 1). TeachingMachineApp **1702** then sends a request to TMEngine **1704** to prepare the next teaching round (arrow 1.1). This preparation is preferably started by requesting the next question (arrows 1.2.1 and 1.2.1.1) from TMQuiz **1706.** The answer is received from the user and evaluated (arrow 1.2.2) by TMEngine **1704** and TMQuiz **1706.** If correct, TMQuiz **1706** updates the correct answer count (arrow 1.2.2.1.1.1); otherwise it updates the incorrect answer count (arrow 1.2.2.1.2.1); the overall success rate is also updated. TMEngine **1704** preferably saves the quiz statistics. Optionally and preferably, the correct answer is displayed to the user if an incorrect answer was selected.

The next part of the sequence may optionally be performed if the user has been tested at least once previously. Application manager **502** again sends a step (arrow 2). TeachingMachineApp **1702** sends a request to prepare a teaching round (arrow 2.1). The weakest topic of the user is located (arrow 2.1.1) and the weakest type of quiz of the user is also preferably located (arrow 2.1.1.2). For each question in the round, TeachingMachineApp **1702** preferably obtains the next question as above and evaluates the user's answer as previously described.

This architecture is preferably extensible for new topics and also new quiz structures. The new topics preferably include a general topic (such as English for example) and a type of content (American slang or travel words, for example). The topic preferably includes the data for that topic and also a quiz structure, so that the teaching machine can automatically combine the data with the quiz structure. Each quiz preferably is based upon a quiz template, with instructions as to the data that may optionally be placed in particular location(s) within the template.

## EXAMPLE 3: EVOLUTION SYSTEM FOR AN INTELLIGENT AGENT

This Example describes a preferred embodiment of an evolution system according to the present invention, including but not limited to a description of DNA for the creature or avatar according to a preferred embodiment of the present invention, and also a description of an optional gene studio according to the present invention. The evolution system optionally and preferably enables the creature or avatar to "evolve", that is, to alter at least one aspect of the behavior and/or appearance of the creature. This Example is described as being optionally and preferably operative with the intelligent agent described in Example 2, but this description is for the purposes of illustration only and is not meant to be limiting in any way.

Evolution (change) of the intelligent agent is described herein with regard to both tangible features of the agent, which are displayed by the avatar or creature, and non-tangible features of the agent, which affect the behavior of the avatar or creature.

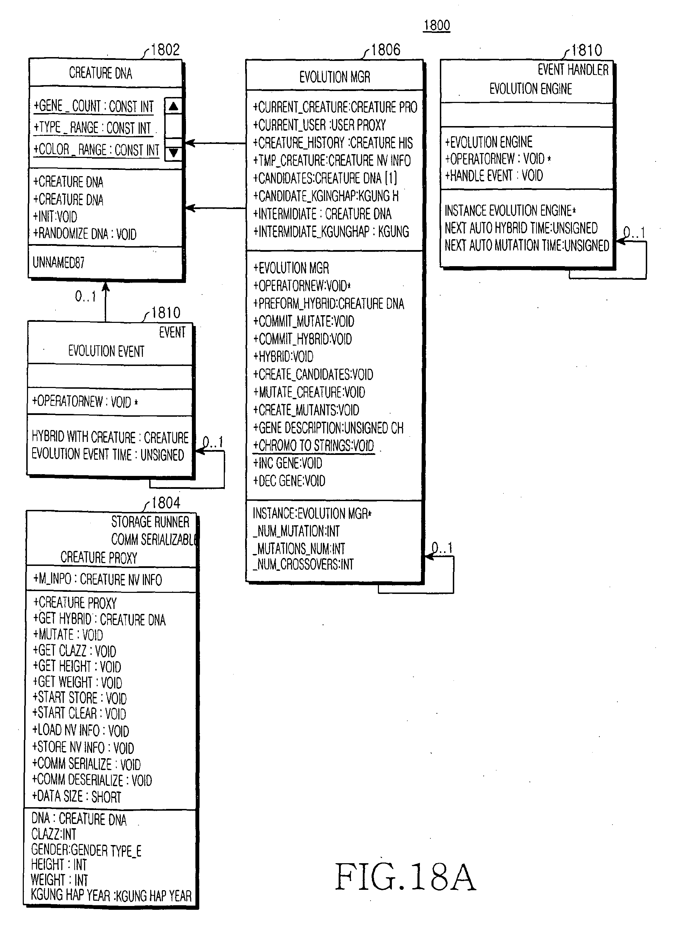

Figure 18A shows an exemplary evolution class diagram **1800**. The genetic model described in the class diagram allows various properties of the intelligent agent to be changed, preferably including visual as well as functional properties. The model includes a CreatureDNA class **1802** that represents the DNA structure. The DNA structure is a vector of available genes and can preferably be extended to incorporate new genes. A gene is a parameter with a range of possible values (i.e. genotype). The gene is interpreted by the system according to the present invention, such that the expression of the data in the gene is its genotype. For example the head gene is located as the first gene in the DNA, and its value is expressed as the visual structure of the creature's head, although preferably the color of the head is encoded in another gene.

In order to evolve the intelligent agent to achieve a specific DNA instance that pleases the user, the genetic model according to the present invention preferably implements hybrid and mutate genetic operations that modify the DNA. The CreatureProxy class **1804** is responsible for providing an interface to the DNA and to the genetic operations for the system classes. CreatureProxy **1804** also preferably holds other non-genetic information about the intelligent agent (i.e. name, birth date, and so forth).

The EvolutionMGR class **1806** preferably manages the evolutions of the intelligent agent and provides an interface to the CreatureProxy **1804** of the intelligent agent and its genetic operations to applications.

The EvolutionEngine class **1808** listens to evolution events that may be generated from time to time, for indicating that a certain genetic operation should be invoked and performed on the intelligent agent DNA. The DNA structure is given below.

CreatureDNA **1802** preferably listens to such evolution events from EvolutionEvent **1810**.

DNA structure

```
#ifndef __CREATURE_DNA__
#define __CREATURE_DNA__


#include "CreatureDefs.h"
#include "CommSerializable.h"


#define GENE_COUNT 19
#define BASE_COLOR_GENE 8


typedef struct internal_dna
{
    unsigned char head;
    unsigned char head_color;
    unsigned char head_scale;
    unsigned char body;
    unsigned char body_color;
    unsigned char body_scale;
    unsigned char hand;
    unsigned char hand_color;
    unsigned char hand_scale;
    unsigned char tail;
    unsigned char tail_color;
    unsigned char tail_scale;
    unsigned char leg;
    unsigned char leg_color;
    unsigned char leg_scale;
    unsigned char dexterity;
    unsigned char efficiancy;
    unsigned char interactive;
    unsigned char base_color;
```

```
} internal_dna;

typedef internal_dna p_internalDna;

/**
 * This class represents the Creature DNA structure.
 * The DNA hold all the data about the Creature body parts
and some
 * personality and functional qualities
 */
class CreatureDNA /*: public CommSerializable*/
{

public:
    static const int  gene_count;

    /**
     * defualt constructor, DNA is initialized to zero
     */
    CreatureDNA();

    /*
     * Copy constructor
     * @param other - the DNA to copy
     */
    CreatureDNA(const CreatureDNA &other);

    /**
     *  Initialization  function,  should  be  called  if  teh
constructor was not
     * called.
     */
    void init();
```

```
/**
 * Randomizes the DNA data
 *
 */
void randomizeDna();



/**
 * The DNA actual data
 */
union {

    internal_dna genes;
    unsigned char data[GENE_COUNT];
};


/**
 * Range of type gene
 */
static const int TYPE_RANGE;
/**
 * Range of color gene
 */
static const int COLOR_RANGE;
/**
 * Range of scale gene
 */
static const int SCALE_RANGE;
/**
 * Range of charecter genes
 */
```

```
    static const int CHARECTER_RANGE;


    static const int BASE_COLOR_RANGE;
  private:


    /**
     * Location  of  scale  gene  in  the  type,color,scale
  triplet
     */
    static const int SCALE_LOCATION;
  };



  #endif /*__CREATURE_DNA__*/
```

Intelligent agent DNA construction is preferably performed as follows. When providing a version of the living mobile phone, the DNA is preferably composed from a Gene for each Building Block of the intelligent agent. The building block can optionally be a visual part of the agent, preferably including color or scale (size of the building block), and also preferably including a non visual property that relate to the functionality and behavior of the intelligent agent. This model of DNA composition can be extended as more building blocks can be added and the expression levels of each building block can increase.

The construction of an intelligent agent from the DNA structure is preferably performed with respect to each gene and its value. Each gene (building block) value (expression level) describes a different genotype expressed in the composed agent. The basic building blocks of the visual agent are modeled as prototypes, hence the amount of prototypes dictate the range of each visual gene. It is also possible to generate in runtime values of expressed genes not relaying on prototypes, for example color gene expression levels can be computed as indexes in the host platform color table, or scale also can be computed with respect to the host screen size, to obtain genotypes that are independent of predefined prototypes. The prototype models are preferably decomposed and then a non-prototype agent is preferably recomposed according to the gene values of each building block.

The following example provides an illustrative non-limiting explanation of this process. For simplicity and clarity, color and scale, and other non visual genes, are not included, but the same process also applies to these genes.

A 16 prototype and 5 building block version of DNA may optionally be given as follows:

$$DNA_0 = \{[head,0:15] , [body,0:15] , [legs, 0:15] , [hands,0:15] , [tail, 0:15]\}$$

Each of the 5 building blocks has 16 different possible genotypes according to the building block gene values that are derived from the number of prototype models. When composing the intelligent agent, the right building block is taken according to the value of that building block in the DNA , which is the value of its respective gene.

For example a specific instance of the DNA scheme described above can be:

$$DNA = \{ [3],[5],[10],[13],[0] \}$$

The variety of possible intelligent agent compositions in this simple DNA version is:

$$V_0 = (16) * (16) * (16) * (16) * (16) = (16)^5 = 1048576$$

If a base color gene for describing the general color of the intelligent agent (i.e. green, blue, and so forth ) is added, with expression level of possible 16 base colors, the following variety is obtained:

$$DNA_1 =$$

$$\{[head,0:15] , [body,0:15] , [legs, 0:15] , [hands,0:15] , [tail, 0:15],$$

$$[bs\_color,0:15]\}$$

The variety then becomes:

$$V_1 = V_0 * 16 = (16)^6 = 16777216$$

If an intensity gene for the base color gene (i.e from light color to dark color) is added to this DNA version, with an expression level of possible 16 intensities of the base color, the following variety is preferably obtained:

$$DNA_2 =$$

$$\{[head,0:15] , [body,0:15] , [legs, 0:15] , [hands,0:15] , [tail, 0:15],$$

$$[bs\_color,0:15], [intensity,0:15]\}$$

The variety calculation is:

$$V_2 = V_1 * 16 = (16)^7 = 268435456$$

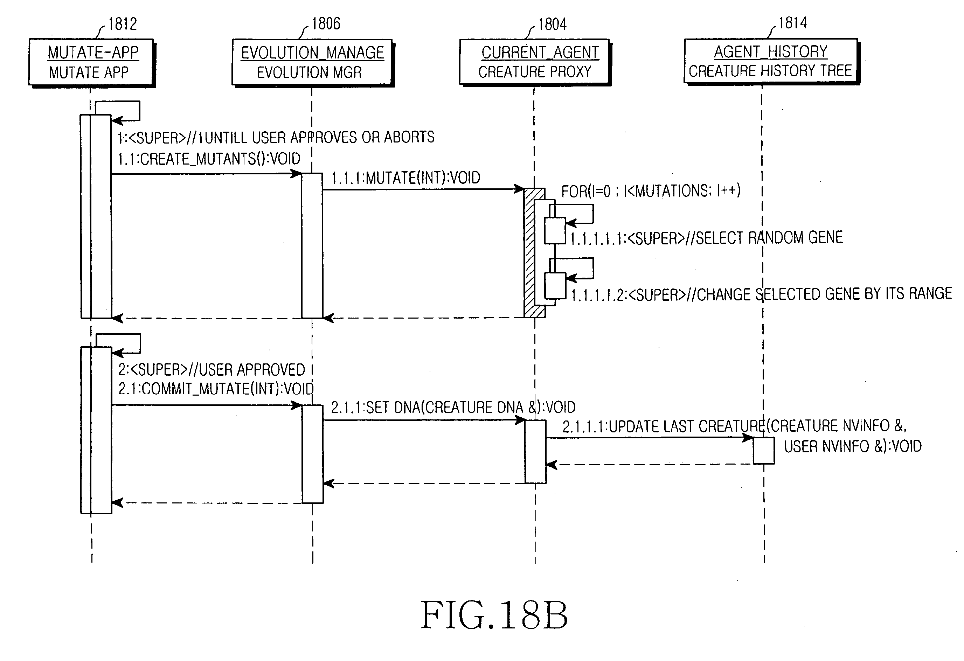

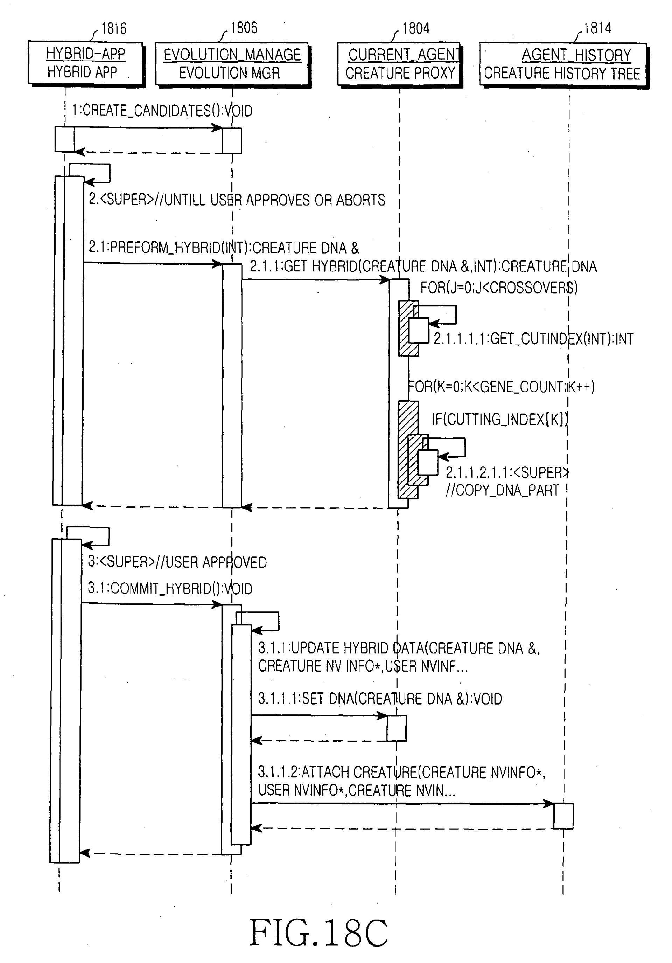

A variety of genetic operations may optionally be performed on the DNA, as described with regard to Figure 18B and 18C, which show a mutation sequence diagram and a hybridization sequence diagram, respectively.

As shown in Figure 18B, the basic mutation operation preferably randomly selects a gene from the gene set that can be mutated, which may optionally be the entire DNA, and then change the value of the selected gene within that gene's possible range (expression levels). The basic operation can optionally be performed numerous times.

A mutate application **1812** sends a request to EvolutionMGR **1806** (arrow 1.1) to create a mutant. Evolution-MGR class **1806** passes this request to CreatureProxy **1804,** optionally for a number of mutants (this value may be given in the function call; arrow 1.1.1). For each such mutant, CreatureProxy **1804** preferably selects a random gene (arrow 1.1.1.1.1) and changes it to a value that is still within the gene's range (arrow 1.1.1.1.2). The mutant(s) are then returned to mutate application **1812**, and are preferably displayed to the user, as described in greater detail below with regard to Example 4.

If the user approves of a mutant, then mutate application **1812** sends a command to replace the existing implementation of the agent with the new mutant (arrow 2.1) to EvolutionMGR **1806.** EvolutionMGR **1806** then sets the DNA for the creature at CreatureProxy **1804** (arrow 2.1.1), which preferably then updates the history of the agent at agent_history **1814** (arrow 2.1.1.1).

Figure 18C shows an exemplary sequence diagram for the basic hybrid operation (or cross-over operation), which occurs when two candidate DNAs are aligned one to the other. One or more cross over points located on the DNA vector are preferably selected (the cross-over points number can vary from 1 to the number of genes in the DNA; this number may optionally be selected randomly). The operation of selecting the crossover points is called get_cut_index. At each cross over point, the value for the DNA is selected from one of the existing DNA values. This may optionally be performed randomly or according to a count called a cutting_index. The result is a mix between the two candidate DNAs. The basic hybrid operation can optionally be performed numerous times with numerous candidates.

As shown, a HybridApp **1816** sends a command to EvolutionMGR **1806** to begin the process of hybridization. The process is optionally performed until the user approves of the hybrid agent or aborts the process. EvolutionMGR **1806** starts hybridization by sending a command to obtain target DNA (arrow 2.1.1) from CreatureProxy **1804**, with a number of cross-overs (hybridizations) to be performed. As shown, a cutting_index is maintained to indicate when to do a cross-over between the values of the two DNAs.

The hybrid agent is returned, and if the user approves, then the current agent is replaced with the hybrid agent, as described above with regard to the mutant process. In the end, the history of the agent at agent_history **1814** is preferably updated.

Hybridization may optionally and preferably be performed with agent DNA that is sent from a source external to the mobile information device, for example in a SMS message, through infrared, BlueTooth or the Internet, or any other source. For the purpose of description only and without any intention of being limiting, this process is illustrated with regard to receiving such hybrid DNA through an SMS message. The SMS message preferably contains the data for the DNA in a MIME type. More preferably, the system of the present invention has a hook for this MIME type, so that this type of SMS message is preferably automatically parsed for hybridization without requiring manual intervention by the user.

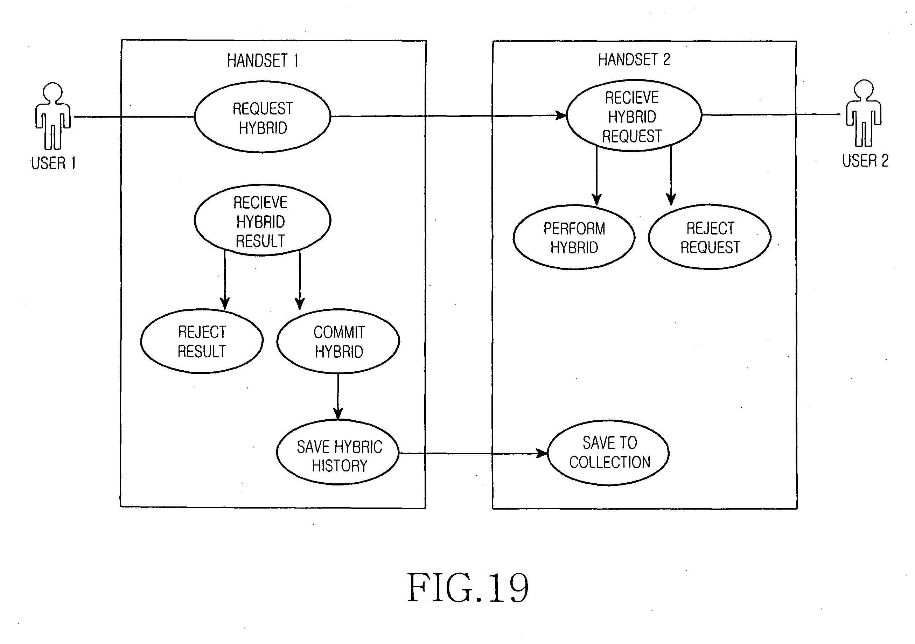

Figure 19 shows an exemplary sequence diagram of such a process. As shown, User 1 sends a request to hybridize the intelligent agent of User 1 with that of User 2 through Handset 1. User 2 can optionally approve or reject the request through Handset 2. If User 2 approves, the hybrid operation is performed between the DNA from both agents on Handset 1. The result is optionally displayed to the requesting party (User 1), who may save this hybrid as a replacement for the current agent. If the hybrid is used as the replacement, then User 2 receives a notice and saves to the hybrid to the hybrid results collection on Handset 2.

EXAMPLE 4: USER INTERACTIONS WITH THE PRESENT INVENTION

This Example is described with regard to a plurality of representative, non-limiting, illustrative screenshots, in order to provide an optional but preferred embodiment of the system of the present invention as it interacts with the user.

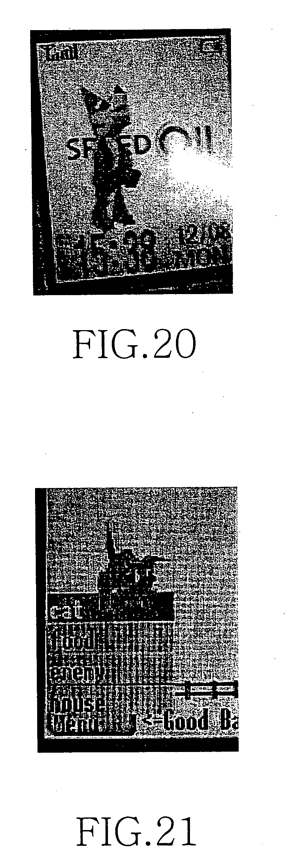

Figure 20 shows an exemplary screenshot of the "floating agent", which is the creature or avatar (visual expression of the intelligent agent). Figure 21 shows an exemplary screenshot of a menu for selecting objects for the intelligent agent's virtual world.

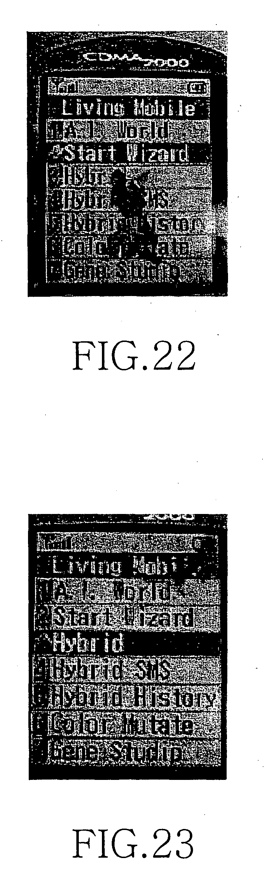

Figure 22 shows the Start Wizard application, which allows the user to configure and modify the agent settings, as well as user preferences.

One example of an action to be performed with the wizard is to Set Personality, to determine settings for the emotional system of the intelligent agent. Here, the user can configure the creature's personality and tendencies.

The user can optionally and preferably determine the creature's setting by pressing the right arrow key in order to increase the level of the characteristic and in order to do the opposite and decrease the level of the

Various characteristics such as Enthusiasm, Sociability, Anti_social behavior, Temper (level of patience), Melancholy, Egoistic behavior, and so forth.

The user is also preferably able to set User Preferences, for example to determine how quickly to receive help. Some other non-limiting examples of these preferences include: communication (extent to which the agent communicates); entertain_user (controls agent playing with the user); entertain_self (controls agent playing alone); preserve_battery (extends battery life); and transparency_level (the level of the transparency of the creature).

The user also preferably sets User Details with the start wizard, preferably including but not limited to, user name, birthday (according to an optional embodiment of the present invention, this value is important in Hybrid SMS since it will define the konghup possibility between users, which is the ability to create a hybrid with a favorable astrology pattern; the konghup option is built according to suitable tables of horsocopes and dates), and gender.

The user can also preferably set Creature Details.

Figure 23 shows an exemplary menu for performing hybridization through the hybrid application as previously described.

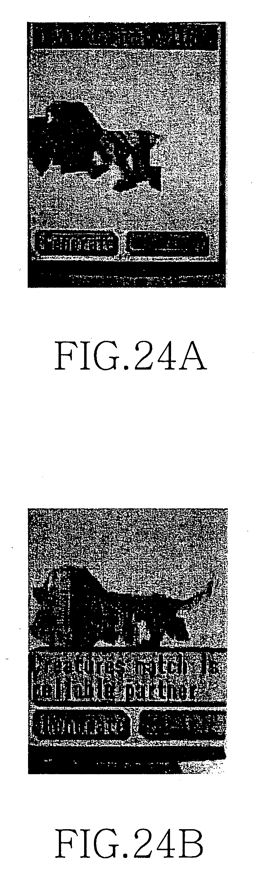

Figure 24A shows an exemplary screenshot for viewing a new creature and optionally generating again, by pressing on the Generate button, which enables the user to generate a creature randomly. Figure 24B shows the resultant creature in a screenshot with a Hybrid button: pressing on this button confirms the user's creature selection and passes to the creature preview window.

The preview window allows the user to see the newly generated creature in three dimensions, and optionally to animate the creature by using the following options:

1. Navigation UP key: Zoom In and minimizes the size of the creature.
2. Navigation DOWN key: Zoom Out and maximizes the size of the creature.
3. Navigation LEFT key: Switch between the "Ok" and "Back" buttons.
4. Navigation RIGHT key: Switch between the "Ok" and "Back" buttons.

5. Ok key (OK): Confirm selection.

6. Clear key (CLR): Exit the creature preview window to Living Mobile Menu.

7. End key: Exit the creature preview window to the main menu.

8. '0' key: Lighting and shading operation on the creature.

9. '1' key: Circling the creature to the left with the clock direction.

10. '2' key: Circling the creature in the 3D.

11. '3' key: Circling the creature to the right against the clock direction.

12. '5' Key: Circling the creature in the 3D.

13. '6' key: Animates the creature in many ways. Every new pressing on this key changes the animation type.

The animations that the creature can perform optionally include but are not limited to, walking, sitting, smelling, flying, and jumping.

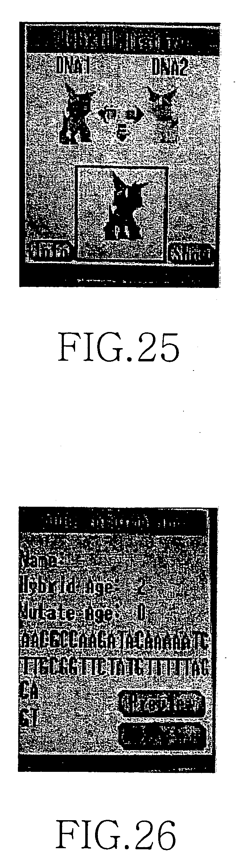

Figure 25 shows an exemplary screenshot of the hybrid history, which enables the user to review and explore the history of the creature's changes in the generations. The user can preferably see the current creature and its parents, and optionally also the parents of the parents. Preferably, for every creature there can be at most 2 parents.

Figure 26 shows an exemplary screen shot of the Gene studio, with the DNA Sequence of the current creature. The gene studio also preferably gives the opportunity for the user to change and modify the agent's DNA sequence.

EXAMPLE 5 -INTELLIGENT AGENT FOR A NETWORKED MOBILE INFORMATION DEVICE

This example relates to the use of an intelligent agent on a networked mobile information device, preferably a cellular telephone. Optionally and preferably, the intelligent agent comprises an avatar for interacting with the user, and an agent for interacting with other components on the network, such as other mobile information devices, and/or the network itself. Preferably therefore the avatar forms the user interface (or a portion thereof) and also has an appearance, which is more preferably three-dimensional. This appearance may optionally be humanoid but may alternatively be based upon any type of character or creature, whether real or imaginary. The agent then preferably handles the communication between the avatar and the mobile information device, and/or other components on the network, and/or other avatars on other mobile information devices. It should also be noted that although this implementation is described with regard to mobile information devices such as cellular telephones, the avatar aspect of the implementation (or even the agent itself) may optionally be implemented with the adaptive system (Example 2) and/or proactive user interface (Example 1) as previously described.

The intelligent agent of the present invention is targeted at creating enhanced emotional experience by applying the concept of a "Living Device". This concept preferably includes both emphases upon the uniqueness of the intelligent agent, as every living creature is unique and special in appearance and behavior, while also providing variety, such as a variety of avatar appearances to enhance the user's interaction with the living device. The avatar preferably has compelling visual properties, optionally with suitable supplementary objects and surrounding environment.

The intelligent agent preferably displays intelligent decision making, with unexpected behavior that indicates its self-existence and independent learning. Such independent behavior is an important aspect of the present invention, as it has not been previously demonstrated for any type of user interface or interaction for a user and a computational device of any type, and has certainly not been used for an intelligent agent for a mobile information device. The intelligent agent also preferably evolves with time, as all living things, displaying visual change. This is one of the most important "Living Device" properties.

The evolution step initiates an emotional response from the user of surprise and anticipation for the next evolution step.

Evolution is a visual change of the creature with respect to time. The time frame may optionally be set to a year for example, as this is the lifecycle of midrange cellular telephone in the market. During the year, periodic changes preferably occur through evolution. The evolutionary path (adaptation to the environment) is a result of natural selection. The natural selection can optionally be user driven (i.e. user decides if the next generation is better), although another option is a predefined natural selection process by developing some criteria for automatic selection.

The intelligent agent may optionally be implemented for functioning in two "worlds" or different environments: the telephone world and the virtual creature world. The telephone (mobile information device) world enables the intelligent agent to control different functions of the telephone and to suggest various function selections to the user, as previously described. Preferably the intelligent agent is able to operate on the basis of one or more telephone usage processes that are modeled for the agent to follow. Another important aspect of the telephone world is emotional expressions that can be either graphic expressions such as breaking the screen or free drawing or facial and text expressions one or two relevant words for the specific case.

The virtual world is preferably a visual display and playground area, optionally where objects other than the avatar can be inserted and the user can observe the avatar learning and interacting with them. The objects that are entered to the world can optionally be predefined, with possible different behaviors resulting from the learning process. The user can optionally and preferably give rewards or disincentives and be part of the learning process. In this respect, the intelligent agent (through the appearance of the avatar) may optionally act as a type of virtual pet or companion.

Some preferred aspects of the intelligent agent include but are not limited to, a 3D graphic infrastructure (with regard to the appearance of the avatar); the use of AI and machine learning mechanisms to support both adaptive and proactive behavior; the provision of gaming capabilities; the ability to enhance the usability of the mobile information device and also to provide specific user assistance; and provision of a host platform abstraction layer. Together, these features provide a robust, compelling and innovative content platform to support a plurality of AI applications all generically defined to be running on the mobile information device.

The avatar also preferably has a number of important visual aspects. For example, the outer clip size may optionally be up to 60 x 70 pixels, although of course a different resolution may be selected according to the characteristics of the screen display of the mobile information device. The avatar is preferably represented as a 3D polygonal object with several colors, but in any case preferably has a plurality of different 3D visual characteristics, such as shades, textures, animation support and so forth. These capabilities may optionally be provided through previously created visual building blocks that are stored on the mobile information device. The visual appearance of the avatar is preferably composed in runtime.

The avatar may optionally start "living" after a launch wizard, taking user preferences into account (user introduction to the living device). In addition to evolution, the avatar may optionally display small visual changes that represent mutations (color change / movement of some key vertices in a random step). Visual evolution step is preferably performed by addition / replacement of a building block. The avatar can preferably move in all directions and rotate, and more preferably is a fully animated 3D character.

The avatar is preferably shown as floating over the mobile information device display with the mobile information device user interface in the background, but may also optionally be dismissed upon a request by the user. The avatar is preferably able to understand the current user's normal interaction with the mobile information device and tries to minimize forced hiding/dismissal by the user.

According to optional but preferred embodiments of the present invention, the avatar can be programmed to "move" on the screen in a more natural, physically realistic manner. For example, various types of algorithms and parameters are available which attempt to describe physically realistic behavior and movement for controlling the movement of robots. Examples of such algorithms and parameters are described in "Automatic Generation of Kinematic Models for the Conversion of Human Motion Capture Data into Humanoid Robot Motion", A. Ude et al., *Proc. First IEEE-RAS Int. Conf. Humanoid Robots (Humanoids 2000),* Cambridge, MA, USA, September 2000 (hereby incorporated by reference as if fully set forth herein). This reference describes various human motion capture techniques, and methods for automatically translating the captured data into humanoid robot kinetic parameters. Briefly, both human and robotic motion are modeled, and the models are used for translating actual human movement data into data that can be used for controlling the motions of humanoid robots.

This type of reference is useful as it provides information on how to model the movement of the humanoid robot. Although the present invention is concerned with realistic movement of an avatar (virtual character being depicted three-dimensionally), similar models could optionally be used for the avatar as for the humanoid robot. Furthermore, a model could also optionally be constructed for modeling animal movements, thereby permitting more realistic movement of an animal or animal-like avatar. More generally, preferably the system can handle any given set of 3D character data generically.

These models could also optionally and preferably be used to permit the movement of the avatar to evolve, since different parameters of the model could optionally be altered during the evolutionary process, thereby changing how the avatar moves. Such models are also preferably useful for describing non-deterministic movement of the avatar, and also optionally for enabling non-deterministic movements to evolve. Such non-deterministic behavior also helps to maintain the interest of the user.

According to other preferred embodiments of the present invention, the behavior of the avatar is also optionally and preferably produced and managed according to a non-deterministic model. Such models may optionally be written in a known behavioral language, such as ABL (A Behavioral Language), as described in "A Behavior Language for Story-Based Believable Agents", M. Mateas and A. Stem, *Working Notes of Artificial Intelligence and Interactive Entertainment*, AAAI Spring Symposium Series, AAAI Press, USA, 2002 (hereby incorporated by reference as if fully set forth herein). This reference describes ABL, which can be used to create virtual characters that behave in a realistic manner. Such realistic behaviors include responding to input, for example through speech, and also movement and/ or gestures, all of which provide realistic communication with a human user of the software. It should be noted that by "movement" it is not necessarily meant modeling of movement which is realistic in appearance, but rather supporting movement which is realistic in terms of the context in which it occurs.

Such a language, which includes various inputs and outputs, and which can be used to model and support realistic, non-deterministic interactive behavior with a human user, could optionally be used for the behavior of the avatar according to the present invention. For example, the language describes "beat idioms", which are examples of expressive behavior. These beat idioms are divided into three categories: beat goals, handlers and cross-beat behaviors. Beat goals are behaviors which should be performed in the context of a particular situation, such as greeting the human user. Handlers are responsible for interactions between the human user and the virtual creature (for example the avatar of the present invention), or for interactions between virtual creatures. Cross-beat behaviors allow the virtual creature to move between sets of behaviors or beat idioms. Clearly, such constructs within the language could optionally be used for the avatar according to the present invention.

Of course it should be noted that ABL is only one non-limiting example of a believable agent language; other types of languages and/or models could optionally be used in place of ABL and/or in combination with ABL.

The avatar also preferably has several emotional expressions, which do not have to be facial but may instead be animated or text) such as happy, sad, surprised, sorry, hurt, or bored, for example. Emotional expressions can be combined.

The avatar may also seem to change the appearance of the screen, write text to the user and/or play sounds through telephone; these are preferably accomplished through operation of the intelligent agent. The agent may also optionally activate the vibration mode, for example when the avatar bumps into hard objects in the virtual world or when trying to get the user's attention. The avatar may also optionally appear to be actively manipulating the user interface screens of the telephone.

In order to implement these different functions of the avatar and/or intelligent agent, optionally and preferably the intelligent agent may be constructed as described below with regard to Figures 7-12, although it should be noted that these Figures only represent one exemplary implementation and that many different implementations are possible. Again, the implementation of the intelligent agent may optionally incorporate or rely upon the implementations described in Examples 1 and 2 above.

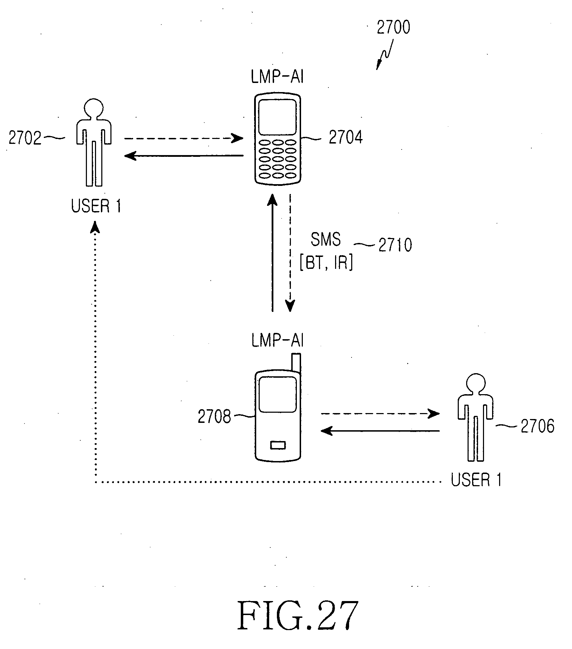

Figure 27 is a schematic block diagram of an intelligent agent system **2700** according to the present invention. As shown, a first user **2702** controls a first mobile information device **2704**, which for the purpose of this example may optionally be implemented as a cellular telephone for illustration only and without any intention of being limiting. A second user **2706** controls a second mobile information device **2708**. First mobile information device **2704** and second mobile information device **2708** preferably communicate through a network **2710,** for example through messaging.

Each of first mobile information device **2704** and second mobile information device **2708** preferably features an intelligent agent, for interacting with their respective users **2702** and **2706** and also for interacting with the other intelligent agent. Therefore, as shown, system **2700** enables a community of such intelligent agents to interact with each other, and/or to obtain information for their respective users through network **2710,** for example.

The interactions of users **2702** and **2706** with their respective mobile information devices **2704, 2708** preferably include the regular operation of the mobile information device, but also add the new exciting functionalities of "living mobile phone". These functionalities preferably include the intelligent agent but also the use of an avatar for providing a user interface and also more preferably for providing an enhanced user emotional experience.

The intelligent agent preferably features an "aware" and intelligent software framework. The inner operationg of such a system preferably involve several algorithmic tools, including but not limited to AI and ML algorithms.

System **2700** may optionally involve interactions between multiple users as shown. Such interactions increase the usability and enjoyment of using the mobile information device for the end-user.

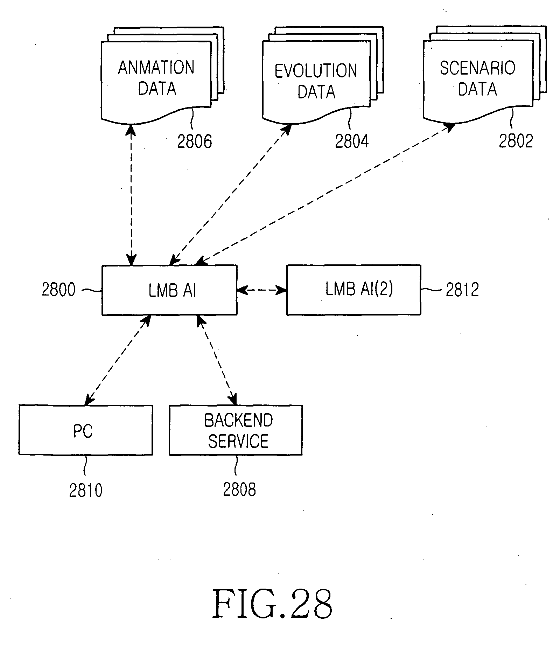

Figure 28 shows the intelligent agent system of Figure 27 in more detail. As shown, a first intelligent agent **2800** is optionally and preferably able to operate according to scenario data **2802** (such as the previously described knowledge base) in order to be able to take actions, learn and make decisions as to the operation of the mobile information device. The learning and development process of first intelligent agent **2800** is preferably supported by an evolution module **2804** for evolving as previously described. If first intelligent agent **2800** communicates with the user through an avatar, according to a preferred embodiment of the present invention, then an animation module **2806** preferably supports the appearance of the avatar.

First intelligent agent **2800** may also optionally communicate through the network (not shown) with a backend server **2808** and/or another network resource such as a computer **2810**, for example for obtaining information for the user.

First intelligent agent **2800** may also optionally communicate with a second intelligent agent **2812** as shown.

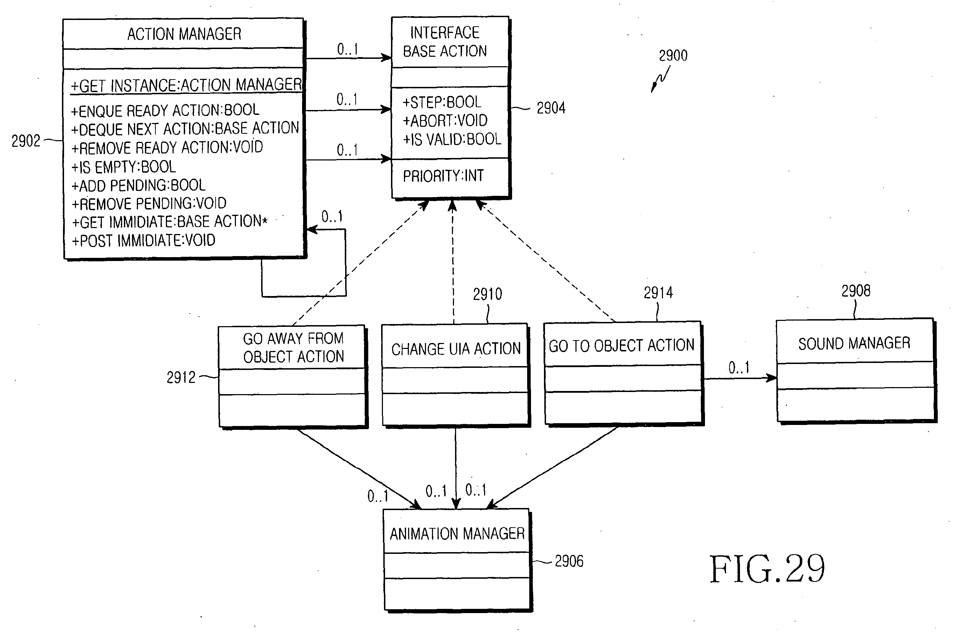

Figure 29 shows a schematic block diagram of an exemplary implementation of an action selection system **2900** according to the present invention, which provides the infrastructure for enabling the intelligent agent to select an action.

Action selection system **2900** preferably features an ActionManager **2902** (see also Figure 10 for a description), which actually executes the action. A BaseAction interface **2904** preferably provides the interface for all actions executed by ActionManager **2902.**

Actions may optionally use device and application capabilities denoted as AnimationManager **2906** and SoundManager **2908** that are necessary to perform the specific action. Each action optionally and preferably aggregates the appropriate managers for the correct right execution.

AnimationManager **2906** may also optionally and preferably control a ChangeUIAction **2910**, which changes the appearance of the visual display of the user interface. In addition or alternatively, if an avatar is used to represent the intelligent agent to the user, AnimationManager **2906** may also optionally and preferably control GoAwayFromObjectAction **2912** and GoTowardObjectAction **2914**, which enables the avatar to interact with virtual objects in the virtual world of the avatar.

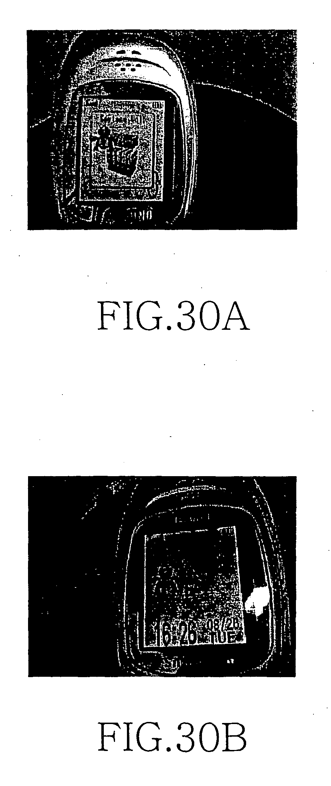

Figures 30A and 30B show two exemplary, illustrative non-limiting screenshots of the avatar according to the present invention on the screen of the mobile information device. Figure 30A shows an exemplary screenshot of the user interface for adjusting the ring tone volume through an interaction with the avatar. Figure 30B shows an exemplary screenshot of the user interface for receiving a message through an interaction with the avatar.

While the invention has been described with respect to a limited number of embodiments, it will be appreciated that many variations, modifications and other applications of the invention may be made.

**Claims**

1. A proactive user interface for a computational device, the computational device having an operating system, comprising:

    (a) a user interface for communicating between the user and said operating system; and

    (b) a learning module for detecting at least one pattern of interaction of the user with said user interface and for proactively altering at least one function of said user interface according to said detected pattern.

2. The proactive user interface of claim 1, wherein said at least one pattern is selected from the group consisting of a pattern determined according to at least one previous interaction of the user with said user interface, and a predetermined pattern, or a combination thereof.

3. The proactive user interface of claims 1 or 2, wherein said user interface features a graphical display and said altering at least one function of said user interface comprises altering at least a portion of said graphical display.

4. The proactive user interface of claim 3, wherein said altering at least a portion of said graphical display comprises:

    selecting a menu for display according to said detected pattern; and

    displaying said menu.

5. The proactive user interface of claim 4, wherein said selecting said menu comprises:

    constructing a menu from a plurality of menu options.

6. The proactive user interface of claims 1 or 2, wherein said user interface features an audio display and said altering at least one function of said user interface comprises altering at least one audible sound produced by the computational device.

7. The proactive user interface of any of claims 1 to 6, wherein the computational device is selected from the group consisting of a personal computer, an ATM, a mobile information device, or a consumer appliance having an operating system.

8. The proactive user interface of any of claims 1 to 7, wherein said learning module maximizes a percentage of proactive alterations leading to a direct user selection from said alteration.

9. The proactive user interface of claim 8, wherein said maximization is performed through learning reinforcement.

10. The proactive user interface of claim 9, wherein said learning reinforcement is performed through an iterative learning process.

11. The proactive user interface of claim 10, wherein each iteration of said learning process is performed after said alteration has been performed.

**12.** The proactive user interface of any of claims 1 to 11, wherein said proactively altering at least one function of said user interface comprises activating an additional software application through the operating system.

**13.** The proactive user interface of any of claims 1 to 12, further comprising a knowledge base for holding information gathered by said learning module as a result of interactions with the user and/or the operating system.

**14.** The proactive user interface of claim 13, wherein said learning module further comprises a plurality of sensors for perceiving a state of the operating system.

**15.** The proactive user interface of claim 14, wherein said learning module further comprises a perception unit for processing output from said sensors to determine a state of the operating system and a state of said user interface.

**16.** The proactive user interface of claim 15, wherein said learning module further comprises a reasoning system for updating said knowledge base and for learning an association between an alteration of said user interface and a state of the operating system.

**17.** The proactive user interface of claim 13, further comprising a plurality of integrated knowledge bases determined from the behavior of the user and from preprogrammed information.

**18.** The proactive user interface of any of claims 1 to 17, wherein said learning module further comprises at least one of an artificial intelligence algorithm and a machine learning algorithm.

**19.** The proactive user interface of any of claims 1-18, further comprising a user model for modeling behavior of the user.

**20.** The proactive user interface of claim 19, wherein learning module uses said user model to detect an implicit preference of the user according to a reaction of the user to said user interface.

**21.** A method for a proactive interaction between a user and a computational device through a user interface, the computational device having an operating system, the method comprising:

detecting a pattern of user behavior according to at least one interaction of the user with the user interface; and

proactively altering at least one function of the user interface according to said pattern.

**22.** The method of claim 21, wherein said at least one pattern is selected from the group consisting of a pattern determined according to at least one previous interaction of the user with said user interface, and a predetermined pattern, or a combination thereof.

**23.** The method of claims 21 or 22, wherein said user interface features a graphical display and said altering at least one function of said user interface comprises altering at least a portion of said graphical display.

**24.** The method of claim 23, wherein said altering at least a portion of said graphical display comprises:

selecting a menu for display according to said detected pattern; and

displaying said menu.

**25.** The method of claim 24, wherein said selecting said menu comprises:

constructing a menu from a plurality of menu options.

**26.** The method of claims 21 or 22, wherein said user interface features an audio display and said altering at least one function of said user interface comprises altering at least one audible sound produced by the computational device.

**27.** The method of any of claims 21 to 26, wherein the computational device is selected from the group consisting of a personal computer, an ATM, a mobile information device, or a consumer appliance having an operating system.

**28.** The method of any of claims 21 to 27, wherein said learning module maximizes a percentage of proactive alterations leading to a direct user selection from said alteration.

**29.** The method of claim 28, wherein said maximization is performed through learning reinforcement.

**30.** The method of claim 29, wherein said learning reinforcement is performed through an iterative learning process.

**31.** The method of claim 30, wherein each iteration of said learning process is performed after said alteration has been performed.

**32.** The method of any of claims 21 to 31, wherein said proactively altering at least one function of said user interface comprises activating an additional software application through the operating system.

**33.** The method of any of claims 21 to 32, further comprising a knowledge base for holding information gathered by said learning module as a result of interactions with the user and/or the operating system.

**34.** The method of claim 33, wherein said learning module further comprises a plurality of sensors for perceiving a state of the operating system.

**35.** The method of claim 34, wherein said learning module further comprises a perception unit for processing output from said sensors to determine a state of the operating system and a state of said user interface.

**36.** The method of claim 35, wherein said learning module further comprises a reasoning system for updating said knowledge base and for learning an association between an alteration of said user interface and a state of the operating system.

**37.** The method of claim 36, further comprising a plurality of integrated knowledge bases determined from the behavior of the user and from preprogrammed information.

**38.** The method of any of claims 21 to 37, wherein said learning module further comprises at least one of an artificial intelligence algorithm and a machine learning algorithm.

**39.** The method of any of claims 21 to 38, further comprising a user model for modeling behavior of the user.

**40.** The method of claim 39, wherein learning module uses said user model to detect an implicit preference of the user according to a reaction of the user to said user interface.

**41.** A proactive computational device for interacting with a user, the computational device having an operating system, the device comprising:

(a) a user interface for communicating between the user and the operating system; and

(b) a learning module for detecting at least one pattern of interaction of the user with said user interface and for proactively altering at least one function of said user interface according to said detected pattern.

**42.** A behavioral system for a mobile information device having an operating system, comprising:

an adaptive system for the mobile information device, wherein said adaptive system alters at least one function of the mobile information device according to an analysis of user behavior rather than a direct user command to alter said at least one function.

**43.** The system of claim 42, wherein the operating system comprises an embedded system.

**44.** The system of claims 42 or 43, wherein the mobile information device comprises a cellular telephone.

**45.** The system of any of claims 42 to 44, wherein said analysis of user behavior comprises an analysis of a plurality of user interactions with the mobile information device.

**46.** The system of claim 45, wherein said analysis further comprises comparison of said plurality of user interactions to at least one predetermined pattern, wherein said at least one predetermined pattern is associated with altering said at least one function.

**47.** The system of claims 45 or 46, wherein said analysis further comprises comparison of said plurality of user interactions to at least one pattern of previously detected user behavior, wherein said at least one pattern of previously detected user behavior is associated with altering said at least one function.

**48.** The system of any of claims 42 to 47, wherein said at least one function comprises an audio capability by the mobile information device.

**49.** The system of claim 48, wherein said audio capability comprises producing an audible sound by the mobile information device.

**50.** The system of claim 49, wherein said audible sound comprises at least one of a ring tone, an alarm tone and an incoming message tone.

**51.** The system of claim 48, wherein said audio capability comprises receiving and interpreting an audible sound by the mobile information device.

**52.** The system of any of claims 42 to 47, wherein said at least one function is related to a visual display by the mobile information device.

**53.** The system of claim 52, wherein said at least one function comprises displaying a menu.

**54.** The system of any of claims 42 to 53, wherein said adaptive system is operated by the mobile information device.

**55.** The system of any of claims 42 to 53, wherein the mobile information device is capable of communication through a network.

**56.** The system of claim 55, wherein said adaptive system is operated at least partially according to commands sent from said network to the mobile information device.

**57.** The system of claim 56, wherein data associated with at least one operation of said adaptive system is stored at a location other than the mobile information device, said location being accessible through said network.

**58.** The system of any of claims 42 to 57, further comprising a learning module, wherein said analysis is performed by said learning module and wherein said learning module adapts to said user behavior according to at least one of an AI algorithm, an ML algorithm or a genetic algorithm.

**59.** A proactive mobile information device, comprising an adaptive system for the mobile information device, wherein said adaptive system alters at least one function of the mobile information device according to an analysis of user behavior rather than a direct user command to alter said at least one function.

**60.** A method for adapting at least one function of a mobile information device for a user, comprising:

analyzing a plurality of user interactions with the mobile information device to form an analysis; and

proactively altering at least one function of the mobile information device according to said analysis rather than a direct user command to alter said at least one function.

**61.** An intelligent agent for use with a mobile information device over a mobile information device network, comprising:

an avatar for providing a user interface with the intelligent agent; and

an agent for controlling an interaction of the mobile information device through the mobile information device network.

**62.** The agent of claim 61, wherein said avatar and said agent are operated by the mobile information device.

**63.** The intelligent agent of claims 61 or 62, wherein the mobile information device is in communication with at least one other mobile information device, said at least one mobile information device being associated with a second agent, such that said agent is capable of communicating with said second agent.

**64.** The intelligent agent of claim 63, wherein the mobile information device is in communication with at least one other mobile information device through the mobile information device network.

**65.** The intelligent agent of claim 63, wherein the mobile information device is in direct communication with at least one other mobile information device, without the mobile information device network.

**66.** The intelligent agent of any of claims 63 to 65, wherein said at least one other mobile information device is associated with a second avatar, and wherein a user of the mobile information device and a user of said at least one other mobile information device communicate through said avatar and said second avatar.

**67.** The intelligent agent of claim 65, wherein said communication is related to a game.

**68.** The intelligent agent of claim 67, wherein said game comprises a role-playing game.

**69.** The intelligent agent of any of claims 61 to 68, wherein at least one of said avatar or said agent are operated at least partially according to commands sent from the mobile information device network to the mobile information device.

**70.** The intelligent agent of claim 69, wherein data associated with at least one operation of said at least one of said avatar or said agent is stored at a location other than the mobile information device, said location being accessible through the mobile information device network.

**71.** The intelligent agent of any of claims 61 to 70, wherein at least one characteristic of an appearance of said avatar is alterable.

**72.** The intelligent agent of claim 71, wherein at least one characteristic of an appearance of said avatar is alterable according to a user command.

**73.** The intelligent agent of claim 71, wherein a plurality of characteristics of an appearance of said avatar is alterable according to a predefined avatar skin.

**74.** The intelligent agent of claim 73, wherein said predefined avatar skin is predefined by the user.

**75.** The intelligent agent of any of claims 71 to 74, wherein said at least one characteristic of an appearance of said avatar is alterable according to an automated evolutionary algorithm.

**76.** The intelligent agent of claim 75, wherein said automated evolutionary algorithm comprises a genetic algorithm.

**77.** The intelligent agent of any of claims 61 to 76, wherein the mobile information device network comprises a locator for determining a physical location of the mobile information device, and wherein the user is able to request information about said physical location through an action of said agent.

**78.** The intelligent agent of claim 77, wherein said locator is capable of determining a second physical location relative to said physical location of the mobile information device, and wherein the user is able to request information about said second physical location through an action of said agent.

**79.** The intelligent agent of claim 78, wherein the user requests said second physical location according to a category.

**80.** The intelligent agent of claim 79, wherein said category is selected from the group consisting of a commercial location, a medical location, and a public safety location.

**81.** The intelligent agent of claim 79, wherein said category comprises a commercial location, and wherein said commercial location sends a message to the mobile information device according to said action of said agent.

82. The intelligent agent of claim 81, wherein said message comprises at least one of an advertisement or a coupon, or a combination thereof.

83. The intelligent agent of claims 81 or 82, wherein said agent filters said message according to at least one criterion.

84. The intelligent agent of any of claims 81 to 83, wherein said avatar presents at least information about said message to the user.

85. The intelligent agent of any of claims 78 to 84, wherein the user requests information about said second physical location through said avatar.

86. The intelligent agent of any of claims 61 to 85, wherein the mobile information device network is in communication with a virtual commercial location, and wherein the user communicates with said virtual commercial location through said avatar.

87. The intelligent agent of claim 86, wherein the user performs a purchase with said virtual commercial location through said avatar.

88. The intelligent agent of claims 86 or 87, wherein the user searches said virtual commercial location through said agent.

89. The intelligent agent of any of claims 86 to 88, wherein said avatar is capable of receiving an accessory purchased from said virtual commercial location.

90. The intelligent agent of any of claims 81 to 89, wherein the mobile information device is capable of receiving software, and wherein said agent performs at least a portion of installation of said software on the mobile information device.

91. The intelligent agent of claim 90, wherein the user interacts with said avatarfor performing at least a portion of configuration of said software.

92. The intelligent agent of any of claims 61 to 91, wherein said agent further comprises a teaching module for teaching the user.

93. The intelligent agent of claim 92, wherein said teaching module is operative for teaching the user about at least one aspect of the mobile information device.

94. The intelligent agent of claim 92, wherein said teaching module is operative for teaching the user about at least one subject external to the mobile information device.

95. The intelligent agent of any of claims 61 to 94, wherein said avatar is capable of entertaining the user.

96. A living mobile telephone for a user, comprising:

    an agent for controlling an interaction of the mobile telephone with the user; and

    an avatar for providing a user interface with said agent.

97. The telephone of claim 96, wherein the telephone is connected to a mobile telephone network, and wherein said agent controls an interaction of the mobile telephone with said mobile telephone network.

98. The telephone of claims 96 or 97, wherein said agent comprises:

    (i) an artificial intelligence (AI) system; and

    (ii) a knowledge base;

wherein said AI system obtains information from said knowledge base for determining at least one action.

99. The telephone of claim 98, wherein said knowledge base comprises information about at least one user preference.

100. The telephone of claims 98 or 99, wherein said knowledge base comprises information about at least one user action pattern.

101. The telephone of any of claims 98 to 100, wherein said knowledge base comprises information about the user to an action by said agent.

102. The telephone of claim 101, wherein said knowledge base includes a disincentive for said agent to repeat an action after rejection by the user.

103. The telephone of any of claims 98 to 102, wherein said AI system determines a reward for said agent for performing an action, such that said action is selected according to said reward.

104. The telephone of claim 103, wherein said reward is determined according to information in said knowledge base.

105. The telephone of claims 103 or 104, wherein said AI system simulates a plurality of actions and selects an action for said agent according to said reward.

106. The telephone of any of claims 98 to 105, wherein said AI system determines at least a portion of a user interface.

107. The telephone of claim 106, wherein said user interface includes at least one menu.

108. The telephone of claim 107, wherein said AI system at least partially constructs said at least one menu according to information in said knowledge base.

<u>100</u>

FIG.1

200

```
┌─────────────────────────┐
│     LEARNING MODULE     │~100
└─────────────────────────┘
              │
┌─────────────────────────┐
│    OPERATING SYSTEM     │~202
└─────────────────────────┘
         ╱         ╲
┌──────────────────┐  ┌──────────────────────┐
│  USER INTERFACE  │  │ SOFTWARE APPLICATION │
└──────────────────┘  └──────────────────────┘
         204                    206
```

# FIG.2

FIG.3

EP 1 522 918 A2

LIVING MOBILE PHONE

USER (404)

430 — LOGIC

400 — ADAPTIVE SYSTEM

MOBILE PHONE — 402

DATA
438 — 3D GRAPHICS MODEL

418 — ADDRESS BOOK

UI SYSTEM — 406

440 — ANIMATIONS

420 — CALL INFORMATION

CALL — 408

102 — KNOWLEDGE BASE

422 — LOCATION

SMS — 410

432 — INFORMATION
–DNA
434 — –EVOLUTION
–INTERACTION

424 — SMS INFORMATION

SOUND — 412

426 — CACHBED WEB DATA

VIBRATION — 414

436 — LANGUAGE

428 — OWNERS DATA

STORAGE — 416

DATA

MECHANISMS

FIG.4

FIG.5A

EP 1 522 918 A2

| 506 | 502 | 550 |
| DISPACHER | APPLICATION_MANAGER | CURRENT_APP |
| EVENTDISPACHE | APPLICATION MANAGER | BASE APP |

1: HANDLE EVENT (EVENT*):VOID

IF (TIMER_EVENT)

1.1.1:STEP():VOID

ELSE-IF(INIT_APPLICATION)

1.2.1:INIT():VOID

ELSE-IF(PAUSE_APPLICATION)

1.3.1:PAUSE():VOID

ELSE-IF(RESUME_APPLICATION)

1.4.1:RESUME():VOID

FIG.5B

52

**FIG.6A**

600

**EVENT** — 602
+M_TYPE:EVENT TYPE_E
+M_ID:EVENT ID MASK_

604 — **EVENT DISPACHER**
+GET INSTANCE:EVENT DISPACHER*
+REGISTER HANDLER : RET_CODE
+UNREGISTERHANDLER:RET_CODE
+OPERATORNEW:VOID*
+DISPATCH:VOID
0..1

506 — **INTERFACE ENENT HANDLER**
+HANDLE ENENT:VOID

620 — **KEY EVENT**
+SYS E2PLATE:HS_KEY_TYPE
+PLATE2SYSE:KEYINFO S
+OPERATORNEW:VOID*
INSTANCE:KEY EVENT*
0..1

606 — **FLIPPER EVENT**
+OPERATORNEW:VOID*
EVENT TIME:TIME_T
INSTANCE:FLIPPER EVENT*
CURRENTFLIPPERSTATE:FLIPPER EVENT
0..1

608 — **INTER APP EVENT**
+OPERATORNEW:VOID*
INSTANCE:INTER APP EVENT
0..1

622 — **KEY CODE ENENT**
+REGISTER CODE : INT
CODES:CONST CHAR*
CODES CONST:INT

624 — **BATTERY EVENT**
NEWBATTERY LEVEL:BYTE
CURRENT BATTERY STATE:IN

626 — **DAY TIME EVENT**
+OPERATORNEW:VOID*
EVENT TIME:DWORD
INSTANCE:DAY TIME EVENT*
CURRENT DAY TIME:DAY TIME EVENT
0..1

610 — **EVOLUTION EVENT**
+OPERATORNEW:VOID*
HYBRID WITH CREATURE:CREATURE
EVOLUTION EVENT TIME:UNSIGNED
0..1

612 — **CALL EVENT**
CALL DATA:CALLDATA_T*
CURRENTCALLSTATE:CALL EVENT ID

618 — **SMS EVENT**
+OPERATORNEW:VOID*
SMS PARMS:SMSM
HYBRIDSMS PARAMS
EXTENDED PARAMS:S
0..1

614 — **CALL STARTED EVENT** CALL EVENT
+CALL STARTED EVENT
+OPERATORNEW:VOID*
_ENUM CALL STARTED EVENT H 41
POOL:OBJECTPOOL<CALL STARTED EVENT

616 — **CALL ENDED EVENT** CALL EVENT
+CALL ENDTED EVENT
+OPERATORNEW:VOID*
_ENUM CALL STARTED EVENT H 40
POOL:OBJECTPOOL<CALL STARTED EVENT

EP 1 522 918 A2

53

EP 1 522 918 A2

| 628 | 630 | 602 | 604 | 506 |
|-----|-----|-----|-----|-----|
| OS_MODULE | HOOK | EVENT | DISPACHER | HANDLER |
| | | EVENT | EVENT DISPACHE | EVENT HANDLER |

1: CREATE DISPATCH EVENT

1.1:CONSTRUCT EVENT

1.2:DISPATCH (EVENT*):VOID

FOR (ALL HANDLERS FOR THIS EVENT)

1.2.1.1:HANDLE EVENT (EVENT*):VOID

# FIG.6B

FIG.7A

704 APP BASE APP

604 DISPACHER EVENT DISPACHE

702 KEY_EVENT KEY EVENT

630 HOOK

700 UI_DO_EVENT()

1: SEND GLOVAL EVENT

IF (EVENT VALUE IN KEY RNAGE)

1.1.1:CREATE KEY EVENT

1.1.1.1:GETINSTANCE():KEYEVENT*

1.1.1.2:DISPATCH (EVENT*):VOID

1.1.1.2.1:HANDLE EVENT (EVENT*):VOID

FIG.7B

```
                    INTERFACE                              SCREEN
                   BASE WINDOW
                                            712 ─    +GET INSTANCE:SCREEN*
              +M_SIZE:SIZE        ▲                  +INITWINDOWS: VOID
              +M LOCATION:                           +DRAW: VOID
                LOCATION         ▼                   + CLEAR UPDATE RECTANGLE: VOID
      714 ─    +CLEAR:VOID        ▲      0..1         +GET WINDOW:BASEWINDOW*
              +INIT: VOID                             +GET PLATFORM WINDOW:BASE WINDOW
              +SETPIXELS: VOID    ▼                   +GET PRE BUFFER WINDOW:BASE WINDOW
                                                      +OPERATORNEW:VOID*
              BUFFER:WORD*        ▲
              UPDATED:BOOL        ▼                                              0..1

      716                                              720

   BACKSCREENWINDOW         BUFFERED WINDOW        DIRECT ACCESS WINDOW


                           +INIT: VOID      ▲      +INIT:VOID        ▲
                           +CLEAR:VOID      ▼      +CLEAR:VOID
   BACK SCREEN UPDATE RECT                         +SET PIXELS:VOID
                           SIZE:SIZE        ▲      +DRAW:VOID        ▼
                                            ▼
                                        718

   TRANS BUFFERED WINDOW                     PRE BUFFERED WINDOW


   722 ─   +INIT:VOID        ▲      724 ─
           +DRAW:VOID        ▼              +DRAW:VOID

           TRANSPARENT:BOOL  ▲
                             ▼
```

FIG.7C

800

**802**

**AICREATURE**

+RUNTIME_DEBUG:BOOL
+M_MOVEMGR:AGENTMOVEMENT
+C_LOC:LOCATION
+H_LOC:LOCATION
+C_AZIMUTH:INT
+C_PITCH:INT

+GETINSTANCE:AICREATURE*
+INIT:VOID
+OPERATORNEW:VOID*
+GET CREATURE WORLD:WORLD*
+SET CREATURE WORLD:VOID
+GET LOCATION:LOCATION
+SET LOCATION:VOID
+UPDATE:BOOL
+SELECT_AND_ACT:VOID
+FREEDBACK CURRENT OP:VOID
+DISTANCE:INT
+SET VISIBLE:VOID
+SET TRANSPARENT:VOID
+IS TRANSPARENT:BOOL
+IS VISIBLE:BOOL
+GET PERSONALITY:FLOAT*
+GET CREAURE GOAL:GOAL*
+SET GOAL PRIORITY:VOID
+SET PERSONALITY PARAM:VOID
+GET Z DIST:FLOAT

OP TAG
GRADE OP TAG

**804**

**EVENT HANDLER / WORLD**

+ADDWORLD OBJECT:VOID
+REMOVE WORLD OBJECT:VOID
+REMOVE ALL WORLD OBJECTS:VOID
+OPERATORNEW:VOID*
+GET WORLD STATE:UNSIGNED
  SHOW
+HANDLE EVENT: VOID
+CONSIDER STATE:INT

INSTANCE:WORLD*
WORLD OBJECTS:WORLD OBJECT**
WORLD OBJECTS GRADING:BOOL
CREATURE:AICREATURE*
MAX OBJECTS COUNT:INT
WORLD OBJECTS VISIBLE:BOOL
WORLD WIDTH:INT
WORLD HEIGHT:INT

**806**

**WORLDOBJECT**

+NAME_STR:CONST UNSIGNED

+WORLD OBJECT
+INIT:VOID
+UPDATE:BOOL
+GRADE_CREATURE:INT
+GRADE_OP:INT
+IS_GRADING:BOOL
+IS LEGAL OP: BOOL
+PREFORM_OP:BOOL
+OPERATIONS_COUNT:INT
+IS VISIBLE:BOOL
+GET CLIP FOR OPERATION:ANIM CL
+GET SOUND FOR OPERATION:WHIC

LOCATION:LOCATION
SIZE:SIZE
_GRADING:BOOL
OP FEEDBACK TABLE:AICREATURE
VISIBLE:BOOL

0..1

**808**

**WORLD OBJECT
MENU BALL OBJECT**

+MENU BALL OBJECT
+OPERATORNEW:VOID*
+INIT:VOID
+UPDATE:BOOL
+GRADE_CREATURE:INT
+GRADE_OP:INT
+PERFORM_OP:BOOL
+OPERATIONS_COUNT:INT
+INIT WINDOW:VOID

INSTANCE:MENU BALL OBJECT
LOCATION:LOCATION
SIZE:SIZE
VISIBLE:BOOL

**810**

**WORLD OBJECT
GOOD ANIMAL OBJECT**

+OPERATORNEW:VOID*
+GOODANIMALOBJECT
+INIT:VOID
+UPDATE:BOOL
+GRADE_CREATURE:INT
+GRADE_OP:INT
+OPERATIONS_COUNT:INT
+PERFORM_OP:BOOL
+IS LEGAL OP:BOOL
+GET CLIP FOR OPERATION:ANIM CLIP

INSTANCE:GOOD ANIMAL OBJECT*
VISIBLE:BOOL
LOCATION:LOCATION

**812**

**FOOD OBJECT**

+OPERATORNEW:VOID*
+FOOD OBJECT
+INIT:VOID
+UPDATE:BOOL
+OPERATIONS_COUNT:INT
+GRADE_CREATURE:INT
+GRADE_OP:INT
+PERFORM_OP:BOOL
+GET CLIP FOR OPERATION:ANIM CLIP
+GET SOUND FOR OPERATION:WHIC
+IS LEGAL OP:BOOL

INSTANCE:FOOD OBJECT*

**814**

**BAD ANIMAL OBJECT**

+OPERATORNEW:VOID*
+BAD ANIMAL OBJECT
+UPDATE:BOOL
+GRADE_CREATURE:INT

INSTANCE:BAD ANIMAL
OBJECT*

**816**

**HOUSE OBJECT**

+OPERATORNEW:VOID*
+HOUSE OBJECT
+UPDATE:BOOL
+OPERATIONS_COUNT:INT
+GRADE_OP:INT
+PREFORM_OP:BOOL
+IS LEGAL OP:BOOL

INSTANCE:HOUSE OBJECT
VISIBLE:BOOL

0..1

# FIG.8A

FIG.8B

ACTION SELECTION-RULE BASE STRATEGY

FIG.9A

ACTION SELECTION-GRAPH SEARCH STRATEGY

WORLD ~1

GET ACTIVE WORLD OBJECTS
GET WORLD STATE

AICREATURE ~2

GET LEGAL
ACTIONS → FOR ALL WORLD OBJECTS ~3

LEGAL ACTIONS

WORLD OBJECT

FOR ALL ACTION PATHS

SIMULATE ACTION PERFORMED ~4

EVAL ACTION
REWARD → FOR ALL WORLD OBJECTS ~6

SIMULATION WORLD ~5

GRADE/EVAL CREATURE REWARD ~7

GET ACTIVE WORLD OBJECTS
GET WORLD STATE
ACCUMULATE ACTION
REWARD TO PATH

SELECT HIGHEST REWARD PATH ~11

GENERATE ACTION ~12

AICREATURE SIMULATED ~9

FOR ALL WORLD OBJECTS ~10

LEGAL ACTIONS

WORLD OBJECT

SET ACTION PRIORITY
[ACTION GRAGE/REWARD IN PATH] ~13

ENQUEUE ACTION IN ACTION MANAGER ~14

ENQUEUE → ACTION MANAGER ~15

GET HIGHEST
PRIORITY ACTION

AGENT/AVATAR
APPLICATION
EXECUTE ACTION ~16

8

FIG.9B

61

FIG.10

1100

802
### AICREATURE

+RUNTIME_DEBUG:BOOL
+M_MOVEMGR:AGENTMOVEMENT
+C_LOC:LOCATION
+H_LOC:LOCATION
+C_AZIMUTH:INT
+C_PITCH:INT

+GETINSTANCE:AICREATURE*
+INIT:VOID
+OPERATORNEW:VOID*
+GET CREATURE WORLD:WORLD*
+SET CREATURE WORLD:VOID
+GET LOCATION:LOCATION
+SET LOCATION:VOID
+UPDATE:BOOL
+SELECT_AND_ACT:VOID
+FREEDBACK CURRENT OP:VOID
+DISTANCE:INT
+SET VISIBLE:VOID
+SET TRANSPARENT:VOID
+IS TRANSPARENT:BOOL
+IS VISIBLE:BOOL
+GET PERSONALITY:FLOAT*
+GET CREATURE GOAL:GOAL*
+SET GOAL PRIORITY:VOID
+SET PERSONALITY PARAM:VOID
+GET Z DIST:FLOAT

OP TAG
GRADE OP TAG

1102
### GOAL

+GOAL
+GOAL
+ADD ACTION TO PLAN:VOID
+UPDATE PLAN FAILURE:VOID
+UPDATE PLAN SUCCESS:VOID

PRIORITY:INT
LOS:INT
LOF:INT

1104
### EMOTIONAL STATE

+GET INSTANCE:EMOTIONAL STATE
+GET CURRENT MOOD:MOOD TYPE
+ADD EMOTION:BOOL
+GET POSITIVE INTENSITY:INT
+GET NEGATIVE INTENSITY:INT
+UPDATE STATE:VOID

0..1

0..1

0..1

0..1

1112
### BEHAVIORAL PATTERN MAPPER

+GET INSTANCE:BEHAVIORAL PATTERN M

+GET DOMINANT BP:BEHAVIOR PATTERN
+MAP EMOTIONS:VOID

### STRUCT
### BEHAVIOR PATTERN

0..1

### STRUCT
### E LIST

### STRUCT
### E LINK

0..1

0..1

0..1

1106
### EMOTION

+M_MAJOR:EMOTION MAJOR TYPE_
+M_MINOR:EMOTION MINOR TYPE_

+GETINSTANCE:EMOTION*
+DECAY:VOID
+DESTROY:VOID
+OPERATORNEW:VOID*

_ENUM EMOTION H 86

INTENSITY:INT
DIRECTION:WORLD OBJECT*
CAUSE:WORLD OBJECT*

1108
### ANGER EMOTION

+DECAY:VOID

_ENUM ANGER EMOTION H 29

INTENSITY:INT

1110
### JOY EMOTION

+DECAY:VOID

_ENUM ANGER EMOTION H 29

INTENSITY:INT

# FIG.11A

FIG.11B

EP 1 522 918 A2

| 502 | 1006 | 1108 | 1110 | 1004 |
|---|---|---|---|---|
| APP_MANAGER<br>APPLICATION<br>MANAGE | AGENT_APP<br>FLOATING<br>AGENT AP | BP_MAPPER<br>BEHAVIORAL<br>PATTERN MAPP | BP_DISPLAY<br>BP DISPLAY<br>ACTION | ACTION_MGR<br>ACTION<br>MANAGE |

1:STEP():VOID

1.1:GET DOMINANT BP():BEHAVIOR PATTERN

IF(DOMINANT BEHAVIOR CHANGED)

1.2.1:SET BP(BEHAVIOR PATTERN):VOID

1.2.2:ENQUE READY ACTION(BASE ACTION*,UNSIGNED LONG):BOOL

2:STEP():VOID

2.1:REMOVE READY ACTION(BASE ACTION*):VOID

2.2:STEP():BOOL

FIG.11C

FIG.12

```
                    1300
                     ↘

         1312─┐
```

**CALL EVENT** — EVENT

CALL DATA:CALL DATA_T*
CURRENT CALL STSTE:CALL EVENT ID_

**STRUCT**
**CALL DATA**

---

**BASE ACTION**
**EVENT HANDLER**
**MESSAGE BOX RUNNER**
**SUGGEST CALL**

+ SUGGEST CALL
+OPERATORNEW:VOID*
+INIT:VOID*
+HANDLE EVENT:VOID*
+REUSE CURRENT OBJECT:VOID
+USE FREE OBJECT:SUGGEST CALL*
+DISPLAYED TEXT:CHAR*
+NUMBER OF TEXTS:INT
+STEP:BOOL
+ABORT:VOID
+IS VALID:BOOL
+IS PREEMPTIVE:BOOL
+NUMBER OF BUTTONS"UNSIGNED
+BUTTON TEXT :CHAR*
+BUTTON PRESSED:VOID
+RESUMED APPLICATION:APP TYPE
+DISPLAYED DNA:CREATURE DNA*
+EXIT:VOID

TTLM WAIT DURATION:LONG INT
PRIORITY:INT
TYPE:ACTION MENVLD_T

*(1304─)*

---

**1302**

**STATE HANDLER BASE**
**CALL STATE HANDLER**

+OPPERATORNEW:VOID*
+INIT:VOID
+HANDLE EVENT:VOID
+COPY CALL DATA:VOID

INSTANCE:
      CALL STATE HANDLER
START TIME:INT
END TIME:INT

*0.1*

---

**1308**

**CALL ENDED EVENT**

+CALL ENDED EVENT
+OPERATORNEW:VOID*

_ENUM CALL ENDED
EVENT H 40

POOL:OBJECT POOL
<CALL ENDED EVENT>

---

**1310**

**CALL FAILED EVENT**

+CALL FAILED EVENT
+OPERATORNEW:VOID*

_ENUM CALL FAILED
EVENT H 37

POOL:OBJECT POOL
<CALL FAILED EVENT>

---

**1306**

**CALL STARTED EVENT**

+CALL STARTED EVENT
+OPERATORNEW:VOID*

_ENUM CALL STARTED
EVENT H 41

POOL:OBJECT POOL
<CALL STARTED EVENT>

---

**SUGGEST FOLLOWING CALL**

+SUGGEST FOLLOWING CALL
+OPERATORNEW:VOID*
+REUSE CURRENT OBJECT:VOID
+USE FREE OBJECT:SUGGEST CALL*
+DISPLAYED TEXT:CHAR*
+NUMBER OF TEXT:INT

_ENUM SUGGEST FOLLOWING CALL

TTL WAIT DURATION:LONG INT
POOL:OBJECT POOL
<SUGGEST FOLLOWING>

*1314─*

---

**SUGGEST ALTERNATIVE CALL**

+SUGGEST ALTERNATIVE CALL
+OPERATORNEW:VOID*
+REUSE CURRENT OBJECT:VOID
+USE FREE OBJECT:SUGGEST CALL*
+NUMBER OF TEXTS:INT
+DISPLAYED TEXT:CHAR*

_ENUM SUGGEST ALTERNATIVE CALL

TTL WAIT DURATION:LONG INT
POOL:OBJECT POOL
<SUGGEST ALTERNATIVE>

*1316─*

# FIG.13A

FIG.13B

EP 1 522 918 A2

1400

1402
STATE HANDLER BASE
SMS STATE HANDLER

+GET INSTANCE:SMS STATE HANDLE
+INIT:VOID
+HANDLE EVENT:VOID
+HANLE SENT:VOID
+HANDLE END EDIT:VOID

0..1

1404
BASE ACTION
EVENT HANDLE
SUGGEST SMS SEND TO

+SUGGEST SMS SEND TO
+INIT:VOID
+STEP:BOOL
+ABORT:VOID
+IS VALID:BOOL
+IS PREEMPTIVE:BOOL
+HANDLE EVENT:VOID

PRIORITY:INT
TYPE:ACTION MEM NVLD-T

FIG.14A

EP 1 522 918 A2

| 604 | 1402 | 1406 | 1404 | 1008 |

EVENT_DISPACHE / EVENT DISPACHER

SMS_STATE_HANDLER / SMS STATE HANDLER

SMS_DATA / SMA DATA ACCESS

SEND_TO_ACTION / SUGGEST SMS SEND TO

ACTION_MGR / ACTION MANAGE

1:HANDLER EVENT(SMS_END_EDIT):VOID

1.1:HANDLE END EDIT(MSGBUF):VOID

1.1.1"<SUPER>//1.1.1 PARSE KNOWLEGED BASE
1.1.1.1:GET NUM CONTACTS():INT

1.1.1.2:TOKENIZE SMS(CHAR*,CHAR[30][6]):INT

1.1.1.3:GET CONTACT PROB BY WORD(INT,CHAR*):FLOAT

IF(FOUND SUGGESTION)

1.1.2.1:GENERATE ACTION(INT*,INT,INT):VOID
1.1.2.1.1:INIT(INT*,INT,INT):VOID

1.1.2.1.2:SET GOAL(GOAL*):VOID

1.1.2.1.3:ENQUE READY ACTION(SEND_TO_ACTION):BOOL

2:HANDLER EVENT(SMS_END):VOID

2.1:HANDLE SENT(CHAR*,CHAR**,INT):VOID

2.1.1:<SUPER>//UPDATA KNOWLEDGE BASE
2.1.1.1:INSERT SMS DATA(INT*,CHAR*,INT):VOID

# FIG.14B

70

1500

**1506**

```
                              EVENT
MENU EVENT
+INDEX:SHORT
+OPERATORNEW:VOID*
INSTANCE:MENU EVENT
```
0..1

```
STATE HANDLER BASE
GENERAL STATE HANDLER

+GENERAL STATE HANDLER
+INIT:VOID
+HANDLE EVENT:VOID
```

**1508**

```
                    BASE ACTION
                  EVENT HANDLER
                MESSAGE BOX RUNNER
                 SUGGEST SHORTCUT

+ SUGGEST SHORTCUT
+OPERATORNEW:VOID*
+INIT:VOID*
+HANDLE EVENT:VOID*
+STEP:BOOL
+ABORT:VOID
+IS VALID:BOOL
+IS PREEMPTIVE:BOOL
+NUMBER OF BUTTONS:
 UNSIGNED
+BUTTON TEXT:CHAR*
+BUTTON PRESSED:VOID
+DISPLAYED TEXT:CHAR*
+DISPLAYED TEXT:CHAR*
+NUMBER OF TEXTS:INT
 APP TYPE
+DISPLAYED DNA:
CREATURE DNA*
+EXIT:VOID
_ENUM SUGGEST SHORTCUT H 39
POOL:OBJECT POOL
<SUGGEST SHORT)
PRIORITY:INT
TYPE:ACTION MEM NVLD_T
```

**1502**

```
                    EVENT HANDLER
                   STORAGE RUNNER
                 PHONE WORLD MAPPER
+M_APHONE WORLD NODES:PHONE WORLD

+GET INSTANCE:PHONE WORLD
MAPPER
INIT WORD MAP:VOID
+GO TO SUB NODE BYLNDEX:RET_CODE
+GO TO RIGHT NODE:RET_CODE
+GO TO LEFT NODE:REF_CODE
+GO TO FATHER NODE:RET_CODE
+GO TO MAIN NODE:VOID
+ADD NODE:VOID
+OPERATORNEW:VOID*
+HANDLE EVENT:VOID
+PRINT WORLD:VOID
+GET PHONE WORLD NODE:PHONE WORLD
+GET CURRENT NODE:PHONE WORLD NODE
+NUMBER OF WORLD NODES:UNSIGNED
+SELECT RANDOM NODE:PHONE WORLD
+GET TOTAL ACTIVATION NUMBER:UNSIGNED
+START STORE:VOID
+START CLEAR:VOID
+GET FORBID AREA:BOOL
+GET MAIN MENU NODE:PHONE WORLD
+GET ROOT NODE:PHONE WORLD NODE
+GOT TO NODE WITH PLATFORM INDEX:RE
+GET RANDOM TEXT:UNSIGNED CHAR
```
0..1

**1504**

```
PHONE WORLD NODE
+M_pFATHER WORLD NODE:PHONE
+M_NODE INDEX:WORD

+INIT:VOID
+SET DIN LEVEL:VOID
+DISTANCE:INT
+LEVEL DISTANCE:SHORT
+DISTANCEIN COMMON LEVEL:
  SHORT
+INC NUMBER OF VISITS:VOID
+IS LEAF:BOOL
+IS MENU:BOOL
+OPERATORNEW:VOID*

NODE ID:PHONE WORLD ID_T
WORLD OBJECTS COUNT:INT
LEVEL:UNSIGNED CHAR
NUMBER OF VISITS:UNSIGNED INT
FATHERS PLAFORM DATA:VOID*
INDEX IN LEVEL:INT
NODE NAME:CHAR*
```
0..1    0..1    0..1    0..1

**1510**

```
MY MENU DATA

+GET INSTANCE:MY MENU DATA
+FIND NEW SHORTCUT:BOOL
+SHOULD SHORTCUT:BOOL
+CREATE SHORTCUT:BOOL
+REMOVE SHORTCUT:BOOL
+ALREADY SHORT:BOOL
+GET NEXTL ICON:INT
```
0..1

**1512**

```
           PHONE WORLD NODE
         PHONE WORLD MENU NODE
+M_PLATFORM DATA:VOID*
+INIT:VOID
+ADD SUB NODE:VOID
+GET SUB NODE:PHONE
  WORLD NODE
+IS LEAF:BOOL
+IS MENU:BOOL

SUB NODE COUNT:INT
CURR SUB INDEX:INT
PLATFORM DATA:VOID*
```

**1514**

```
           PHONE WORLD NODE
         PHONE WORLD LEAF NODE

+IS LEAF:BOOL
+IS MENU:BOOL
```

# FIG.15

FIG.16

STATE HANDLER BASE
CREATURE STATE HANDLER

+INIT:VOID
+GET INSTANCE:CREATURE
  STATE HANDLER
+HANDLE EVENT:VOID

0..1

1604

1612

STATE HANDLER BASE
USER BORED STATE HANDLER

+OPERATORNEW:VOID*
+INIT:VOID
+HANDLE EVENT:VOID

_ENUM USER BORED STATE HANDLER

INSTANCE:USER BORED STATE HANDLER

1602

0..1

BASE ACTION
MESSAGE BOX RUNNER
SUGGEST TM TRIVIA

+SUGGEST TM TRIVIA
+OPERATORNEW:VOID*
+INIT:VOID
+STEP:BOOL
+ABORT:VOID
+IS VALID:BOOL
+IS PREEMPTIVE:BOOL
+HARAKIRI:VOID
+NUMBER OF BUTTONS:UNSIGNED
+BUTTON TEXT:CHAR*
+BUTTON PRESSED:VOID
+DISPLAYED TEXT:CHAR*
+RESUMED APPLICATION:APP TYPE
+DISPLAYED DNA:CRESTURE DNA

_ENUM SUGGEST TM TRIVIA H 39

INSTANCE:SUGGEST TM TRIVIA
PRIORITY:INT
TYPE:ACTION MEM NVLD_T

1608

BASE ACTION
EVENT HANDLER
AL GAME ACTION

+AL GAME ACTION
+INIT:VOID
+HANDLE EVENT:VOID
+OPERATORNEW:VOID*
+STEP:BOOL
+ABORT:VOID
+IS VALID:BOOL
+IS PREEMPTIVE:BOOL
+IS ABORTABLE:BOOL

INSTANCE:AL GAME ACTION
PRIORITY:INT
TYPE:ACTION MEM NVLD_T

0..1

1606

BASE ACTION
EVENT HANDLER
COMM ACTION

+STEP:BOOL
+ABORT:VOID
+IS VALID:BOOL
+IS PREEMPTIVE:BOOL
+HARAKIRI:VOID
+IS ABORTABLE:BOOL
+HANDLE EVENT:VOID
+INIT:VOID
+COMM ACTION

_ENUM COMM ACTION H 40

INSTANCE:COMM ACTION*
PRIORITY:INT
TYPE:ACTION MEM NVLD_T

1610

BASE ACTION
EVENT HANDLER
HIDE AND SEEK ACTION

+OPERATORNEW:VOID*
+GET INSTANCE:HIDE AND
  SEEK ACTION
+STEP:BOOL
+ABORT:VOID
+IS VALID:BOOL
+HANDLE EVENT:VOID
+GET PRIORITY:INT
+IS PREEMPTIVE:BOOL
+IS ABORTABLE:BOOL
+IS TYPE:ACTION MEM NVID_T
+GET STATE:HIDE AND SEEK
  STATE_E

0..1

1700

**1702**

| BASE APP |
| --- |
| TEACHING MACHINE APP |
| |
| +CONSTRUCT : VOID |
| +INIT : VOID |
| +STEP : VOID |
| +EXIT : VOID |
| +HANDLE EVENT : VOID |
| |
| APP STATE : APP STATE_E |

0..1

**1704**

| TM ENGINE |
| --- |
| |
| +INIT : VOID |
| +OPERATORNEW : VOID* |
| +PREPARE NEXT ROUND : SHORT |
| +GET NEXT QUESTION : VOID |
| +EVAL ANSWER : BOOL |
| +GET STATISTICS : TM_STATS_ENTRY_ |
| |
| INSTANCE : TM ENGINE * |
| NEXT QUESTION TOPIC : CONST CHAR |
| CURRENT QUIZ SCORE : SHORT |

0..1

0..1

**1706**

| TM QUIZ |
| --- |
| |
| +TM QUIZ |
| +PREPARE : VOID |
| +GET NEXT QUESTION : VOID |
| +EVAL ANSWER : BOOL |
| +INIT : VOID |
| |
| SCORE : SHORT |
| TYPE : UNSIGNED CHAR |
| CURRENT TOPIC : CONST CHAR* |
| +NUMBER OF QUESTIONS:SHORT |

0..1

**1708**

| TM DATA ACCESS |
| --- |
| |
| +OPERATORNEW : VOID* |
| +GET TM WORLDNET ENTRY : TM_WOR |
| +GET TM WORLDNET TOPIC : TM_WORD |
| +GET TM TRIVIA ENTRY : TM_TRIVIA_E |
| +GET TM TRIVIA TOPIC : TM_TRIVIA_T |
| +GET TM RELATION ENTRY : TM_RELATI |
| +GET TM RELATION TOPIC : TM_RELAT |
| +GET TOPIC NAME : CONST CHAR* |
| +GET NUMBER OF TOPICS : SHORT |
| |
| INSTANCE : TM DATA ACCESS* |

0..1

**1710**

| TM WORDNET QUIZ |
| --- |
| |
| +TM WORDNET QUIZ |
| +INIT : VOID |
| +GET NEXT QUESTION : VOID* |
| +EVAL ANSWER : BOOL |
| +OPERATORNEW : VOID* |
| +PREPARE : VOID |

**1712**

| TM TRIVIA QUIZ |
| --- |
| |
| +TM TRIVIA QUIZ |
| +INIT : VOID |
| +GET NEXT QUESTION: VOID* |
| +EVAL ANSWER : BOOL |
| +PERPARE : VOID |
| +OPERATORNEW : VOID* |

**1714**

| TM RELATION QUIZ |
| --- |
| |
| +TM RELATION QUIZ |
| +INIT : VOID |
| +GET NEXT QUESTION: VOID* |
| +EVAL ANSWER : BOOL |
| +PERPARE : VOID |
| +OPERATORNEW : VOID* |

# FIG.17A

73

FIG.17B

1800

╭1802
**CREATURE DNA**

+GENE _ COUNT : CONST INT  ▲
+TYPE _ RANGE : CONST INT
+COLOR _ RANGE : CONST INT  ▼

+CREATURE DNA
+CREATURE DNA
+INIT:VOID
+RANDOMIZE DNA : VOID

UNNAMED87

0..1

╭1810
**EVENT**
EVOLUTION EVENT

+OPERATORNEW : VOID *

HYBRID WITH CREATURE : CREATURE
EVOLUTION EVENT TIME : UNSIGNED  0..1

╭1804
STORAGE RUNNER
COMM SERIALIZABLE
**CREATURE PROXY**

+M_INPO : CREATURE NV INFO

+CREATURE PROXY
+GET HYBRID : CREATURE DNA
+MUTATE : VOID
+GET CLAZZ : VOID
+GET HEIGHT : VOID
+GET WEIGHT : VOID
+START STORE : VOID
+START CLEAR : VOID
+LOAD NV INFO : VOID
+STORE NV INFO : VOID
+COMM SERIALIZE : VOID
+COMM DESERIALIZE : VOID
+DATA SIZE : SHORT

DNA : CREATURE DNA
CLAZZ:INT
GENDER:GENDER TYPE_E
HEIGHT : INT
WEIGHT : INT
KGUNG HAP YEAR :KGUNG HAP YEAR

╭1806
**EVOLUTION MGR**

+CURRENT_CREATURE:CREATURE PRO
+CURRENT_USER :USER PROXY
+CREATURE_HISTORY :CREATURE HIS
+TMP_CREATURE:CREATURE NV INFO
+CANDIDATES:CREATURE DNA [1]
+CANDIDATE_KGINGHAP:KGUNG H
+INTERMIDIATE : CREATURE DNA
+INTERMIDIATE_KGUNGHAP : KGUNG

+EVOLUTION MGR
+OPERATORNEW:VOID*
+PREFORM_HYBRID:CREATURE DNA
+COMMIT_MUTATE:VOID
+COMMIT_HYBRID:VOID
+HYBRID:VOID
+CREATE_CANDIDATES:VOID
+MUTATE_CREATURE:VOID
+CREATE_MUTANTS:VOID
+GENE DESCRIPTION:UNSIGNED CH
+CHROMO TO STRINGS:VOID
+INC GENE:VOID
+DEC GENE:VOID

INSTANCE:EVOLUTION MGR*
_NUM_MUTATION:INT
_MUTATIONS_NUM:INT
_NUM_CROSSOVERS:INT  0..1

╭1810
EVENT HANDLER
**EVOLUTION ENGINE**

+EVOLUTION ENGINE
+OPERATORNEW : VOID *
+HANDLE EVENT : VOID

INSTANCE EVOLUTION ENGINE*
NEXT AUTO HYBRID TIME:UNSIGNED
NEXT AUTO MUTATION TIME:UNSIGNED  0..1

FIG.18A

EP 1 522 918 A2

| 1812 | 1806 | 1804 | 1814 |
|---|---|---|---|
| MUTATE-APP<br>MUTATE APP | EVOLUTION_MANAGE<br>EVOLUTION MGR | CURRENT_AGENT<br>CREATURE PROXY | AGENT_HISTORY<br>CREATURE HISTORY TREE |

1:<SUPER>//1UNTILL USER APPROVES OR ABORTS

1.1:CREATE_MUTANTS():VOID

1.1.1:MUTATE(INT):VOID

FOR(I=0 ; I<MUTATIONS; I++)

1.1.1.1.1:<SUPER>//SELECT RANDOM GENE

1.1.1.1.2:<SUPER>//CHANGE SELECTED GENE BY ITS RANGE

2:<SUPER>//USER APPROVED

2.1:COMMIT_MUTATE(INT):VOID

2.1.1:SET DNA(CREATURE DNA &):VOID

2.1.1.1:UPDATE LAST CREATURE(CREATURE NVINFO &,<br>USER NVINFO &):VOID

FIG.18B

FIG.18C

FIG.19

EP 1 522 918 A2

FIG.20

FIG.21

FIG.22

FIG.23

FIG.24A

FIG.24B

FIG.25

FIG.26

FIG.27

ANMATION
DATA

EVOLUTION
DATA

SCENARIO
DATA

2806

2804

2802

2800

LMB AI

LMB AI(2)

2812

PC

BACKEND
SERVICE

2810

2808

FIG.28

FIG.29

FIG.30A

FIG.30B